# EUROPEAN PATENT SPECIFICATION

(11) **EP 4 049 869 B1**
(45) Date of publication and mention of the grant of the patent: **06.08.2025**
(21) Application number: 21830584.5
(22) Date of filing: 15.06.2021
(51) Int. Cl.: B60H 1/00, B60H 1/32, B60K 1/00, B60K 11/02, H01M 10/613, H01M 10/625, H01M 10/66, H01M 10/6568

(54) **VEHICLE THERMAL MANAGEMENT SYSTEM, AND VEHICLE**
FAHRZEUGWÄRMESTEUERUNGSSYSTEM UND FAHRZEUG
SYSTÈME DE GESTION THERMIQUE DE VÉHICULE ET VÉHICULE

(30) Priority: 31.12.2020 CN 202011623833
(43) Date of publication of application: 31.08.2022
(73) Proprietor: Mind Electronics Appliance Co., Ltd., Baoding City, Hebei 072550 (CN)
(72) Inventor: BENOUALI, Jugurtha, Baoding, Hebei 072550 (CN)
(74) Representative: LBP Lemcke, Brommer & Partner Patentanwälte mbB
(86) International application number: PCT/CN2021/100149
(87) International publication number: WO 2022/142164

(56) References cited:
- EP-A1- 2 532 544
- WO-A1-2008/034828
- WO-A1-2014/040854
- WO-A1-2015/023354
- WO-A1-2021/204914
- CN-A- 110 154 683
- CN-A- 110 154 683
- CN-U- 206 770 176
- DE-A1- 102018 117 099
- FR-A1- 3 074 272
- FR-A1- 3 097 472

## Description

### TECHNICAL FIELD

The present invention relates to the field of thermal management technology for vehicles, and in particular, to a thermal management system for a vehicle and a vehicle.

### BACKGROUND

During refrigeration of an existing vehicle heat pump air-conditioning system, a high-temperature and high-pressure gaseous refrigerant discharged from a compressor releases heat to outside air at an outdoor heat exchanger. After the heat release, the refrigerant is throttled and depressurized by a throttling valve, and then absorbs heat in an evaporator from a passenger compartment, so as to achieve the effect of cooling the passenger compartment. Since the refrigerant needs to release heat to the outside air through the outdoor heat exchanger before entering the evaporator, the amount of heat exchange between the refrigerant and the outside air in the outdoor heat exchanger will be affected by the environmental temperature, for example, when the external environmental temperature is high, the refrigerant releases limited heat to the outside air in the outdoor heat exchanger, which will affect the refrigeration effect and refrigeration efficiency of the vehicle heat pump air-conditioning system.

In addition, in the existing vehicle heat pump air-conditioning system, the outdoor heat exchanger serves as a condenser in a refrigeration mode and serves as an evaporator in a heating mode, that is, whether it is in a refrigeration mode or a heating mode, the refrigerant will flow through the outdoor heat exchanger, and the refrigerant flows through the same path when it absorbs heat (condensation) or releases heat (evaporation) in the outdoor heat exchanger. Because condensation and evaporation are two inverse physical processes, the same flow path will limit the heat exchange performance of the refrigerant when it is condensed in the outdoor heat exchanger, and affect the refrigeration effect and refrigeration efficiency of the vehicle heat pump air-conditioning system.

WO2014040854A1 discloses a thermal conditioning device, comprising a coolant circuit and a heat transfer fluid circuit. The heat transfer fluid circuit comprises a control means for controlling the circulation of the heat transfer fluid and able to: a. make the heat transfer fluid circulate between a first heat exchanger and a second radiator; and/or b. make the heat transfer fluid circulate between the first heat exchanger and a first radiator so as to heat up the exterior air flow before it passes through the external heat exchanger.

CN110154683A discloses an electric automobile thermal management system and a control method thereof and an automobile. An air conditioning system is composed of a refrigerant circulation system and a cooling liquid circulation loop. The heat management system can be used for simultaneously cooling a passenger compartment and a battery during a summer working condition, simultaneously heating the passenger compartment and the battery in a winter heating and heating supply condition, and simultaneously heating and defrosting the passenger compartment in a heating and dehumidifying working condition and a defrosting working condition; the comprehensive heat management capability of an electric automobile can be improved, the refrigerating efficiency of the air conditioning system is improved, the defrosting time is shortened, and the comfort of the air conditioning system is improved.

WO2021204914A1 discloses a thermal conditioning system for a motor vehicle, comprising: - a coolant circuit comprising: - a main loop comprising: a compression device, a dual-fluid heat exchanger, a first expansion device, a first heat exchanger exchanging heat with an interior air flow inside a passenger compartment of the vehicle, a second expansion device, a second heat exchanger exchanging heat with an external air flow outside the passenger compartment; - a first bypass branch connecting a connection point located upstream of the second heat exchanger to a connection point located downstream of the second heat exchanger; - a second bypass branch connecting the main loop to the first bypass branch; - a heat transfer fluid circuit, the dual-fluid heat exchanger being provided to allow for heat exchange between the coolant and the heat transfer fluid, the coolant circuit having a first internal heat exchanger. The coolant circuit also includes a third bypass branch that allows the coolant flowing in the main loop upstream of the first heat exchanger to flow to the second heat exchanger without penetrating the first heat exchanger.

FR3097472A1 discloses a method for controlling a thermal conditioning circuit of a motor vehicle, the circuit comprising:- a first refrigerant fluid loop, comprising:- a first heat exchanger configured to heat an air flow inside a passenger compartment of the vehicle,- a second heat exchanger configured to receive heat from an air flow outside to the passenger compartment,-a second heat transfer fluid loop comprising an additional heating device, and configured to exchange heat with at least one member of an electric propulsion chain of the vehicle, - a two-fluid heat exchanger configured to allow heat exchange between the first loop of refrigerant fluid and the second loop of heat transfer fluid, the method comprising the steps: - controlling the additional heating device in order to supply the fluid heat transfer fluid a predetermined thermal energy, - controlling a flow rate of heat transfer fluid circulating in the second loop of heat transfer fluid so as to minimize heat exchange between the heat transfer fluid and the component of the electric propulsion chain.

DE102018117099A1 discloses a thermal system, in particular a thermal management system, of a motor vehicle. The system has a refrigerant circuit with a compressor, a first refrigerant/coolant heat exchanger operated as a condenser/gas cooler, a first refrigerant-air heat exchanger operated as a first evaporator with an upstream first expansion element and a second refrigerant-coolant heat exchanger operated as a second evaporator with an upstream second expansion element. The system is also equipped with a first coolant circuit with the first refrigerant-coolant heat exchanger and a second coolant circuit with the second refrigerant-coolant heat exchanger educated. The first coolant circuit has a first coolant-air heat exchanger for transferring heat from the coolant to ambient air and a second coolant-air heat exchanger for heating supply air for a passenger compartment, while the second coolant circuit a third coolant-to-air heat exchanger for transferring heat from the coolant to ambient air and a fourth coolant-to-air heat exchanger for transferring heat between the coolant and the supply air.

FR3074272A1 discloses a thermal management circuit of a hybrid or electric vehicle, said thermal management circuit comprising a first reversible air conditioning loop in which a refrigerant fluid circulates and comprising a heat exchanger fluid arranged jointly on a second circulation loop of a heat transfer fluid, the second circulation loop of a heat transfer fluid comprising: - a first circulation branch comprising in the direction of circulation of the heat transfer fluid, a first pump, a first radiator arranged in an internal air flow, and a battery heat exchanger; - a second circulation branch connected in parallel with the second radiator and comprising a second pump and an electric heating device for the heat transfer fluid; - a third circulation branch connected in parallel with the first pump and of the battery heat exchanger, said third circulation branch comprising the two-fluid heat exchanger.

### SUMMARY

The objective of the present invention is to provide a thermal management system for a vehicle and a vehicle using the thermal management system for a vehicle, to overcome the problems existing in related technologies.

In order to achieve the above objective, the present invention provides a thermal management system for a vehicle, including all features from claim 1, especially a compressor, a first heat exchanger, an outdoor heat exchanger, a first expansion valve, an indoor heat exchanger, a first water pump, and an outdoor radiator,

an outlet of the compressor is connected to a refrigerant inlet of the first heat exchanger, a refrigerant outlet of the first heat exchanger is connected to an inlet of the outdoor heat exchanger, an outlet of the outdoor heat exchanger is connected to an inlet of the indoor heat exchanger through the first expansion valve, an outlet of the indoor heat exchanger is connected to an inlet of the compressor, a cooling liquid outlet of the first heat exchanger is connected to an inlet of the outdoor radiator, an outlet of the outdoor radiator is connected to a cooling liquid inlet of the first heat exchanger, and the first water pump is disposed on a flow path between the cooling liquid outlet of the first heat exchanger and the inlet of the outdoor radiator, or the first water pump is disposed on a flow path between the outlet of the outdoor radiator and the cooling liquid inlet of the first heat exchanger.

Also, the thermal management system for a vehicle further includes a first flow path that is selectively conducted or cut off and a second flow path that is selectively conducted or cut off, and the refrigerant outlet of the first heat exchanger is connected to the inlet of the outdoor heat exchanger via the first flow path and connected to the inlet of the first expansion valve via the second flow path.

Also, the thermal management system for a vehicle further includes an indoor air heater, a first throttling flow path, a first through flow path, a third flow path that is selectively conducted or cut off, a fourth flow path that is selectively conducted or cut off, and a first one-way valve;

the cooling liquid outlet of the first heat exchanger is connected to the inlet of the outdoor radiator and an inlet of the indoor air heater through the first water pump, the cooling liquid outlet of the first heat exchanger is selectively connected to the inlet of the outdoor radiator and the inlet of the indoor air heater, and an outlet of the indoor air heater is connected to the cooling liquid inlet of the first heat exchanger;

the outlet of the indoor heat exchanger is connected to an inlet of the first one-way valve and connected to the inlet of the compressor via the third flow path, an outlet of the first flow path and an outlet of the first one-way valve are both selectively connected to the inlet of the outdoor heat exchanger via the first throttling flow path or the first through flow path, and the outlet of the outdoor heat exchanger is also connected to the inlet of the compressor via the fourth flow path.

Also, the thermal management system for a vehicle further includes a second heat exchanger, a second expansion valve, a battery pack and a second water pump, the outlet of the outdoor heat exchanger and an outlet of the second flow path are both connected to a refrigerant inlet of the second heat exchanger through the second expansion valve, and a refrigerant outlet of the second heat exchanger is connected to the inlet of the compressor;

a first cooling liquid outlet of the second heat exchanger is connected to an inlet of the battery pack, an outlet of the battery pack is connected to a first cooling liquid inlet of the second heat exchanger, the second water pump is disposed on a flow path between the first cooling liquid outlet of the second heat exchanger and the inlet of the battery pack, or the second water pump is disposed on a flow path between the outlet of the battery pack and the first cooling liquid inlet of the second heat exchanger.

Optionally, the thermal management system for a vehicle further includes an electronic device and a third water pump, a second cooling liquid outlet of the second heat exchanger is connected to an inlet of the electronic device, an outlet of the electronic device is connected to a second cooling liquid inlet of the second heat exchanger, and the third water pump is disposed on a flow path between the second cooling liquid outlet of the second heat exchanger and the inlet of the electronic device, or the third water pump is disposed on a flow path between the outlet of the electronic device and the second cooling liquid inlet of the second heat exchanger.

Optionally, the electronic device includes at least one of a motor, a charger, a motor controller, and a DC-DC converter.

Optionally, the thermal management system for a vehicle further includes a first gas-liquid separation device, an outlet of the fourth flow path is connected to an inlet of the first gas-liquid separation device, and the inlet of the compressor is connected to a gas outlet of the first gas-liquid separation device, an outlet of the third flow path and the refrigerant outlet of the second heat exchanger.

Optionally, the thermal management system for a vehicle further includes a third heat exchanger,
the outlet of the second flow path and the outlet of the outdoor heat exchanger are both connected to the first refrigerant inlet of the third heat exchanger, the first refrigerant outlet of the third heat exchanger is connected to the inlet of the indoor heat exchanger through the first expansion valve and connected to the refrigerant inlet of the second heat exchanger through the second expansion valve, the outlet of the third flow path and the refrigerant outlet of the second heat exchanger are both connected to the second refrigerant inlet of the third heat exchanger, and the second refrigerant outlet of the third heat exchanger is connected to the inlet of the compressor;
   or,
the outlet of the outdoor heat exchanger is connected to the first refrigerant inlet of the third heat exchanger, the inlet of the first expansion valve and the inlet of the second expansion valve are both connected to the first refrigerant outlet of the third heat exchanger and the outlet of the second flow path, the outlet of the third flow path and the refrigerant outlet of the second heat exchanger are both connected to the second refrigerant inlet of the third heat exchanger, and the second refrigerant outlet of the third heat exchanger is connected to the inlet of the compressor.

Optionally, the thermal management system for a vehicle further includes a second one-way valve;
the outlet of the outdoor heat exchanger is connected to the first refrigerant inlet of the third heat exchanger through the second one-way valve; or,
the second one-way valve is disposed at the first refrigerant outlet of the third heat exchanger.

Optionally, the thermal management system for a vehicle further includes a second gas-liquid separation device, the refrigerant outlet of the first heat exchanger is connected to an inlet of the second gas-liquid separation device, and a liquid outlet of the second gas-liquid separation device is connected to the inlets of the first flow path and the second flow path.

Optionally, the first flow path is provided with a first cut-off valve, and the second flow path is provided with a second cut-off valve; or,
the thermal management system for a vehicle further includes a first three-way valve, the first three-way valve is located on the first flow path and the second flow path at the same time, an A port of the first three-way valve is connected to the refrigerant outlet of the first heat exchanger, a B port of the first three-way valve is connected to the inlet of the outdoor heat exchanger, and a C port of the first three-way valve is connected to the inlet of the first expansion valve.

Optionally, the third flow path is provided with a third cut-off valve, and the fourth flow path is provided with a fourth cut-off valve.

Optionally, the first throttling flow path is provided with a third expansion valve, and the first through flow path is provided with a fifth cut-off valve; or,
the thermal management system for a vehicle further includes an expansion switch valve as an integrated expansion valve and a switch valve, the expansion switch valve (33) has a throttling flow channel and a through flow channel inside, the outlet of the first flow path and the outlet of the first one-way valve are both connected to an inlet of the expansion switch valve, an outlet of the expansion switch valve is connected to the inlet of the outdoor heat exchanger, the first throttling flow path is the throttling flow channel of the expansion switch valve, and the first through flow path is the through flow channel of the expansion switch valve.

Optionally, the thermal management system for a vehicle further includes a second three-way valve, an A port of the second three-way valve is connected to an outlet of the first water pump, a B port of the second three-way valve is connected to the inlet of the outdoor radiator, and a C port of the second three-way valve is connected to the inlet of the indoor air heater; or,
the thermal management system for a vehicle further includes a sixth cut-off valve and a seventh cut-off valve, and the outlet of the first water pump is connected to the inlet of the outdoor radiator via the sixth cut-off valve and connected to the inlet of the indoor air heater via the seventh cut-off valve.

According to another aspect of the present invention, a vehicle according to claim 10 is provided, including the above-mentioned thermal management system for a vehicle.

The above technical solution can achieve a first refrigeration mode of the thermal management system for a vehicle. In this mode, a refrigerant can radiate heat to outside air through the outdoor radiator and the outdoor heat exchanger before entering the indoor heat exchanger. Specifically, the high-temperature and high-pressure gaseous refrigerant discharged from the outlet of the compressor flows into the first heat exchanger. In the first heat exchanger, the high-temperature and high-pressure gaseous refrigerant releases heat to low-temperature cooling liquid and loses its enthalpy, so that high-temperature cooling liquid flows out of the cooling liquid outlet of the first heat exchanger. The high-temperature cooling liquid is pumped by the first water pump to flow into the outdoor radiator and dissipates heat to the outside air in the outdoor radiator, and the low-temperature cooling liquid flowing out of the outlet of the outdoor radiator returns to the first heat exchanger through the cooling liquid inlet of the first heat exchanger and continues to absorb the heat of the high-temperature and high-pressure gaseous refrigerant. The refrigerant that has released heat to the cooling liquid and lost its enthalpy flows into the refrigerant outlet of the first heat exchanger, and the refrigerant flows into the outdoor heat exchanger, releases heat to the outside in the outdoor heat exchanger, and continues to lose its enthalpy. At this time, the outdoor heat exchanger serves as a condenser. The high-temperature and high-pressure gaseous refrigerant passes through the outdoor radiator and the outdoor heat exchanger in turn to release heat, then flows into the first expansion valve, and is throttled and depressurized by the first expansion valve to become a low-temperature and low-pressure gas-liquid two-phase refrigerant. The low-temperature and low-pressure gas-liquid two-phase refrigerant absorbs heat in the indoor heat exchanger from the air in a passenger compartment to reduce the temperature of the passenger compartment. Here, the indoor heat exchanger serves as an evaporator.

Compared with the prior art that the refrigerant before entering the indoor heat exchanger only releases heat to the outside through the outdoor heat exchanger and loses its enthalpy, the first heat exchanger is disposed at the outlet of the compressor and the outdoor radiator is connected to the first heat exchanger in the present invention, so that in the above first refrigeration mode of the present invention, the refrigerant before entering the indoor heat exchanger can release heat to the outside twice through the outdoor radiator and the outdoor heat exchanger, and the enthalpy loss and heat release of the refrigerant before entering the indoor heat exchanger are greater, which is beneficial to the inflow of a lower-temperature refrigerant into the indoor heat exchanger, and enables the thermal management system for a vehicle provided by the present invention to still have a good refrigeration effect and refrigeration efficiency in a high-temperature environment to cool the passenger compartment quickly. That is, the first heat exchanger is disposed at the outlet of the compressor, and the outdoor radiator is connected to the first heat exchanger, which can solve the problem that the refrigerant releases limited heat in the outdoor heat exchanger in the high-temperature environment, and the problem that the condensing heat exchange performance is affected when the outdoor heat exchanger serves as both a condenser and an evaporator.

Other features and advantages of the present invention will be described in detail in the following specific embodiments.

### BRIEF DESCRIPTION OF THE DRAWINGS

The accompanying drawings are intended to provide a further understanding of the present invention, constitute a part of the description, and are used for interpreting the present invention together with the following specific embodiments, rather than limiting the present invention. In the drawings:
FIG. 1 is a schematic structural diagram of a thermal management system for a vehicle according to an embodiment of the present invention;
FIG. 2 is a schematic structural diagram of a thermal management system for a vehicle according to another embodiment of the present invention;
FIG. 3 is a schematic structural diagram of a thermal management system for a vehicle according to still another embodiment of the present invention;
FIG. 4 is a schematic structural diagram of a thermal management system for a vehicle according to still another embodiment of the present invention;
FIG. 5 is a schematic structural diagram of a thermal management system for a vehicle according to an embodiment of the present invention, in which the thermal management system for a vehicle is in a first refrigeration mode, and the thick solid lines and arrows in the figure indicate the flow path and flow direction of a refrigerant and cooling liquid in this mode;
FIG. 6 is a refrigerant pressure-enthalpy diagram of the thermal management system for a vehicle in the first refrigeration mode according to an embodiment of the present invention;
FIG. 7 is a schematic structural diagram of a thermal management system for a vehicle according to an embodiment of the present invention, in which the thermal management system for a vehicle is in a second refrigeration mode, and the thick solid lines and arrows in the figure indicate the flow path and flow direction of a refrigerant and cooling liquid in this mode;
FIG. 8 is a refrigerant pressure-enthalpy diagram of the thermal management system for a vehicle in the second refrigeration mode according to an embodiment of the present invention;
FIG. 9 is a schematic structural diagram of a thermal management system for a vehicle according to an embodiment of the present invention, in which the thermal management system for a vehicle is in a first heat pump heating mode, and the thick solid lines and arrows in the figure indicate the flow path and flow direction of a refrigerant and cooling liquid in this mode;
FIG. 10 is a refrigerant pressure-enthalpy diagram of the thermal management system for a vehicle in the first heat pump heating mode according to an embodiment of the present invention;
FIG. 11 is a schematic structural diagram of a thermal management system for a vehicle according to an embodiment of the present invention, in which the thermal management system for a vehicle is in a second heat pump heating mode, and the thick solid lines and arrows in the figure indicate the flow path and flow direction of a refrigerant and cooling liquid in this mode;
FIG. 12 is a refrigerant pressure-enthalpy diagram of the thermal management system for a vehicle in the second heat pump heating mode according to an embodiment of the present invention;
FIG. 13 is a schematic structural diagram of a thermal management system for a vehicle according to an embodiment of the present invention, in which the thermal management system for a vehicle is in a first dehumidification mode, and the thick solid lines and arrows in the figure indicate the flow path and flow direction of a refrigerant and cooling liquid in this mode;
FIG. 14 is a refrigerant pressure-enthalpy diagram of the thermal management system for a vehicle in the first dehumidification mode according to an embodiment of the present invention;
FIG. 15 is a schematic structural diagram of a thermal management system for a vehicle according to an embodiment of the present invention, in which the thermal management system for a vehicle is in a second dehumidification mode, and the thick solid lines and arrows in the figure indicate the flow path and flow direction of a refrigerant and cooling liquid in this mode;
FIG. 16 is a refrigerant pressure-enthalpy diagram of the thermal management system for a vehicle in the second dehumidification mode according to an embodiment of the present invention;
FIG. 17 is a schematic structural diagram of a thermal management system for a vehicle according to an embodiment of the present invention, in which the thermal management system for a vehicle is in a third dehumidification mode, and the thick solid lines and arrows in the figure indicate the flow path and flow direction of a refrigerant and cooling liquid in this mode;
FIG. 18 is a refrigerant pressure-enthalpy diagram of the thermal management system for a vehicle in the third dehumidification mode according to an embodiment of the present invention;
FIG. 19 is a schematic structural diagram of a thermal management system for a vehicle according to an embodiment of the present invention, in which the thermal management system for a vehicle is in a fourth dehumidification mode, and the thick solid lines and arrows in the figure indicate the flow path and flow direction of a refrigerant and cooling liquid in this mode;
FIG. 20 is a refrigerant pressure-enthalpy diagram of the thermal management system for a vehicle in the fourth dehumidification mode according to an embodiment of the present invention;
FIG. 21 is a schematic structural diagram of a thermal management system for a vehicle according to an embodiment of the present invention, in which the thermal management system for a vehicle is in a first battery pack cooling mode, and the thick solid lines and arrows in the figure indicate the flow path and flow direction of a refrigerant and cooling liquid in this mode;
FIG. 22 is a refrigerant pressure-enthalpy diagram of the thermal management system for a vehicle in the first battery pack cooling mode according to an embodiment of the present invention;
FIG. 23 is a schematic structural diagram of a thermal management system for a vehicle according to an embodiment of the present invention, in which the thermal management system for a vehicle is in a second battery pack cooling mode, and the thick solid lines and arrows in the figure indicate the flow path and flow direction of a refrigerant and cooling liquid in this mode;
FIG. 24 is a refrigerant pressure-enthalpy diagram of the thermal management system for a vehicle in the second battery pack cooling mode according to an embodiment of the present invention;
FIG. 25 is a schematic structural diagram of a thermal management system for a vehicle according to an embodiment of the present invention, in which the thermal management system for a vehicle is in a first passenger compartment refrigeration and battery pack cooling mode, and the thick solid lines and arrows in the figure indicate the flow path and flow direction of a refrigerant and cooling liquid in this mode;
FIG. 26 is a refrigerant pressure-enthalpy diagram of the thermal management system for a vehicle in the first passenger compartment refrigeration and battery pack cooling mode according to an embodiment of the present invention;
FIG. 27 is a schematic structural diagram of a thermal management system for a vehicle according to an embodiment of the present invention, in which the thermal management system for a vehicle is in a second passenger compartment refrigeration and battery pack cooling mode, and the thick solid lines and arrows in the figure indicate the flow path and flow direction of a refrigerant and cooling liquid in this mode;
FIG. 28 is a refrigerant pressure-enthalpy diagram of the thermal management system for a vehicle in the second passenger compartment refrigeration and battery pack cooling mode according to an embodiment of the present invention;
FIG. 29 is a schematic structural diagram of a thermal management system for a vehicle according to an embodiment of the present invention, in which the thermal management system for a vehicle is in a heat recovery mode, and the thick solid lines and arrows in the figure indicate the flow path and flow direction of a refrigerant and cooling liquid in this mode;
FIG. 30 is a refrigerant pressure-enthalpy diagram of the thermal management system for a vehicle in the heat recovery mode according to an embodiment of the present invention;
FIG. 31 is a schematic structural diagram of a thermal management system for a vehicle according to an embodiment of the present invention, in which the thermal management system for a vehicle is in a first heat pump and heat recovery mode, and the thick solid lines and arrows in the figure indicate the flow path and flow direction of a refrigerant and cooling liquid in this mode;
FIG. 32 is a refrigerant pressure-enthalpy diagram of the thermal management system for a vehicle in the first heat pump and heat recovery mode according to an embodiment of the present invention;
FIG. 33 is a schematic structural diagram of a thermal management system for a vehicle according to an embodiment of the present invention, in which the thermal management system for a vehicle is in a second heat pump and heat recovery mode, and the thick solid lines and arrows in the figure indicate the flow path and flow direction of a refrigerant and cooling liquid in this mode;
FIG. 34 is a refrigerant pressure-enthalpy diagram of the thermal management system for a vehicle in the second heat pump and heat recovery mode according to an embodiment of the present invention;
FIG. 35 is a schematic structural diagram of a thermal management system for a vehicle according to an embodiment of the present invention, in which the thermal management system for a vehicle is in a third heat pump and heat recovery mode, and the thick solid lines and arrows in the figure indicate the flow path and flow direction of a refrigerant and cooling liquid in this mode;
FIG. 36 is a refrigerant pressure-enthalpy diagram of the thermal management system for a vehicle in the third heat pump and heat recovery mode according to an embodiment of the present invention.

### REFERENCE NUMERALS

1: compressor
2: first heat exchanger
3: outdoor heat exchanger
4: first expansion valve
5: indoor heat exchanger
6: first water pump
7: outdoor radiator
8: first flow path
9: second flow path
10: indoor air heater
11: first throttling flow path
12: first through flow path
13: third flow path
14: fourth flow path
15: first one-way valve
16: second heat exchanger
17: second expansion valve
18: battery pack
19: second water pump
20: electronic device
21: third water pump
22: first gas-liquid separation device
23: third heat exchanger
24: second one-way valve
25: second gas-liquid separation device
26: first cut-off valve
27: second cut-off valve
28: first three-way valve
29: third cut-off valve
30: fourth cut-off valve
31: third expansion valve
32: fifth cut-off valve
33: expansion switch valve
34: third three-way valve
35: sixth cut-off valve
36: seventh cut-off valve

### DETAILED DESCRIPTION

The specific embodiments of the present invention will be described in detail below with reference to the accompanying drawings. It should be understood that the specific embodiments described herein are merely used for illustrating and interpreting the present invention, rather than limiting the present invention.

In the present invention, unless otherwise stated, the "connected" mentioned in the present invention may be connected directly or indirectly between two devices or means, the "throttling flow path" indicates that the flow path can realize the throttling and cut-off of a refrigerant and can adjust the flow and pressure of the refrigerant when throttling, and the "through flow path" indicates that the flow path can realize the conduction and cut-off of the refrigerant.

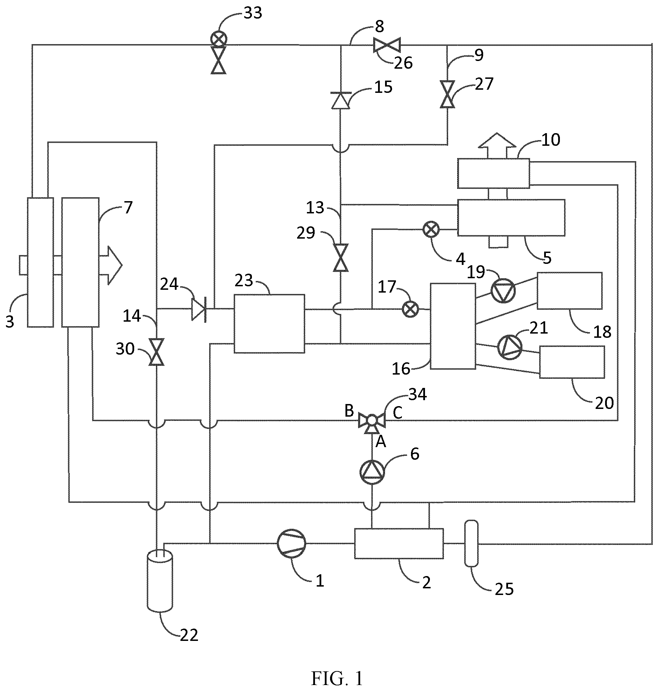

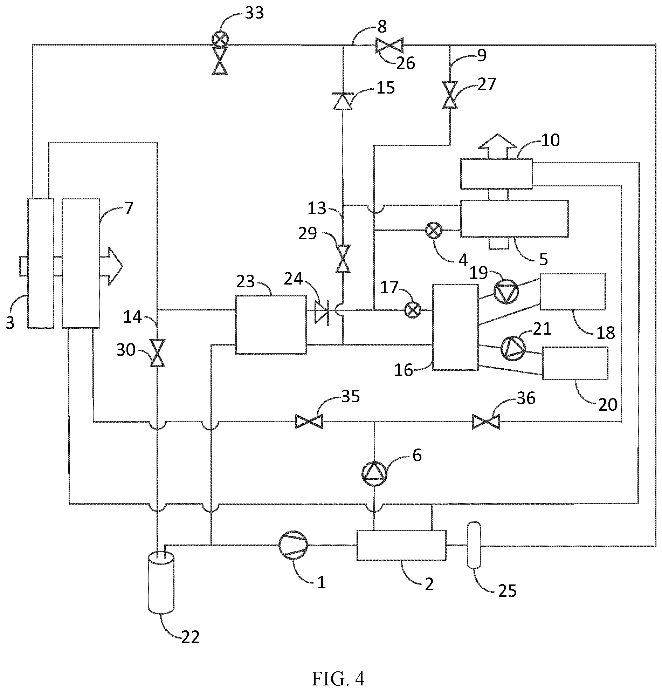

As shown in FIGS. 1 to 36, the present invention provides a thermal management system for a vehicle, including a compressor 1, a first heat exchanger 2, an outdoor heat exchanger 3, a first expansion valve 4, an indoor heat exchanger 5, a first water pump 6 and an outdoor radiator 7. An outlet of the compressor 1 is connected to a refrigerant inlet of the first heat exchanger 2, a refrigerant outlet of the first heat exchanger 2 is connected to an inlet of the outdoor heat exchanger 3, an outlet of the outdoor heat exchanger 3 is connected to an inlet of the indoor heat exchanger 5 through the first expansion valve 4, an outlet of the indoor heat exchanger 5 is connected to an inlet of the compressor 1, a cooling liquid outlet of the first heat exchanger 2 is connected to an inlet of the outdoor radiator 7, an outlet of the outdoor radiator 7 is connected to a cooling liquid inlet of the first heat exchanger 2, and the first water pump 6 is disposed on a flow path between the cooling liquid outlet of the first heat exchanger 2 and the inlet of the outdoor radiator 7, or the first water pump 6 is disposed on a flow path between the outlet of the outdoor radiator 7 and the cooling liquid inlet of the first heat exchanger 2.

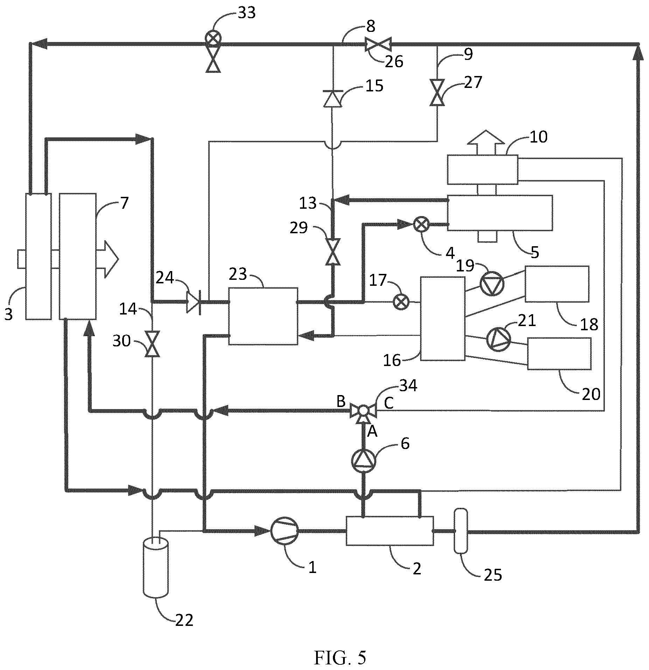

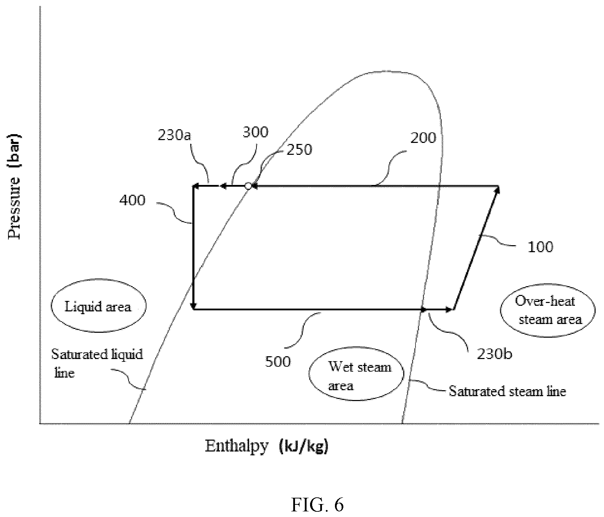

The above technical solution can achieve a first refrigeration mode of the thermal management system for a vehicle. In this mode, a refrigerant can radiate heat to outside air through the outdoor radiator 7 and the outdoor heat exchanger 3 before entering the indoor heat exchanger 5. Specifically, as shown in FIGS. 5 and 6, the high-temperature and high-pressure gaseous refrigerant discharged from the outlet of the compressor 1 flows into the first heat exchanger 2. In the first heat exchanger 2, the high-temperature and high-pressure gaseous refrigerant releases heat to low-temperature cooling liquid and loses its enthalpy (as shown by arrow 200 in FIG. 6), so that high-temperature cooling liquid flows out of the cooling liquid outlet of the first heat exchanger 2. The high-temperature cooling liquid is pumped by the first water pump 6 to flow into the outdoor radiator 7 and dissipates heat to the outside air in the outdoor radiator 7, and the low-temperature cooling liquid flowing out of the outlet of the outdoor radiator 7 returns to the first heat exchanger 2 through the cooling liquid inlet of the first heat exchanger 2 and continues to absorb the heat of the high-temperature and high-pressure gaseous refrigerant. The refrigerant that has released heat to the cooling liquid and lost its enthalpy flows into the refrigerant outlet of the first heat exchanger 2, and the refrigerant flows into the outdoor heat exchanger 3, releases heat to the outside in the outdoor heat exchanger 3, and continues to lose its enthalpy (as shown by arrow 300 in FIG. 6). At this time, the outdoor heat exchanger 3 serves as a condenser. The high-temperature and high-pressure gaseous refrigerant passes through the outdoor radiator 7 and the outdoor heat exchanger 3 in turn to release heat, then flows into the first expansion valve 4, and is throttled and depressurized by the first expansion valve 4 to become a low-temperature and low-pressure gas-liquid two-phase refrigerant. The low-temperature and low-pressure gas-liquid two-phase refrigerant absorbs heat in the indoor heat exchanger 5 from the air in a passenger compartment to reduce the temperature of the passenger compartment. Here, the indoor heat exchanger 5 serves as an evaporator.

Compared with the technical solution in the prior art that the refrigerant before entering the indoor heat exchanger only releases heat to the outside through the outdoor heat exchanger and loses its enthalpy, the first heat exchanger 2 is disposed at the outlet of the compressor 1 and the outdoor radiator 7 is connected to the first heat exchanger 2 in the present invention, so that in the above first refrigeration mode of the present invention, the refrigerant before entering the indoor heat exchanger 5 can release heat to the outside twice through the outdoor radiator 7 and the outdoor heat exchanger 3, and the enthalpy loss and heat release of the refrigerant before entering the indoor heat exchanger 5 are greater, which is beneficial to the inflow of a lower-temperature refrigerant into the indoor heat exchanger 5, and enables the thermal management system for a vehicle provided by the present invention to still have a good refrigeration effect and refrigeration efficiency in a high-temperature environment to cool the passenger compartment quickly. That is, the first heat exchanger 2 is disposed at the outlet of the compressor 1, and the outdoor radiator 7 is connected to the first heat exchanger 2, which can solve the problem that the refrigerant releases limited heat in the outdoor heat exchanger 3 in the high-temperature environment, and the problem that the condensing heat exchange performance is affected when the outdoor heat exchanger 3 serves as both a condenser and an evaporator.

The thermal management system for a vehicle further includes a first flow path 8 that is selectively conducted or cut off, and a second flow path 9 that is selectively conducted or cut off. The refrigerant outlet of the first heat exchanger 2 is connected to the inlet of the outdoor heat exchanger 3 via the first flow path 8 and connected to the inlet of the first expansion valve 4 via the second flow path 9. Since the first flow path 8 and the second flow path 9 that are selectively conducted or cut off are provided, and the refrigerant outlet of the first heat exchanger 2 is connected to the inlet of the outdoor heat exchanger 3 and the inlet of the first expansion valve 4 via the first flow path 8 and the second flow path 9 respectively, the refrigerant flowing out of the refrigerant outlet of the first heat exchanger 2 can enter the indoor heat exchanger 5 via the second flow path 9 and the first expansion valve 4 in turn, without flowing through the outdoor heat exchanger 3 via the first flow path 8, and the thermal management system for a vehicle can have a second refrigeration mode.

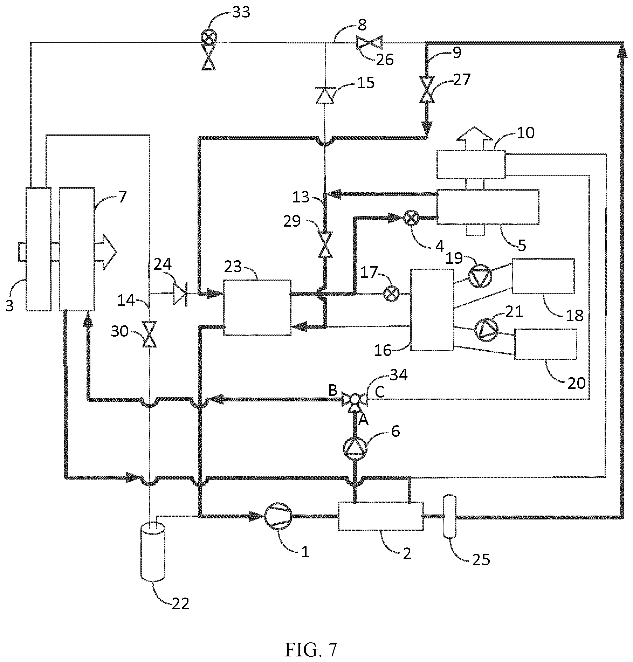

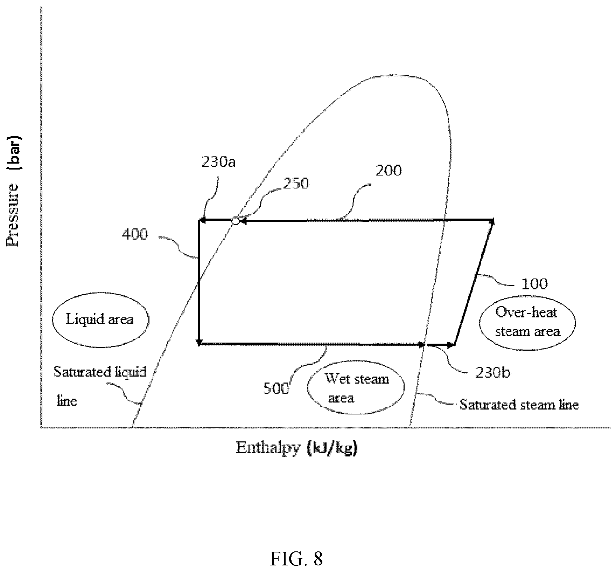

Specifically, as shown in FIGS. 7 and 8, in the second refrigeration mode, the first flow path 8 is in a cut-off state, the second flow path 9 is in a conduction state, and the high-temperature and high-pressure gaseous refrigerant discharged from the outlet of the compressor 1 flows into the first heat exchanger 2. In the first heat exchanger 2, the high-temperature and high-pressure gaseous refrigerant releases heat to low-temperature cooling liquid, so that high-temperature cooling liquid flows out of the cooling liquid outlet of the first heat exchanger 2. The high-temperature cooling liquid is pumped by the first water pump 6 to flow into the outdoor radiator 7, and dissipates heat to the outside air in the outdoor radiator 7 to lose its enthalpy, and the low-temperature cooling liquid flowing out of the outlet of the outdoor radiator 7 returns to the first heat exchanger 2 through the cooling liquid inlet of the first heat exchanger 2 and continues to absorb the heat of the high-temperature and high-pressure gaseous refrigerant. The refrigerant that has released heat to the cooling liquid and lost its enthalpy flows into the refrigerant outlet of the first heat exchanger 2, the refrigerant flows into the first expansion valve 4 and is throttled and depressurized by the first expansion valve 4 to become a low-temperature and low-pressure gas-liquid two-phase refrigerant. The low-temperature and low-pressure gas-liquid two-phase refrigerant absorbs the heat of air in the passenger compartment in the indoor heat exchanger 5 to reduce the temperature of the passenger compartment. Here, the indoor heat exchanger 5 serves as an evaporator.

The difference between the first refrigeration mode and the second refrigeration mode lies in that: in the first refrigeration mode, the refrigerant loses its enthalpy through the outdoor heat exchanger 3 and the outdoor radiator 7 before entering the indoor heat exchanger 5 (as shown by arrows 200 and 300 in FIG. 6); in the second refrigeration mode, the refrigerant does not flow through the outdoor heat exchanger 3 before entering the indoor heat exchanger 5, and the refrigerant loses its enthalpy through the outdoor radiator 7 (as shown by arrow 200 in FIG. 8); that is, the amount of enthalpy lost by the refrigerant before entering the indoor heat exchanger 5 in the first refrigeration mode is greater than that in the second refrigeration mode; as such, the content of liquid refrigerant in the gas-liquid two-phase refrigerant entering the indoor heat exchanger 5 in the first refrigeration mode is greater than that in the second refrigeration mode, and the greater the content of the liquid refrigerant in the indoor heat exchanger 5 is, the more heat the refrigerant absorbs in the indoor heat exchanger 5. Therefore, when the external environmental temperature is high and the passenger compartment has a refrigeration demand, the thermal management system for a vehicle may be in the first refrigeration mode. When the external temperature environment is relatively high and the passenger compartment has a refrigeration demand, the thermal management system for a vehicle may be in the second refrigeration mode. That is, the thermal management system for a vehicle may choose to adopt the first refrigeration mode or the second refrigeration mode according to the temperature of the external environment to cool the passenger compartment.

Optionally, in order to realize the selective conduction or cut-off of the first flow path 8 and the second flow path 9, in an embodiment provided by the present invention, as shown in FIGS. 1, 2 and 4, the first flow path 8 is provided with a first cut-off valve 26, and the second flow path 9 is provided with a second cut-off valve 27. The first flow path 8 and the second flow path 8 can be conducted or cut off by controlling the opening and closing of the first cut-off valve 26 and the second cut-off valve 27.

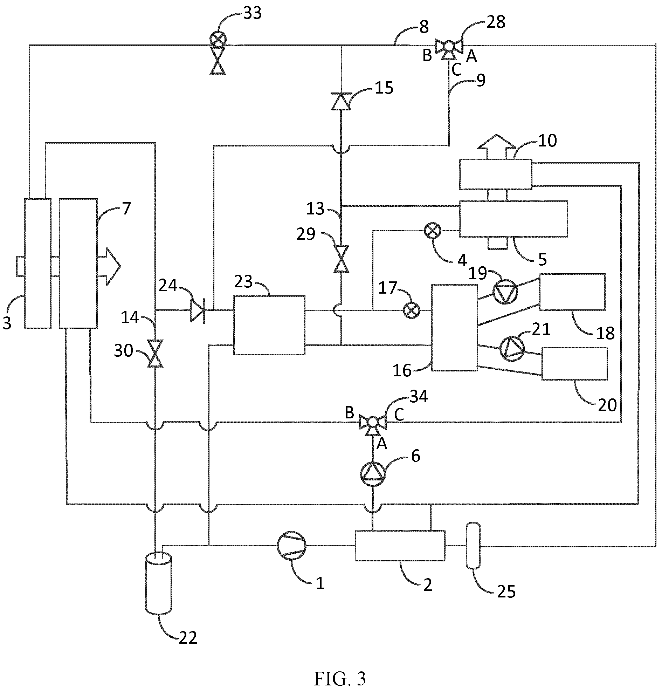

In another embodiment provided by the present invention, as shown in FIG. 3, the thermal management system for a vehicle may further include a first three-way valve 28, the first three-way valve 28 is located on both the first flow path 8 and the second flow path 9, an A port of the first three-way valve 28 is connected to the refrigerant outlet of the first heat exchanger 2, a B port of the first three-way valve 28 is connected to the inlet of the outdoor heat exchanger 3, and a C port of the first three-way valve 28 is connected to the inlet of the first expansion valve 4. The first flow path 8 and the second flow path 9 can be conducted or cut off by controlling the conduction of the corresponding ports of the first three-way valve 28. Specifically, when the A port and B port of the first three-way valve 28 are conducted, the first flow path 8 can be conducted, and the second flow path 9 can be cut off; when the A port and C port of the first three-way valve 28 are conducted, the first flow path 8 can be cut off, and the second flow path 9 can be conducted.

In order to enable the thermal management system for a vehicle provided by the present invention to have more operating modes and stronger functionality, in the present invention, as shown in FIGS. 1 to 4, the thermal management system for a vehicle further includes an indoor air heater 10, a first throttling flow path 11, a first through flow path 12, a third flow path 13 that is selectively conducted or cut off, a fourth flow path 14 that is selectively conducted or cut off, and a first one-way valve 15. The cooling liquid outlet of the first heat exchanger 2 is connected to the inlet of the outdoor radiator 7 and an inlet of the indoor air heater 10 through the first water pump 6, the cooling liquid outlet of the first heat exchanger 2 is selectively connected to the inlet of the outdoor radiator 7 and the inlet of the indoor air heater 10, and an outlet of the indoor air heater 10 is connected to the cooling liquid inlet of the first heat exchanger 2; the outlet of the indoor heat exchanger 5 is connected to an inlet of the first one-way valve 15 and connected to the inlet of the compressor 1 via the third flow path 13, an outlet of the first flow path 8 and an outlet of the first one-way valve 15 are both selectively connected to the inlet of the outdoor heat exchanger 3 via the first throttling flow path 11 or the first through flow path 12, and the outlet of the outdoor heat exchanger 3 is also connected to the inlet of the compressor 1 via the fourth flow path 14.

Since the outlet of the indoor heat exchanger 5 is connected to inlets of the first throttling flow path 11 and the first through flow path 12 via the first one-way valve 15, and is connected to the inlet of the compressor 1 via the third flow path 13 which is selectively conducted or cut off, the cooling liquid flowing out of the outlet of the indoor heat exchanger 5 can choose to return to the compressor 1 via the third flow path 13, or to flow into the outdoor heat exchanger 3 via the first one-way valve 15 and the first throttling flow path 11; since the outlet of the outdoor heat exchanger 3 is connected to the inlet of the indoor heat exchanger 5 via the first expansion valve 4, and is connected to the inlet of the compressor 1 via the fourth flow path 14 that is selectively conducted or cut off, the refrigerant flowing out of the outlet of the outdoor heat exchanger 3 can choose to flow into the indoor heat exchanger 5 via the first expansion valve 4, or to return to the compressor 1 via the fourth flow path 14. In addition, since the cooling liquid outlet of the first heat exchanger 2 is selectively connected to the inlet of the outdoor radiator 7 and the inlet of the indoor air heater 10, the high-temperature cooling liquid flowing out of the cooling liquid outlet of the first heat exchanger 2 can choose to flow into the outdoor radiator 7 or into the indoor air heater 10. As such, the thermal management system for a vehicle provided by the present invention not only have the above-mentioned first refrigeration mode and second refrigeration mode, but also can have a heat pump heating mode and a dehumidification mode, by controlling the conduction or cut off of the first flow path 8, the second flow path 9, the third flow path 13, and the fourth flow path 14, and the conduction relationship between the cooling liquid outlet of the first heat exchanger 2 and the outdoor radiator 7 and the indoor air heater 10.

Specifically, as shown in FIG. 5, when the first flow path 8 is conducted, the second flow path 9 is cut off, the third flow path 13 is cut off, the fourth flow path 14 is conducted, the first through flow path 12 is conducted, the first throttling flow path 11 is cut off, and the cooling liquid outlet of the first heat exchanger 2 is connected to the outdoor radiator 7, the thermal management system for a vehicle is in the above-mentioned first refrigeration mode. In this mode, the compressor 1, the first heat exchanger 2, the first flow path 8, the first through flow path 12, the outdoor heat exchanger 3, the first expansion valve 4, the indoor heat exchanger 5, and the third flow path 13 are connected in series to form a refrigerant loop; the first water pump 6, the outdoor radiator 7, and the first heat exchanger 2 are connected in series to form a cooling liquid loop; the refrigerant and the cooling liquid in the two loops exchange heat through the first heat exchanger 2.

In this mode, since the second flow path 9 is in the cut-off state, the refrigerant flowing out of the refrigerant outlet of the first heat exchanger 2 will not enter the indoor heat exchanger 5 through the first expansion valve 4. Since the first one-way valve 15 is connected between the outlet of the indoor heat exchanger 5 and the outlet of the first flow path 8, the refrigerant flowing out of the outlet of the first flow path 8 cannot be guided back to the indoor heat exchanger 5 or the third flow path 13 through the first one-way valve 15, but flows into the first through flow path 12, and, as shown in FIG. 6, since the pressure of the refrigerant flowing out of the outlet of the indoor heat exchanger 5 (refer to the pressure value corresponding to arrow 500 in FIG. 6) is less than the pressure of the refrigerant flowing out of the outlet of the first flow path 8 (refer to the pressure value corresponding to arrow 200 in FIG. 6), the refrigerant flowing out of the outlet of the indoor heat exchanger 5 cannot flow into the first flow path 8. Since the fourth flow path 14 is in the cut-off state, the refrigerant flowing out of the outlet of the outdoor heat exchanger 3 cannot return to the compressor 1 through the fourth flow path 14, but can only flow into the indoor heat exchanger 5 through the first expansion valve 4. In addition, it should be emphasized that in this mode, the first throttling flow path 11 is in a cut-off state, that is, the refrigerant flowing out of the first flow path 8 flows into the outdoor heat exchanger 3 through the first through flow path 12, so that the refrigerant can release heat to the external environment in the outdoor heat exchanger 3.

As shown in FIG. 7, when the first flow path 8 is cut off, the second flow path 9 is conducted, the third flow path 13 is conducted, the fourth flow path 14 is cut off, and the cooling liquid outlet of the first heat exchanger 2 is connected to the outdoor radiator 7, the thermal management system for a vehicle is in the above-mentioned second refrigeration mode. In this mode, the compressor 1, the first heat exchanger 2, the second flow path 9, the first expansion valve 4, the indoor heat exchanger 5, and the third flow path 13 are connected in series to form a refrigerant loop; the first water pump 6, the outdoor radiator 7 and the first heat exchanger 2 are connected in series to form a cooling liquid loop; the refrigerant and the cooling liquid in the two loops exchange heat through the first heat exchanger 2. Since the first flow path 8 is cut off in this mode, the refrigerant flowing out of the outlet of the first heat exchanger 2 flows into the indoor heat exchanger 5 via the second flow path 9 and the first expansion valve 4, and does not pass through the outdoor heat exchanger. 3.

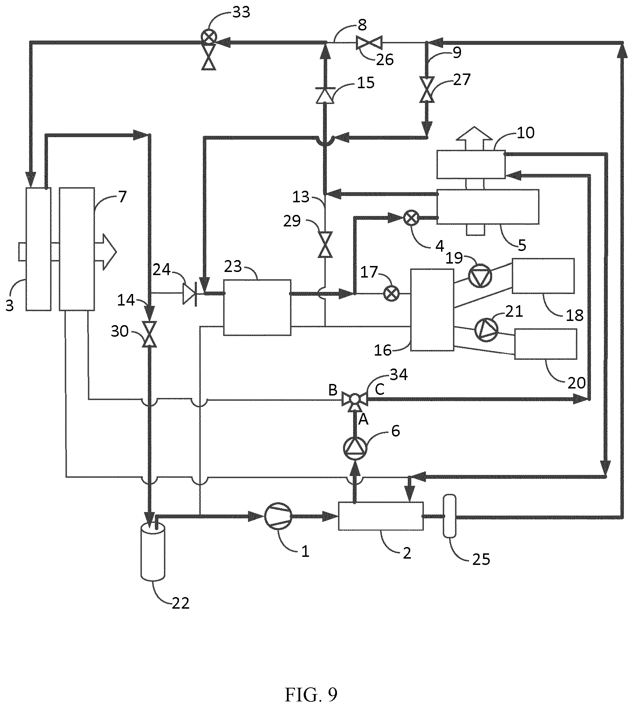

As shown in FIG. 9, the thermal management system for a vehicle provided by the present invention may also have a first heat pump heating mode. In this mode, the first flow path 8 is cut off, the second flow path 9 is conducted, the third flow path 13 is cut off, the fourth flow path 14 is conducted, the first through flow path 12 is cut off, the first throttling flow path 11 is conducted, and the cooling liquid outlet of the first heat exchanger 2 is connected to the indoor air heater 10, so that the compressor 1, the first heat exchanger 2, the second flow path 9, the first expansion valve 4, the indoor heat exchanger 5, the first one-way valve 15, the first throttling flow path 11, the outdoor heat exchanger 3, and the fourth flow path 14 are connected in series to form a refrigerant loop; the first water pump 6, the indoor air heater 10, and the first heat exchanger 2 are connected in series to form a cooling liquid loop; the refrigerant and the cooling liquid in the two loops exchange heat through the first heat exchanger 2.

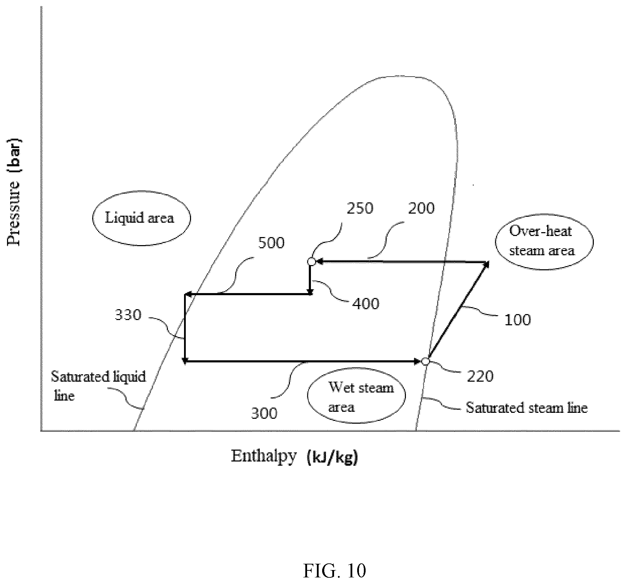

In the first heat pump heating mode, as shown in FIGS. 9 and 10, the high-temperature and high-pressure gaseous refrigerant discharged from the outlet of the compressor 1 flows into the first heat exchanger 2. In the first heat exchanger 2, the high-temperature and high-pressure gaseous refrigerant releases heat to low-temperature cooling liquid and loses its enthalpy (as shown by arrow 200 in FIG. 10), so that high-temperature cooling liquid flows out of the cooling liquid outlet of the first heat exchanger 2. The high-temperature cooling liquid is pumped by the first water pump 6 to flow into the indoor air heater 10, and releases heat to the passenger compartment through the indoor air heater 10 to increase the temperature of the passenger compartment. Low-temperature cooling liquid flowing out of the outlet of the indoor air heater 10 returns to the first heat exchanger 2 through the cooling liquid inlet of the first heat exchanger 2, and continues to absorb the heat of the high-temperature and high-pressure gaseous refrigerant. The refrigerant that has released heat to the cooling liquid and lost its enthalpy flows into the refrigerant outlet of the first heat exchanger 2, and the refrigerant flows into the indoor heat exchanger 5 after being throttled and depressurized by the first expansion valve 4, and releases heat to the passenger compartment in the indoor heat exchanger 5 to lose its enthalpy (as shown by arrow 500 in FIG. 10). Here, the indoor heat exchanger 5 serves as a condenser. The refrigerant flowing out of the outlet of the indoor heat exchanger 5 flows into the outdoor heat exchanger 3 after being throttled and depressurized by the first throttling flow path 11 (as shown by arrow 330 in FIG. 10). In the outdoor heat exchanger 3, the low-pressure gas-liquid two-phase mixed refrigerant absorbs heat from outside air, which increases the enthalpy value of the refrigerant (as shown by arrow 300 in FIG. 10), and finally the refrigerant returns to the compressor 1.

In the first heat pump heating mode, the indoor heat exchanger 5 and the indoor air heater 10 arranged in the passenger compartment both release heat to the air in the passenger compartment. When the indoor heat exchanger 5 and the indoor air heater 10 are arranged, the indoor heat exchanger 5 may be arranged behind the indoor air heater 10, and air flows through the indoor heat exchanger 5 and then through the indoor air heater 10. As such, the indoor heat exchanger 5 can preheat the air that is about to flow through the indoor air heater 10.

In addition, it should be noted that in the first heat pump heating mode, the refrigerant needs to be throttled and depressurized by the first expansion valve 4 before entering the indoor heat exchanger 5, in order to adjust the temperature of the refrigerant that is about to enter the indoor heat exchanger 5 through the opening of the first expansion valve 4, so that the temperature of the refrigerant flowing into the indoor heat exchanger 5 is higher than the environmental temperature in the passenger compartment and lower than the temperature of the cooling liquid in the indoor air heater 10. As such, the refrigerant in the indoor heat exchanger 5 can not only release heat (rather than absorb heat) to the passenger compartment, but also heat the air flowing through the indoor heat exchanger 5 to be not higher than the temperature of the cooling liquid in the indoor air heater 10, so as to realize the above pre-heating function and prevent the cooling liquid in the indoor air heater 10 from releasing heat to the air flowing through the indoor air heater 10. In the first heat pump heating mode, the air heater is a main heat source for providing heat to the passenger compartment, and the indoor heat exchanger 5 is an auxiliary heat source that assists in providing heat to the passenger compartment. That is, the temperature of the refrigerant entering the indoor heat exchanger 5 can be adjusted by adjusting the opening of the first expansion valve 4, so that the temperature of the refrigerant in the indoor heat exchanger 5 has a temperature difference from the temperature of the cooling liquid in the indoor air heater 10, which can achieve the function of preheating, by the indoor heat exchanger 5, the air that is about to flow through the indoor air heater 10.

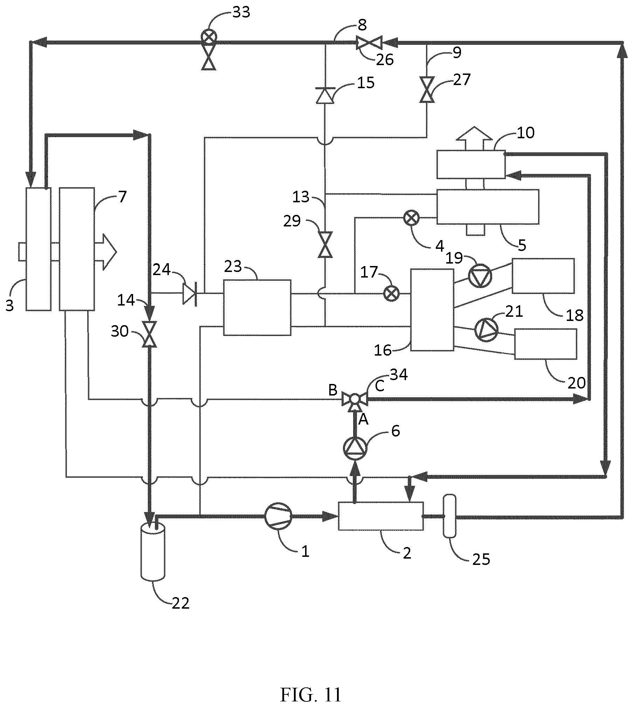

As shown in FIG. 11, the thermal management system for a vehicle provided by the present invention may further have a second heat pump heating mode. In this mode, the first flow path 8 is conducted, the second flow path 9 is cut off, the third flow path 13 is cut off, the fourth flow path 14 is conducted, the first through flow path 12 is cut off, the first throttling flow path 11 is cut off, and the cooling liquid outlet of the first heat exchanger 2 is connected to the indoor air heater 10, so that the compressor 1, the first heat exchanger 2, the first flow path 8, the first throttling flow path 11, and the outdoor heat exchanger 3 are connected in series to form a refrigerant loop; the first water pump 6, the indoor air heater 10, and the first heat exchanger 2 are connected in series to form a cooling liquid loop; the refrigerant and the cooling liquid in the two loops exchange heat through the first heat exchanger 2.

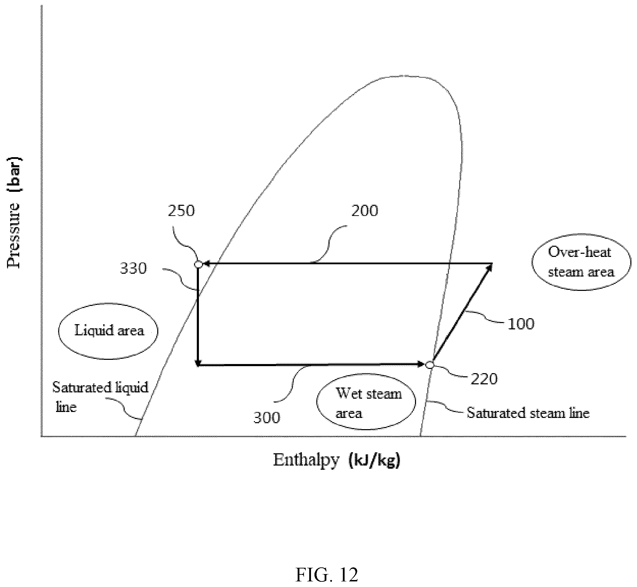

In the second heat pump heating mode, as shown in FIGS. 11 and 12, the high-temperature and high-pressure gaseous refrigerant discharged from the outlet of the compressor 1 flows into the first heat exchanger 2. In the first heat exchanger 2, the high-temperature and high-pressure gaseous refrigerant releases heat to low-temperature cooling liquid and loses its enthalpy (as shown by arrow 200 in FIG. 12), so that high-temperature cooling liquid flows out of the cooling liquid outlet of the first heat exchanger 2. The high-temperature cooling liquid is pumped by the first water pump 6 to flow into the indoor air heater 10, and releases heat to the passenger compartment through the indoor air heater 10 to increase the temperature of the passenger compartment. Low-temperature cooling liquid flowing out of the outlet of the indoor air heater 10 returns to the first heat exchanger 2 through the cooling liquid inlet of the first heat exchanger 2, and continues to absorb the heat of the high-temperature and high-pressure gaseous refrigerant. The refrigerant that has released heat to the cooling liquid and lost its enthalpy flows into the refrigerant outlet of the first heat exchanger 2, the refrigerant is throttled and depressurized by the first expansion valve 4 to become a low-pressure gas-liquid two-phase mixed refrigerant (as shown by arrow 330 in FIG. 11), and the low-pressure gas-liquid two-phase mixed refrigerant flows into the outdoor heat exchanger 3, and absorbs heat from outside air in the outdoor heat exchanger 3 to obtain an enthalpy (as shown by arrow 300 in FIG. 11). Here, the outdoor heat exchanger 3 serves as an evaporator. Finally the refrigerant flowing out of the outdoor heat exchanger 3 returns to the compressor 1.

The difference between the first heat pump heating mode and the second heat pump heating mode lies in that: in the first heat pump heating mode, the refrigerant flowing out of the refrigerant outlet of the first heat exchanger 2 is throttled and depressurized by the first expansion valve 4 and then flows into the indoor heat exchanger 5, the refrigerant in the indoor heat exchanger 5 and the refrigerant in the indoor air heater 10 both release heat to the passenger compartment, and the refrigerant in the indoor heat exchanger 5 can preheat the air that is about to flow through the indoor air heater 10; in the second heat pump heating mode, the refrigerant flowing out of the refrigerant outlet of the first heat exchanger 2 does not flow into the indoor heat exchanger 5, but returns to the compressor 1 via the outdoor heat exchanger 3; that is, both the indoor heat exchanger 5 and the indoor air heater 10 are used to release heat to the passenger compartment in the first heat pump heating mode, and only the indoor air heater 10 is used to release heat to the passenger compartment in the second heat pump heating mode. The refrigerant in the indoor heat exchanger 5 can preheat the air that is about to flow through the indoor air heater 10 in the first heat pump heating mode, but no refrigerant flows through the indoor heat exchanger 5 to preheat the air that is about to flow through the indoor air heater 10 in the second heat pump heating mode, so the temperature of the air passing through the indoor air heater 10 in the first heat pump heating mode is higher than that in the second heat pump heating mode. Compared with the second heating mode, the first heat pump heating mode has higher speed and effect of increasing the temperature of the passenger compartment. In practical applications, the appropriate heat pump heating mode can be selected according to the temperature of the passenger compartment or the heating demand of the passenger compartment. For example, when the passenger compartment is at a low temperature, the thermal management system for a vehicle may be in the first heat pump heating mode; and when the temperature of the passenger compartment is relatively low, the thermal management system for a vehicle may be in the second heat pump heating mode.

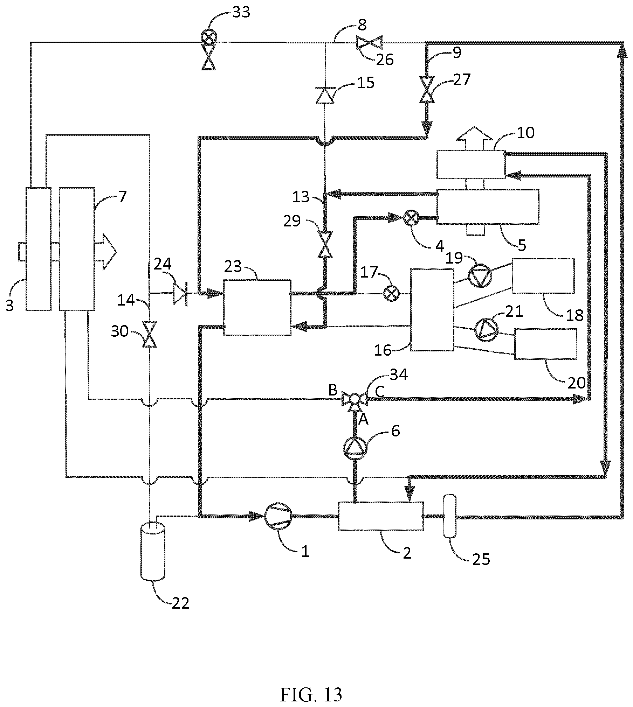

As shown in FIG. 13, the thermal management system for a vehicle provided by the present invention may also have a first dehumidification mode. In this mode, the first flow path 8 is cut off, the second flow path 9 is conducted, the third flow path 13 is conducted, the fourth flow path 14 is cut off, and the cooling liquid outlet of the first heat exchanger 2 is connected to the indoor air heater 10, so that the compressor 1, the first heat exchanger 2, the second flow path 9, the first expansion valve 4, the indoor heat exchanger 5 and the third flow path 13 are connected in series to form a refrigerant loop; the first water pump 6, the indoor air heater 10, and the first heat exchanger 2 are connected in series to form a cooling liquid loop; the refrigerant and the cooling liquid in the two loops exchange heat through the first heat exchanger 2. In the first dehumidification mode, the refrigerant flowing out of the refrigerant outlet of the first heat exchanger 2 flows into the indoor heat exchanger 5 after being throttled and depressurized by the first expansion valve 4, the refrigerant in the indoor heat exchanger 5 absorbs heat, and the cooling liquid in the air heater releases heat to the passenger compartment. As such, when the hot air in the passenger compartment comes into contact with the indoor heat exchanger 5, condensed water can be formed on the surface of the indoor heat exchanger 5 to achieve the purpose of reducing the humidity of the air in the passenger compartment, the condensed water can be discharged out of the vehicle through a draft tube. The air heater releases heat to the passenger compartment, so that the temperature of the passenger compartment can be stabilized within a certain range, and can be prevented from being reduced by the indoor heat exchanger 5.

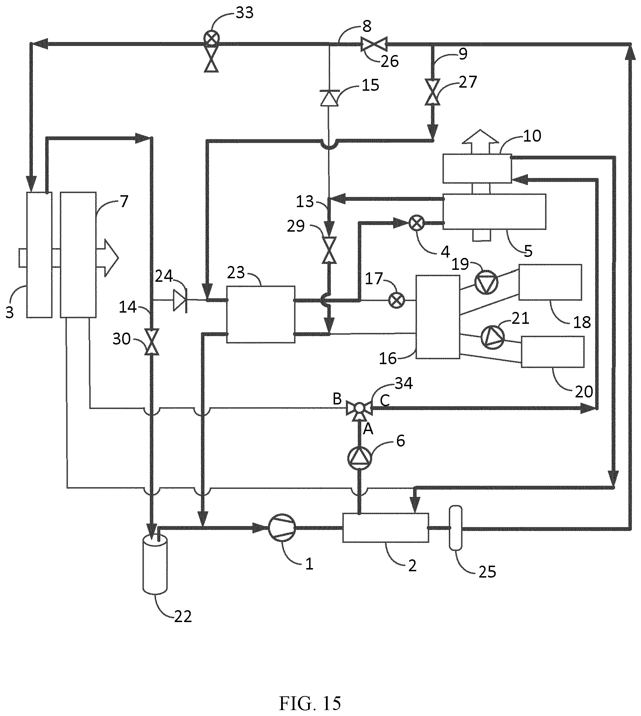

As shown in FIG. 15, the thermal management system for a vehicle provided by the present invention may also have a second dehumidification mode. In this mode, the first flow path 8 is conducted, the second flow path 9 is conducted, the third flow path 13 is conducted, the fourth flow path 14 is conducted, the first throttling flow path 11 is conducted, the first through flow path 12 is cut off, and the cooling liquid outlet of the first heat exchanger 2 is connected to the indoor air heater 10, so that the compressor 1, the first heat exchanger 2, the first flow path 8, the first throttling flow path 11, the outdoor heat exchanger 3, and the fourth flow path 14 are connected in series to form a refrigerant loop; the compressor 1, the first heat exchanger 2, the second flow path 9, the first expansion valve 4, the indoor heat exchanger 5, and the third flow path 13 are connected in series to form another refrigerant loop; the first water pump 6, the indoor air heater 10, and the first heat exchanger 2 are connected in series to form a cooling liquid loop; the cooling liquid and the refrigerant flowing out of the outlet of the compressor 1 exchange heat in the first heat exchanger 2. In the second dehumidification mode, the refrigerant flowing out of the refrigerant outlet of the first heat exchanger 2 is divided into two streams. One stream flows into the indoor heat exchanger 5 after being throttled and depressurized by the first expansion valve 4, so that the refrigerant in the indoor heat exchanger 5 absorbs heat from the passenger compartment. The other stream flows into the outdoor heat exchanger 3 after being throttled and depressurized by the first throttling flow path 11, to absorb heat from outside air in the outdoor heat exchanger 3. The refrigerant flowing out of the outlet of the indoor heat exchanger 5 converges with the refrigerant flowing out of the outlet of the outdoor heat exchanger 3 and then returns to the compressor 1.

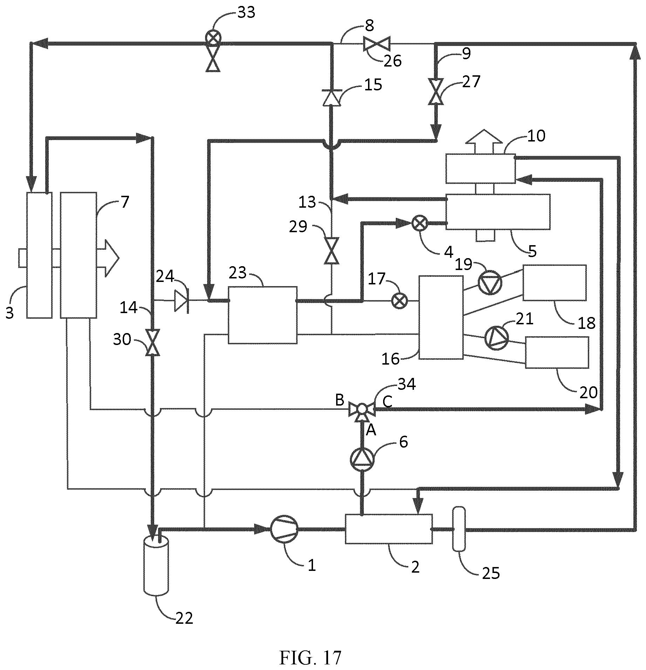

As shown in FIG. 17, the thermal management system for a vehicle provided by the present invention may also have a third dehumidification mode. In this mode, the first flow path 8 is cut off, the second flow path 9 is conducted, the third flow path 13 is cut off, the fourth flow path 14 is conducted, the first throttling flow path 11 is conducted, the first through flow path 12 is cut off, and the cooling liquid outlet of the first heat exchanger 2 is connected to the indoor air heater 10, so that the compressor 1, the first heat exchanger 2, the second flow path 9, the first expansion valve 4, the indoor heat exchanger 5, the first throttling flow path 11, the outdoor heat exchanger 3, and the fourth flow path 14 are connected in series to form a refrigerant loop; the first water pump 6, the indoor air heater 10, and the first heat exchanger 2 are connected in series to form a cooling liquid loop; the refrigerant and the cooling liquid in the two loops exchange heat in the first heat exchanger 2. The difference between the third dehumidification mode and the first dehumidification mode lies in that: in the first dehumidification mode, the refrigerant flowing out of the indoor heat exchanger 5 does not pass through the outdoor heat exchanger 3, but directly returns to the compressor through the third flow path 13; in the third dehumidification mode, the refrigerant flowing out of the indoor heat exchanger 5 does not flow into the third flow path 13, but flows into the outdoor heat exchanger 3 through the first throttling flow path 11, absorbs heat from the outside air via the outdoor heat exchanger 3, and then returns to the compressor 1.

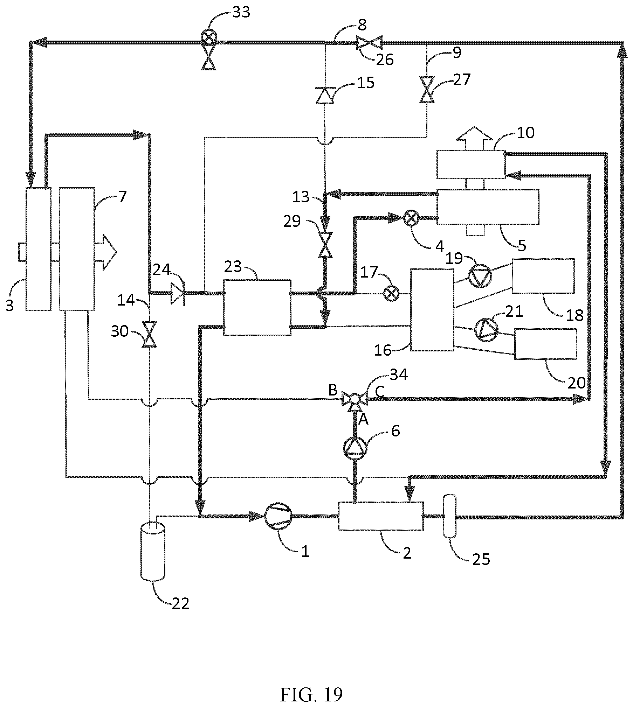

As shown in FIG. 19, the thermal management system for a vehicle provided by the present invention may also have a fourth dehumidification mode. In this mode, the first flow path 8 is conducted, the second flow path 9 is cut off, the third flow path 13 is conducted, the fourth flow path 14 is cut off, the first throttling flow path 11 is conducted, the first through flow path 12 is cut off, and the cooling liquid outlet of the first heat exchanger 2 is connected to the indoor air heater 10, so that the compressor 1, the first heat exchanger 2, the first flow path 8, the first throttling flow path 11, the outdoor heat exchanger 3, the first expansion valve 4, the indoor heat exchanger 5, and the third flow path 13 are connected in series to form a refrigerant loop; the first water pump 6, the indoor air heater 10, and the first heat exchanger 2 are connected in series to form a cooling liquid loop; the refrigerant and the cooling liquid in the two loops exchange heat in the first heat exchanger 2. The fourth dehumidification mode differs from the second dehumidification mode and the third dehumidification mode in that, in the fourth dehumidification mode, the refrigerant flowing out of the refrigerant outlet of the first heat exchanger 2 first passes through the outdoor heat exchanger 3 to exchange heat with the outside air in the outdoor heat exchanger 3, then is throttled and pressurized by the first expansion valve 4, and flows into the indoor heat exchanger 5. In addition, in the third dehumidification mode and the fourth dehumidification mode, since the first throttling flow path 11 and the first expansion valve 4 are connected in series in the same refrigerant loop and the both throttle and depressurize the refrigerant, the degrees of throttling of the first throttling flow path 11 and the first expansion valve 4 on the refrigerant affect each other, and the control complexity of the thermal management system for a vehicle is relatively high. In the second dehumidification mode, since the first throttling flow path 11 and the first expansion valve 4 are connected in parallel with each other, the degrees of throttling of the first throttling flow path 11 and the first expansion valve 4 on the refrigerant do not affect each other, and the control complexity of the thermal management system for a vehicle is relatively low.

During specific implementation, the thermal management system for a vehicle may be in the first dehumidification mode, the second dehumidification mode, the third dehumidification mode, or the fourth dehumidification mode according to the environmental temperature. For example, when the environmental temperature is between 10°C and 15°C, the first dehumidification mode may be used for dehumidification; when the environmental temperature is between 5°C and 10°C, the second dehumidification mode may be used for dehumidification; when the environmental temperature is less than 5°C, the third dehumidification mode and the fourth dehumidification mode may be used for dehumidification.

Here, in order to achieve the selective conduction or cut-off of the third flow path 13 and the fourth flow path 14, in an embodiment provided by the present invention, as shown in FIGS. 1 to 4, the third flow path 13 may be provided with a third cut-off valve 29, and the fourth flow path 14 may be provided with a fourth cut-off valve 30. The third flow path 13 and the fourth flow path 14 are conducted or cut off by controlling the opening and closing of the third cut-off valve 29 and the fourth cut-off valve 30. In other embodiments, the third flow path 13 and the fourth flow path 14 may also be provided with switch valves, respectively.

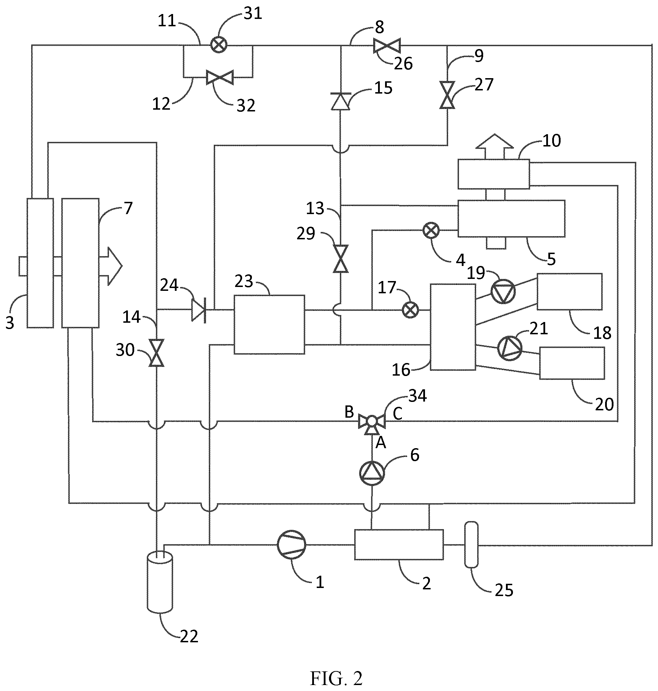

In order to achieve throttling and pressurization of the refrigerant by the first throttling flow path 11, the first through flow path 12 directly conducts the refrigerant (that is, without throttling). In one embodiment, as shown in FIG. 2, the first throttling flow path 11 may be provided with a third expansion valve 31, the first through flow path 12 may be provided with a fifth cut-off valve 32, and the third expansion valve 31 is parallel to the fifth cut-off valve 32.

In another embodiment, as shown in FIGS. 1, 3, and 4, the thermal management system for a vehicle may further include an expansion switch valve 33, the outlet of the first flow path 8 and the outlet of the first one-way valve 15 are both connected to an inlet of the expansion switch valve 33, an outlet of the expansion switch valve 33 is connected to the inlet of the outdoor heat exchanger 3, the first throttling flow path 11 is a throttling flow channel of the expansion switch valve 33, and the first through flow path 12 is a through flow channel of the expansion switch valve 33. Here, the expansion switch valve 33 is equivalent to an integration of an expansion valve and a switch valve, the expansion switch valve 33 has a throttling flow channel and a through flow channel inside, a throttling valve port and a throttling valve core are disposed in the throttling flow channel, and a through valve port and a through valve core are disposed in the through flow channel. The opening of the throttling valve core or the through valve core can be selectively controlled according to the operating mode of the thermal management system for a vehicle, so that the refrigerant passing through the expansion switch valve 33 has a throttling state in which the refrigerant is throttled and depressurized and a through flow state in which the refrigerant is not throttled but directly conducted.

Optionally, in order to selectively connect the cooling liquid outlet of the first heat exchanger 2 to the inlet of the outdoor radiator 7 and the inlet of the indoor air heater 10, in an exemplary embodiment provided by the present invention, as shown in FIGS. 1 to 3, the thermal management system for a vehicle further includes a second three-way valve, an A port of the second three-way valve is connected to the outlet of the first water pump 6, a B port of the second three-way valve is connected to the inlet of the outdoor radiator 7, and a C port of the second three-way valve is connected to the inlet of the indoor air heater 10. When the A port and B port of the second three-way valve are conducted and the first water pump 6 is opened, the flow path between the cooling liquid outlet of the first heat exchanger 2 and the outdoor radiator 7 can be conducted. When the A port and C port of the second three-way valve are conducted and the first water pump 6 is opened, the flow path between the cooling liquid outlet of the first heat exchanger 2 and the indoor air heater 10 can be conducted.

In another embodiment provided by the present invention, the thermal management system for a vehicle further includes a sixth cut-off valve 35 and a seventh cut-off valve 36, and the outlet of the first water pump 6 is connected to the inlet of the outdoor radiator 7 via the sixth cut-off valve 35 and connected to the inlet of the indoor air heater 10 via the seventh cut-off valve 36. When the sixth cut-off valve 35 is opened, the first water pump 6 is opened, and the seventh cut-off valve 36 is closed, the flow path between the cooling liquid outlet of the first heat exchanger 2 and the outdoor radiator 7 can be conducted. When the cut-off valve 36 is opened, the first water pump 6 is opened, and the sixth cut-off valve 35 is closed, the flow path between the cooling liquid outlet of the first heat exchanger 2 and the indoor air heater 10 can be conducted.

In addition, in order to reduce the control complexity of the thermal management system for a vehicle while the refrigerant returning to the compressor 1 is a gaseous refrigerant, in an embodiment not being part of the invention, the thermal management system for a vehicle further includes a first gas-liquid separation device 22, the outlet of the fourth flow path 14 is connected to an inlet of the first gas-liquid separation device 22, and the inlet of the compressor 1 is connected to a gas outlet of the first gas-liquid separation device 22 and the outlet of the third flow path 13.

In the prior art, the gas-liquid separation device is usually disposed at the inlet of the compressor, and the refrigerant returning to the compressor must pass through the gas-liquid separation device before returning to the compressor, which will increase the control complexity of the thermal management system for a vehicle. In the present invention, since the outlet of the fourth flow path 14 is connected to the inlet of the first gas-liquid separation device 22, and the inlet of the compressor 1 is connected to the gas outlet of the first gas-liquid separation device 22 and the outlet of the third flow path 13, the refrigerant flowing out of the outdoor heat exchanger 3 is separated into a gaseous refrigerant and a liquid refrigerant by the first gas-liquid separation device 22, and the refrigerant flowing out of the outlet of the indoor heat exchanger 5 will bypass the first gas-liquid separation device 22, that is, does not pass through the first gas-liquid separation device 22 but directly returns to the compressor 1, which will reduce the control complexity of the thermal management system for a vehicle.

Specifically, the gas-liquid separation device functions to separate the refrigerant that is about to enter the compressor into a gaseous refrigerant and a liquid refrigerant, and only the gaseous refrigerant returns to the compressor, so as to prevent the liquid refrigerant from entering the compressor to cause liquid shock of the compressor. The refrigerant is soluble with lubricating oil in the compressor, that is, the refrigerant will carry the lubricating oil in the compressor after passing through the compressor. If the degree of superheat of the refrigerant entering the compressor is less than 0, the liquid refrigerant will enter the compressor to cause liquid shock. If the degree of superheat is greater than 0, the refrigerant entering the compressor will carry less lubricating oil. Long-term operation of the compressor will cause abnormal internal lubrication of the compressor, causing internal wear of the compressor, which is not conducive to prolonging the service life of the compressor. Therefore, in the case where the gas-liquid separation device is disposed at the outlet of the compressor, the degree of superheat of the refrigerant at the inlet of the compressor needs to be controlled to be 0, which will avoid liquid shock and abnormal internal lubrication of the compressor. However, the control on the degree of superheat of the refrigerant at the inlet of the compressor inevitably increases the control complexity of the thermal management system for a vehicle.

In the refrigeration mode and the heating mode, the temperature of the refrigerant at the inlet of the compressor is different. The temperature of the refrigerant at the inlet of the compressor in refrigeration mode is higher than that in the heating mode, that is, the specific volume of the refrigerant at the inlet of the compressor in the refrigeration mode is smaller than that in the heating mode. Since the specific volume is inversely proportional to the density, the density of the refrigerant at the inlet of the compressor in the refrigeration mode will be greater than that in the heating mode. Therefore, under the same volume, the mass flow of the refrigerant at the inlet of the compressor in the refrigeration mode is greater than that in the heating mode, that is, the refrigerant entering the compressor carries more lubricating oil in the refrigeration mode than in the heating mode, which will not cause abnormal lubrication of the compressor. That is, in the refrigeration mode, the degree of superheat of the refrigerant that is about to flow into the compressor may not be controlled to be exactly equal to zero.

Based on this, the outlet of the outdoor heat exchanger 3 is connected to the inlet of the compressor 1 through the first gas-liquid separation device 22, while the outlet of the indoor heat exchanger 5 is directly connected to the inlet of the compressor 1 without depending on the first gas-liquid separation device 22. In this way, as shown in FIGS. 5 and 7, in the first refrigeration mode and the second refrigeration mode, the refrigerant flowing out of the outlet of the indoor heat exchanger 5 returns to the compressor 1 without passing through the first gas-liquid separation device 22, that is, in the first refrigeration mode and the second refrigeration mode, the degree of superheat of the refrigerant at the inlet of the compressor 1 is not controlled, which can reduce the control difficulty and control complexity of the thermal management system for a vehicle.

In addition, since the refrigerant releases heat to the cooling liquid in the first heat exchanger 2, a gas-liquid two-phase mixed refrigerant flows out of the outlet of the first heat exchanger 2. In order to prevent the gas-liquid two-phase mixed refrigerant from causing abnormal sound and the like in the first expansion valve 4, a second expansion valve 17 (described below), and the third expansion valve 31 or the expansion switch valve 33, the thermal management system for a vehicle may further include a second gas-liquid separation device 25, the refrigerant outlet of the first heat exchanger 2 is connected to an inlet of the second gas-liquid separation device 25, and a liquid outlet of the second gas-liquid separation device 25 is connected to the inlets of the first flow path 8 and the second flow path 9. The second gas-liquid separation device 25 performs gas-liquid separation on the gas-liquid two-phase mixed refrigerant flowing out of the refrigerant outlet of the first heat exchanger 2, so that the liquid refrigerant flows into the first flow path 8 and the second flow path 9.

In this embodiment not being part of the invention, the thermal management system for a vehicle may further include a third heat exchanger 23, the outlet of the second flow path 9 and the outlet of the outdoor heat exchanger 3 are both connected to a first refrigerant inlet of the third heat exchanger 23, a first refrigerant outlet of the third heat exchanger 23 is connected to the inlet of the indoor heat exchanger 5 through the first expansion valve 4, the outlet of the third flow path 13 is connected to a second refrigerant inlet of the third heat exchanger 23, and a second refrigerant outlet of the third heat exchanger 23 is connected to the inlet of the compressor 1; or, the outlet of the outdoor heat exchanger 3 is connected to the first refrigerant inlet of the third heat exchanger 23, the inlet of the first expansion valve 4 is connected to the first refrigerant outlet of the third heat exchanger 23 and the outlet of the second flow path 9, the outlet of the third flow path 13 is connected to the second refrigerant inlet of the third heat exchanger 23, and the second refrigerant outlet of the third heat exchanger 23 is connected to the inlet of the compressor 1. Thus, in at least one of the first refrigeration mode, the second refrigeration mode, the first dehumidification mode, the second dehumidification mode and the fourth dehumidification mode, the refrigerant that is about to flow into the indoor heat exchanger 5 through the first expansion valve 4 can exchange heat in the third heat exchanger 23 with the refrigerant flowing out of the indoor heat exchanger 5, and the refrigerant flowing out of the indoor heat exchanger 5 absorbs heat in the third heat exchanger 23 from the refrigerant that is about to flow into the indoor heat exchanger 5 through the first expansion valve 4, so that air can be supplemented to increase enthalpy before the refrigerant flowing out of the indoor heat exchanger 5 returns to the compressor 1.

It should be noted that the temperature of the refrigerant flowing out of the indoor heat exchanger 5 is approximately equal to the desired refrigeration temperature of the passenger compartment, the temperature of the refrigerant flowing out of the outdoor heat exchanger 3 is approximately equal to the temperature of the external environment, and when the passenger compartment is refrigerated or dehumidified, the temperature of the external environment is higher than the desired refrigeration temperature of the passenger compartment, so in the first refrigeration mode and the fourth dehumidification mode, the temperature of the refrigerant flowing out of the outdoor heat exchanger 3 is higher than that of the refrigerant flowing out of the indoor heat exchanger 5. Therefore, the refrigerant flowing out of the outdoor heat exchanger 3 can release heat to the refrigerant flowing out of the indoor heat exchanger 5 in the third heat exchanger 23. Similarly, in the second refrigeration mode, the first dehumidification mode and the second dehumidification mode, the temperature of the refrigerant after releasing heat in the first heat exchanger 2 is higher than that of the refrigerant flowing out of the indoor heat exchanger 5, so in the second refrigeration mode, the first dehumidification mode and the second dehumidification mode, the refrigerant flowing out of the first heat exchanger 2 can release heat to the refrigerant flowing out of the indoor heat exchanger 5 in the third heat exchanger 23.

In the technical field of electric vehicles, vehicle manufacturers seek to continuously shorten the charging time of a battery pack 18 when designing electric vehicles, and the shortening of the charging time of the battery pack 18 means that the battery pack 18 emits more heat during charging, and the temperature of the battery pack 18 is higher. The battery pack 18 needs to be cooled quickly to shorten the charging time of the battery pack 18 while keeping the temperature of the battery pack 18 moderately within its suitable working temperature range.

As mentioned above, in the first refrigeration mode, the refrigerant flowing out of the outlet of the compressor 1 releases heat to the external environment through the outdoor heat exchanger 3 and the outdoor radiator 7, so that the thermal management system for a vehicle provided by the present invention has relatively high refrigeration effect and refrigeration efficiency. Therefore, in order to quickly cool the battery pack 18, the thermal management system for a vehicle provided by the present invention further includes a second heat exchanger 16, a second expansion valve 17, a battery pack 18 and a second water pump 19. The outlet of the outdoor heat exchanger 3 and the outlet of the second flow path 9 are both connected to a refrigerant inlet of the second heat exchanger 16 through the second expansion valve 17, and a refrigerant outlet of the second heat exchanger 16 is connected to the inlet of the compressor 1; a first cooling liquid outlet of the second heat exchanger 16 is connected to an inlet of the battery pack 18, an outlet of the battery pack 18 is connected to a first cooling liquid inlet of the second heat exchanger 16, and the second water pump 19 is disposed on the flow path between the first cooling liquid outlet of the second heat exchanger 16 and the inlet of the battery pack 18, or the second water pump 19 is disposed on the flow path between the outlet of the battery pack 18 and the first cooling liquid inlet of the second heat exchanger 16.

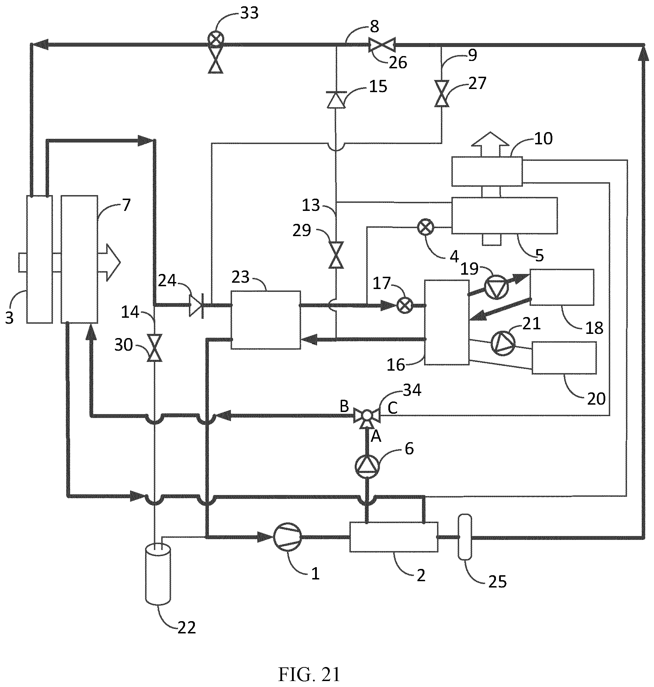

As such, the thermal management system for a vehicle provided by the present invention may have a first battery pack 18 cooling mode. In this mode, as shown in FIG. 21, the first flow path 8 is conducted, the second flow path 9 is cut off, the third flow path 13 is cut off, the fourth flow path 14 is cut off, the first through flow path 12 is conducted, the first throttling flow path 11 is cut off, the first expansion valve 4 is closed, the second expansion valve 17 is opened, the second water pump 19 is opened, and the cooling liquid outlet of the first heat exchanger 2 is connected to the outdoor radiator 7, so that the compressor 1, the first heat exchanger 2, the first flow path 8, the first through flow path 12, the outdoor heat exchanger 3, the second expansion valve 17, the second heat exchanger 16, and the compressor 1 are connected in series to form a refrigerant loop; the first water pump 6, the outdoor radiator 7, and the first heat exchanger 2 are connected in series to form a cooling liquid loop; the second water pump 19, the battery pack 18 and the second heat exchanger 16 are connected in series to form another cooling liquid loop; and the two cooling liquid loops exchange heat with the refrigerant loop through the first heat exchanger 2 and the second heat exchanger 16 respectively.

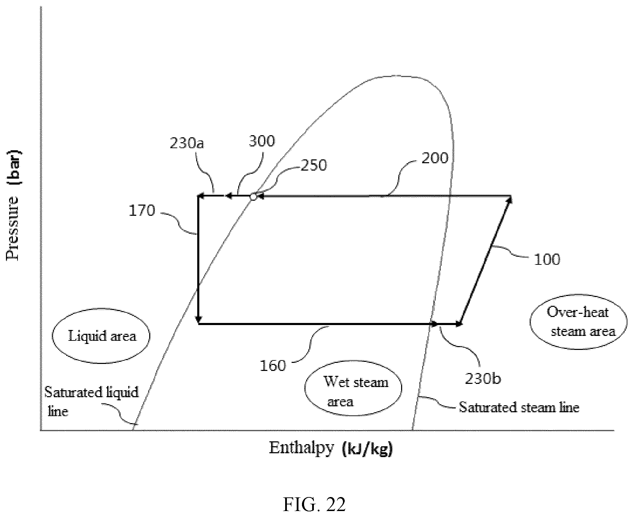

Specifically, as shown in FIG. 21, the high-temperature and high-pressure gaseous refrigerant discharged from the outlet of the compressor 1 flows into the first heat exchanger 2. In the first heat exchanger 2, the high-temperature and high-pressure gaseous refrigerant releases heat to low-temperature cooling liquid and loses its enthalpy (as shown by arrow 200 in FIG. 22), so that high-temperature cooling liquid flows out of the cooling liquid outlet of the first heat exchanger 2. The high-temperature cooling liquid is pumped by the first water pump 6 to flow into the outdoor radiator 7 and dissipates heat to the outside air in the outdoor radiator 7, and the low-temperature cooling liquid flowing out of the outlet of the outdoor radiator 7 returns to the first heat exchanger 2 through the cooling liquid inlet of the first heat exchanger 2 and continues to absorb the heat of the high-temperature and high-pressure gaseous refrigerant. The refrigerant that has released heat to the cooling liquid and lost its enthalpy flows into the refrigerant outlet of the first heat exchanger 2, and the refrigerant flows into the outdoor heat exchanger 3, releases heat to the outside in the outdoor heat exchanger 3, and continues to lose its enthalpy (as shown by arrow 300 in FIG. 21). At this time, the outdoor heat exchanger 3 serves as a condenser. The high-temperature and high-pressure gaseous refrigerant sequentially passes through the outdoor radiator 7 and the outdoor heat exchanger 3 to release heat, then flows into the second expansion valve 17, and is throttled and depressurized by the second expansion valve 17 to become a low-temperature and low-pressure gas-liquid two-phase refrigerant. The low-temperature and low-pressure gas-liquid two-phase refrigerant absorbs the heat of the cooling liquid in the second heat exchanger 16, so that low-temperature cooling liquid flows out of the first cooling liquid outlet of the second heat exchanger 16, wherein the low-temperature cooling liquid is used to absorb the heat of the battery pack 18 to cool the battery pack 18.

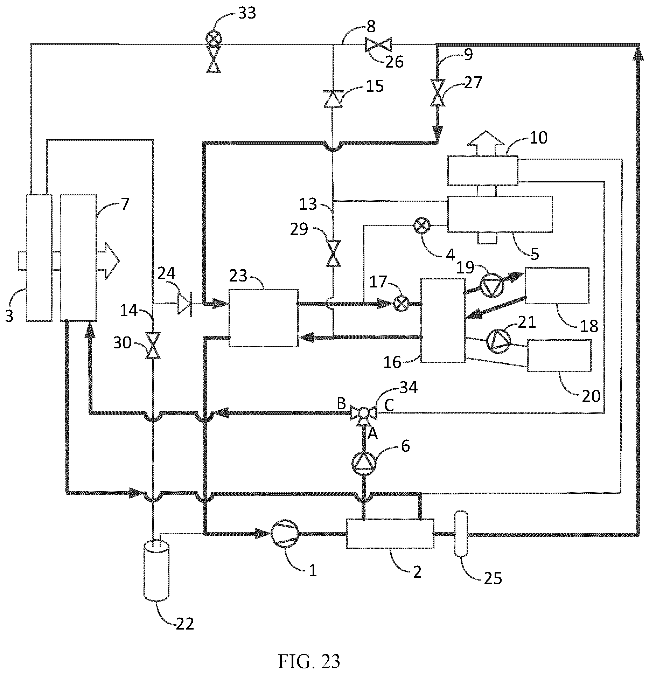

The thermal management system for a vehicle provided by the present invention may have a second battery pack 18 cooling mode. In this mode, as shown in FIG. 23, the first flow path 8 is cut off, the second flow path 9 is conducted, the third flow path 13 is cut off, the fourth flow path 14 is cut off, the first expansion valve 4 is closed, the second expansion valve 17 is opened, the second water pump 19 is opened, and the cooling liquid outlet of the first heat exchanger 2 is connected to the outdoor radiator 7, so that the compressor 1, the first heat exchanger 2, the second flow path 9, the second expansion valve 17, and the second heat exchanger 16 are connected in series to form a refrigerant loop; the first water pump 6, the outdoor radiator 7, and the first heat exchanger 2 are connected in series to form a cooling liquid loop; the second water pump 19, the battery pack 18 and the second heat exchanger 16 are connected in series to form another cooling liquid loop; and the two cooling liquid loops exchange heat with the refrigerant loop through the first heat exchanger 2 and the second heat exchanger 16 respectively.

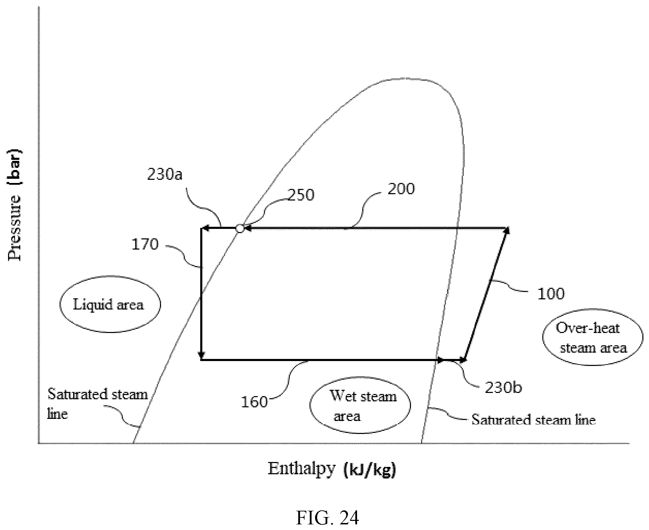

Specifically, as shown in FIG. 23, the high-temperature and high-pressure gaseous refrigerant discharged from the outlet of the compressor 1 flows into the first heat exchanger 2. In the first heat exchanger 2, the high-temperature and high-pressure gaseous refrigerant releases heat to low-temperature cooling liquid, so that high-temperature cooling liquid flows out of the cooling liquid outlet of the first heat exchanger 2. The high-temperature cooling liquid is pumped by the first water pump 6 to flow into the outdoor radiator 7, dissipates heat to the outside air in the outdoor radiator 7 and loses its enthalpy (as shown by arrow 200 in FIG. 24), and the low-temperature cooling liquid flowing out of the outlet of the outdoor radiator 7 returns to the first heat exchanger 2 through the cooling liquid inlet of the first heat exchanger 2 and continues to absorb the heat of the high-temperature and high-pressure gaseous refrigerant. The refrigerant that has released heat to the cooling liquid and lost its enthalpy flows into the refrigerant outlet of the first heat exchanger 2, the refrigerant flows into the second expansion valve 17 and is throttled and depressurized by the second expansion valve 17 to become a low-temperature and low-pressure gas-liquid two-phase refrigerant, and the low-temperature and low-pressure gas-liquid two-phase refrigerant absorbs the heat of the cooling liquid in the second heat exchanger 16, so that low-temperature cooling liquid flows out of the first cooling liquid outlet of the second heat exchanger 16, wherein the low-temperature cooling liquid is used to absorb the heat of the battery pack 18 to cool the battery pack 18.

The difference between the first battery pack 18 cooling mode and the second battery pack 18 cooling mode lies in that: in the first battery pack 18 cooling mode, the refrigerant loses its enthalpy through the outdoor heat exchanger 3 and the outdoor radiator 7 before entering the second heat exchanger 16 (as shown by arrows 200 and 300 in FIG. 22); in the second battery pack 18 cooling mode, the refrigerant does not flow through the outdoor heat exchanger 3 before entering the second heat exchanger 16, and the refrigerant loses its enthalpy through the outdoor radiator 7 (as shown by arrow 200 in FIG. 24); that is, the amount of enthalpy lost by the refrigerant before entering the second heat exchanger 16 in the first battery pack 18 cooling mode is greater than that in the second battery pack 18 cooling mode; as such, the content of liquid refrigerant in the gas-liquid two-phase refrigerant entering the second heat exchanger 16 in the first battery pack 18 cooling mode is greater than that in the second battery pack 18 cooling mode, and the higher the content of the liquid refrigerant in the second heat exchanger 16 is, the more heat the refrigerant absorbs in the second heat exchanger 16. Therefore, when the battery pack 18 is in a fast charging status and the temperature of the battery pack 18 is higher than a first preset threshold, the thermal management system for a vehicle may be in the first battery pack 18 cooling mode. When the battery pack 18 is in the fast charging status and the temperature of the battery pack 18 is higher than a second preset threshold and less than the first preset threshold, the thermal management system for a vehicle may be in the second battery pack 18 cooling mode. That is, the thermal management system for a vehicle may choose to use the first battery pack 18 cooling mode or the second battery pack 18 cooling mode to cool the battery pack 18 according to the current temperature of the battery pack 18. In addition, the first battery pack 18 cooling mode or the second battery pack 18 cooling mode may also be selected according to the heating rate of the battery pack 18. When the battery pack 18 has a relatively fast heating rate, the first battery pack 18 cooling mode may be selected to cool the battery pack 18. When the battery pack 18 has a relatively slow heating rate, the second cooling mode may be selected to cool the battery pack 18.

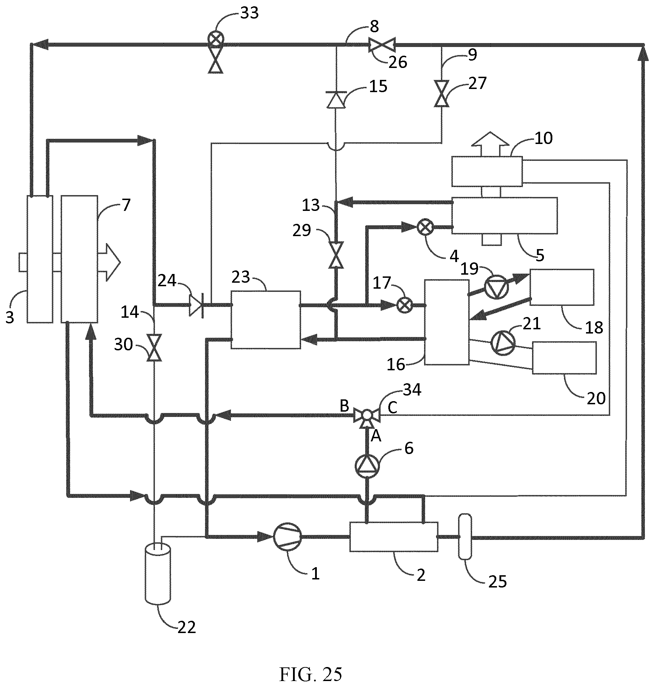

In addition, as shown in FIG. 25, the thermal management system for a vehicle may also have a first passenger compartment refrigeration and battery pack 18 cooling mode. This mode is a hybrid mode of the first refrigeration mode and the first battery pack 18 cooling mode described above. The refrigerant flowing out of the outlet of the outdoor heat exchanger 3 is divided into two streams, one is throttled and depressurized by the first expansion valve 4 and then enters the indoor heat exchanger 5, and the other is throttled and depressurized by the second expansion valve 17 and then enters the second heat exchanger 16. The principle of the first passenger compartment refrigeration and battery pack 18 cooling mode is similar to the principles of the first refrigeration mode and the first battery pack 18 cooling mode, so details are not described herein again.

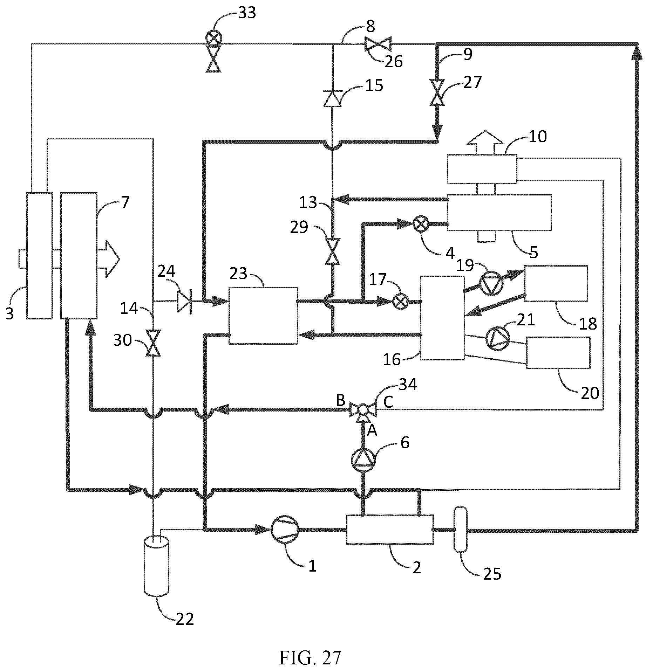

As shown in FIG. 27, the thermal management system for a vehicle may also have a second passenger compartment refrigeration and battery pack 18 cooling mode. This mode is a hybrid mode of the second refrigeration mode and the second battery pack 18 cooling mode described above. The refrigerant flowing out of the refrigerant outlet of the first heat exchanger 2 is divided into two streams, one is throttled and depressurized by the first expansion valve 4 and then enters the indoor heat exchanger 5, and the other is throttled and depressurized by the second expansion valve 17 and then enters the second heat exchanger 16. The principle of the second passenger compartment refrigeration and battery pack 18 cooling mode is similar to the principles of the second refrigeration mode and the second battery pack 18 cooling mode, so details are not described herein again.

In addition, in order to recover waste heat of an electronic device 20, in one embodiment provided in the present invention, the thermal management system for a vehicle further includes the electronic device 20 and a third water pump 21, the second cooling liquid outlet of the second heat exchanger 16 is connected to an inlet of the electronic device 20, an outlet of the electronic device 20 is connected to the second cooling liquid inlet of the second heat exchanger 16, and the third water pump 21 is disposed on the flow path between the second cooling liquid outlet of the second heat exchanger 16 and the inlet of the electronic device 20, or the third water pump 21 is disposed on the flow path between the outlet of the electronic device 20 and the second cooling liquid inlet of the second heat exchanger 16. The waste heat of the electronic device 20 can be recovered into the refrigerant loop through the second heat exchanger 16.

Here, the electronic device 20 refers to a device that operates by means of electricity and generates heat during the operation. For example, the electronic device 20 may include at least one of a motor, a charger, a motor controller, and a DC-DC converter.

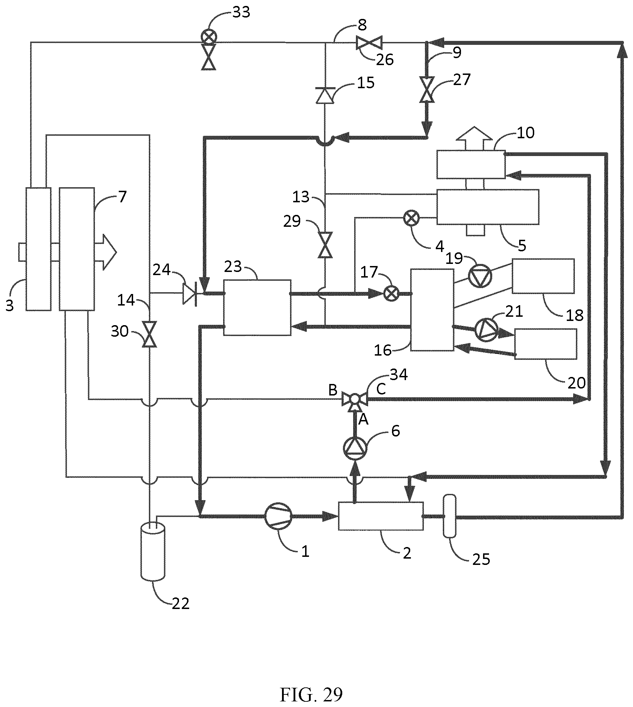

As shown in FIG. 29, the thermal management system for a vehicle provided by the present invention may have a heat recovery mode. In this mode, the high-temperature cooling liquid in the indoor air heater 10 releases heat to the passenger compartment to achieve heating of the passenger compartment, and the waste heat of the electronic device 20 is recovered into the refrigerant loop for increasing enthalpy and supplementing gas for the refrigerant at the inlet of the compressor 1. Specifically, in this mode, the first flow path 8 is cut off, the second flow path 9 is conducted, the third flow path 13 is cut off, the fourth flow path 14 is cut off, the first expansion valve 4 is closed, the second expansion valve 17 is opened, the third water pump 21 is opened, and the cooling liquid outlet of the first heat exchanger 2 is connected to the indoor air heater 10, so that the compressor 1, the first heat exchanger 2, the second flow path 9, the second expansion valve 17, and the second heat exchanger 16 are connected in series to form a refrigerant loop; the first water pump 6, the outdoor radiator 7, and the first heat exchanger 2 are connected in series to form a cooling liquid loop; the third water pump 21, the electronic device 20, and the second heat exchanger 16 are connected in series to form another cooling liquid loop; and the two cooling liquid loops exchange heat with the refrigerant loop through the first heat exchanger 2 and the second heat exchanger 16 respectively.

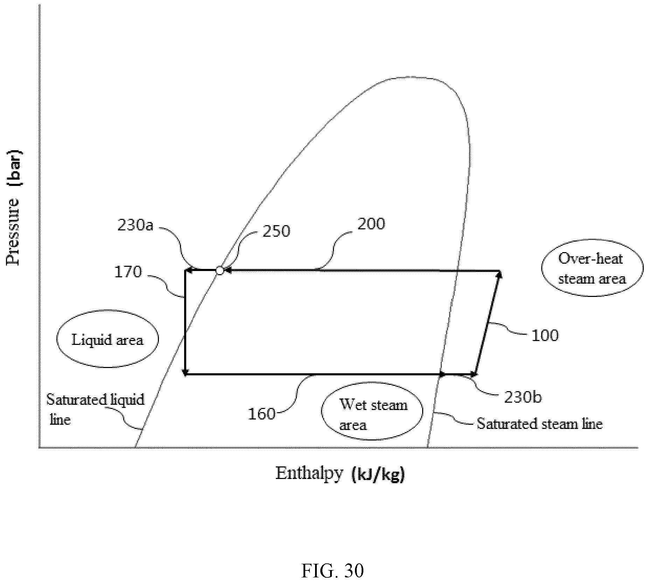

In the heat recovery mode, the refrigerant exchanges heat in the second heat exchanger 16 with the cooling liquid that absorbs heat from the electronic device 20, to absorb the heat of the cooling liquid, so that the enthalpy-increased refrigerant flows out of the refrigerant outlet of the second heat exchanger 16 (as shown by arrow 160 in FIG. 30), to achieve the purposes of increasing enthalpy and supplementing gas for the refrigerant at the inlet of the compressor 1.

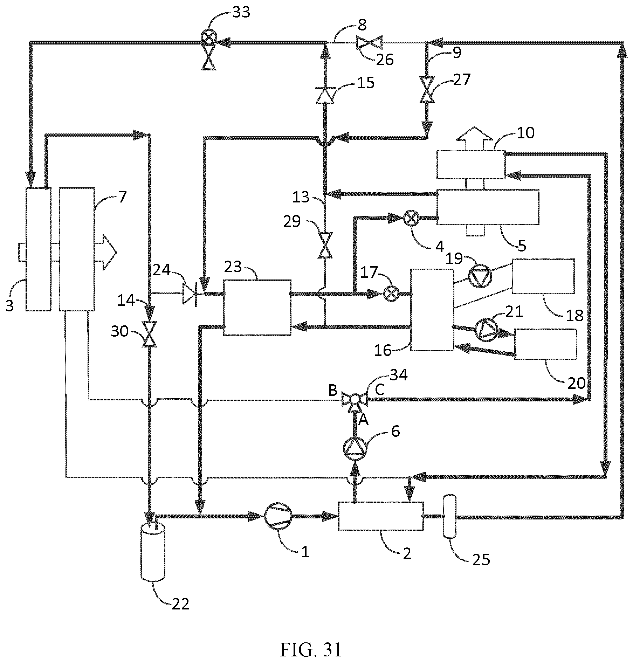

As shown in FIG. 31, the thermal management system for a vehicle provided by the present invention may have a first heat pump and heat recovery mode. In this mode, the high-temperature cooling liquid in the indoor air heater 10 and the cooling liquid in the indoor heat exchanger 5 both release heat to the passenger compartment, and the waste heat of the electronic device 20 is recovered into the refrigerant loop for increasing enthalpy and supplementing gas for the refrigerant at the inlet of the compressor 1. In this mode, the first flow path 8 is cut off, the second flow path 9 is conducted, the third flow path 13 is cut off, the fourth flow path 14 is conducted, the first through flow path 12 is cut off, the first throttling flow path 11 is conducted, the first expansion valve 4 is opened, the second expansion valve 17 is opened, the third water pump 21 is opened, and the cooling liquid outlet of the first heat exchanger 2 is connected to the indoor air heater 10, so that the compressor 1, the first heat exchanger 2, the second flow path 9, the first expansion valve 4, the indoor heat exchanger 5, the first one-way valve 15, the first throttling flow path 11, the outdoor heat exchanger 3, and the fourth flow path 14 are connected in series to form a refrigerant loop; the first water pump 6, the indoor air heater 10, and the first heat exchanger 2 are connected in series to form a cooling liquid loop; the third water pump 21, the electronic device 20, and the second heat exchanger 16 are connected in series to form another cooling liquid loop; and the two cooling liquid loops exchange heat with the refrigerant loop through the first heat exchanger 2 and the second heat exchanger 16 respectively.

The first heat pump and heat recovery mode is similar to the first heat pump heating mode mentioned above. The difference is that in the first heat pump and heat recovery mode, the third water pump 21 and the second expansion valve 17 are both opened, so that the refrigerant can exchange heat in the second heat exchanger 16 with the cooling liquid that absorbs heat from the electronic device 20 to absorb the heat of the cooling liquid, and the enthalpy-increased refrigerant flows out of the refrigerant outlet of the second heat exchanger 16. The difference between the first heat pump and heat recovery mode and the heat recovery mode lies in that, in the first heat pump and heat recovery mode, the first expansion valve 4 is opened, and the opening of the first expansion valve 4 is adjusted such that the refrigerant flows into the indoor heat exchanger 5 and releases heat to the passenger compartment in the indoor heat exchanger 5 to preheat the air that is about to flow through the indoor air heater 10.

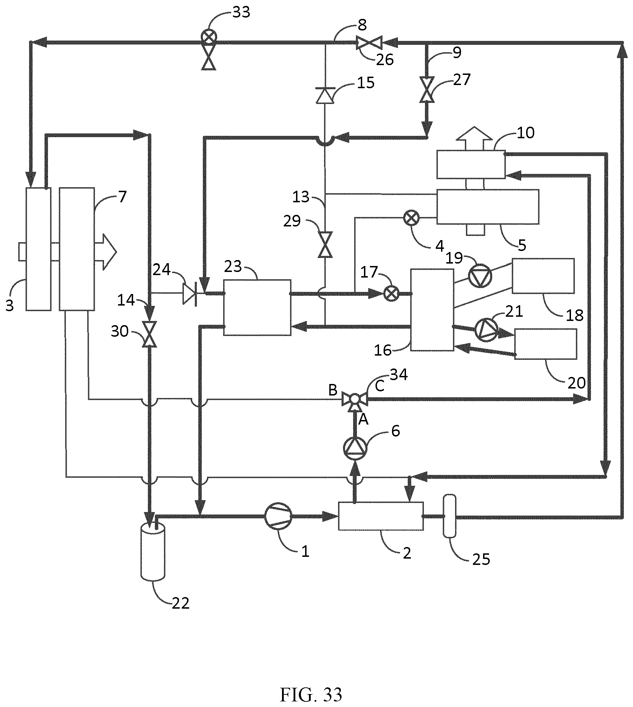

As shown in FIG. 33, the thermal management system for a vehicle provided by the present invention may have a second heat pump and heat recovery mode. In this mode, the first flow path 8 is conducted, the second flow path 9 is conducted, the third flow path 13 is conducted, the fourth flow path 14 is conducted, the first throttling flow path 11 is conducted, the first through flow path 12 is cut off, the first expansion valve 4 is closed, the second expansion valve 17 is opened, the third water pump 21 is opened, and the cooling liquid outlet of the first heat exchanger 2 is connected to the indoor air heater 10, so that the compressor 1, the first heat exchanger 2, the first flow path 8, the first throttling flow path 11, the outdoor heat exchanger 3, and the fourth flow path 14 are connected in series to form a refrigerant loop; the compressor 1, the first heat exchanger 2, the second flow path 9, the second expansion valve 17, and the second heat exchanger 16 are connected in series to form another refrigerant loop; the first water pump 6, the indoor air heater 10, and the first heat exchanger 2 are connected in series to form a cooling liquid loop; and the third water pump 21, the electronic device 20, and the second heat exchanger 16 are connected in series to form another cooling liquid loop. In this mode, the cooling liquid flowing out of the refrigerant outlet of the first heat exchanger 2 is divided into two streams, one flows into the second heat exchanger 16 through the second expansion valve 17 and absorbs the heat of the electronic device 20 in the second heat exchanger 16 to increase the enthalpy of the refrigerant at the inlet of the compressor 1, and the other flows into the outdoor heat exchanger 3 through the first throttling flow path 11 and absorbs the heat of the outside air in the outdoor heat exchanger 3 to increase the enthalpy of the refrigerant.

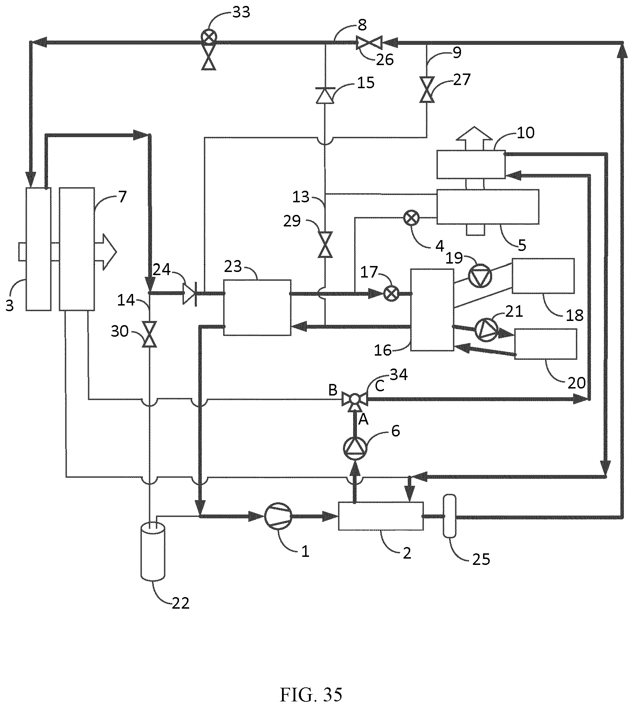

As shown in FIG. 35, the thermal management system for a vehicle provided by the present invention may also have a third heat pump and heat recovery mode. In this mode, the first flow path 8 is conducted, the second flow path 9 is cut off, the third flow path 13 is cut off, the fourth flow path 14 is cut off, the first throttling flow path 11 is conducted, the first through flow path 12 is cut off, the first expansion valve 4 is closed, the second expansion valve 17 is opened, the third water pump 21 is opened, and the cooling liquid outlet of the first heat exchanger 2 is connected to the indoor air heater 10, so that the compressor 1, the first heat exchanger 2, the first flow path 8, the first throttling flow path 11, the outdoor heat exchanger 3, the second expansion valve 17, and the second heat exchanger 16 are connected in series to form a refrigerant loop; the first water pump 6, the indoor air heater 10, and the first heat exchanger 2 are connected in series to form a cooling liquid loop; the third water pump 21, the electronic device 20, and the second heat exchanger 16 are connected in series to form another cooling liquid loop; and the cooling liquid in the two cooling liquid loops exchanges heat with the refrigerant in the refrigerant loop through the first heat exchanger 2 and the second heat exchanger 16. In this mode, the refrigerant flowing out of the outlet of the outdoor heat exchanger 3 does not directly return to the compressor 1, but first flows through the second heat exchanger 16, absorbs heat in the second heat exchanger 16 from the cooling liquid which has absorbed heat from the electronic device 20 to increase enthalpy and supplement gas, and then returns to the compressor 1, which is conducive to improving the heating capacity of the passenger compartment in a low-temperature environment (when the external environmental heat absorbed by the refrigerant at the outdoor heat exchanger 3 is limited).

With regard to the embodiment of the invention provided with the first gas-liquid separation device 22, the outlet of the fourth flow path 14 is connected to the inlet of the first gas-liquid separation device 22, and the inlet of the compressor 1 is connected to the gas outlet of the first gas-liquid separation device 22, the outlet of the third flow path 13 and the refrigerant outlet of the second heat exchanger 16. As such, the refrigerant flowing out of the refrigerant outlet of the second heat exchanger 16 may not pass through the first gas-liquid separation device 22 but directly returns to the compressor 1, so that the degree of superheat of the refrigerant flowing out of the refrigerant outlet of the second heat exchanger 16 does not need to be controlled, which is beneficial to reducing the control complexity of the thermal management system for a vehicle.

With regard to the above embodiment of the invention, the thermal management system for a vehicle further includes a third heat exchanger 23. The outlet of the second flow path 9 and the outlet of the outdoor heat exchanger 3 are both connected to the first refrigerant inlet of the third heat exchanger 23, the first refrigerant outlet of the third heat exchanger 23 is connected to the inlet of the indoor heat exchanger 5 through the first expansion valve 4 and connected to the refrigerant inlet of the second heat exchanger 16 through the second expansion valve 17, the outlet of the third flow path 13 and the refrigerant outlet of the second heat exchanger 16 are both connected to the second refrigerant inlet of the third heat exchanger 23, and the second refrigerant outlet of the third heat exchanger 23 is connected to the inlet of the compressor 1; or, the outlet of the outdoor heat exchanger 3 is connected to the first refrigerant inlet of the third heat exchanger 23, the inlet of the first expansion valve 4 and the inlet of the second expansion valve 17 are both connected to the first refrigerant outlet of the third heat exchanger 23 and the outlet of the second flow path 9, the outlet of the third flow path 13 and the refrigerant outlet of the second heat exchanger 16 are both connected to the second refrigerant inlet of the third heat exchanger 23, and the second refrigerant outlet of the third heat exchanger 23 is connected to the inlet of the compressor 1. As such, in at least one of the first battery pack 18 cooling mode, the second battery pack 18 cooling mode, the first passenger compartment refrigeration and battery pack 18 cooling mode, the second passenger compartment refrigeration and battery pack 18 cooling mode, the heat recovery mode, the first heat pump and heat recovery mode, the second heat pump and heat recovery mode, and the third heat pump and heat recovery mode, the refrigerant that is about to flow into the indoor heat exchanger 5 and/or the third heat exchanger 23 can exchange heat in the third heat exchanger 23 with the refrigerant flowing out of the indoor heat exchanger 5 and/or the third heat exchanger 23, and the refrigerant flowing out of the indoor heat exchanger 5 and/or the third heat exchanger 23 absorbs the heat of the refrigerant that is about to flow into the indoor heat exchanger 5 and/or the third heat exchanger 23, so that the refrigerant flowing out of the indoor heat exchanger 5 and/or the third heat exchanger 23 can be supplemented with gas to increase its enthalpy before returning to the compressor 1.

With regard to the embodiment provided with the third heat exchanger 23, the inlet of the compressor 1 is connected to the gas outlet of the first gas-liquid separation device 22 and the second refrigerant outlet of the third heat exchanger 23. That is, the refrigerant flowing out of the second refrigerant outlet of the third heat exchanger 23 does not pass through the first gas-liquid separation device 22 but directly returns to the compressor 1.

Optionally, the thermal management system for a vehicle further includes a second one-way valve 24. In an embodiment provided by the present invention, the outlet of the outdoor heat exchanger 3 is connected to the first refrigerant inlet of the third heat exchanger 23 through the second one-way valve 24. In another embodiment provided by the present invention, the second one-way valve 24 is disposed at the first refrigerant outlet of the third heat exchanger 23. Here, the second one-way valve 24 can prevent the refrigerant from flowing back into the outdoor heat exchanger 3.

Hereinafter, the cycle processes and principles in the main operating modes of the thermal management system for a vehicle provided by the present invention will be described with reference to FIGS. 5 to 36, taking the embodiment in FIG. 1 as an example. The cycle processes and principles of the system in other embodiments (for example, FIGS. 2 to 4) are similar to those in FIG. 1, so details are not described herein again.

For ease of understanding, before the main operating modes of the thermal management system for a vehicle provided by the present invention are described, the pressure-enthalpy diagram shown in, for example, FIG. 6 will be described first. In this pressure-enthalpy diagram, the abscissa is the enthalpy of the refrigerant, the enthalpy gradually increases from the left end to the right end of the abscissa, the ordinate is the pressure of the refrigerant, and the pressure gradually increases from the lower end to the upper end of the ordinate. The pressure-enthalpy diagram has a saturated liquid line and a saturated steam line, the left side of the saturated liquid line is a liquid area, and the refrigerant in this area is in a liquid state; the right side of the saturated steam line is a superheated steam area, and the refrigerant in this area is in a gaseous state; the area between the saturated liquid line and the saturated steam line is a wet steam area, that is, a gas-liquid coexistence area, and the refrigerant in this area is in a gas-liquid two-phase mixed state.

Mode 1: first refrigeration mode. In this mode, as shown in FIG. 5, the first cut-off valve 26 is opened, the second cut-off valve 27 is closed, the expansion switch valve 33 is in a through flow state (that is, the through flow channel inside the expansion switch valve 33 is conducted, and the throttling flow channel is cut off), the third cut-off valve 29 is opened, the fourth cut-off valve 30 is closed, the first expansion valve 4 is opened, the second expansion valve 17 is closed, the first water pump 6 is opened, the A and B ports of the second three-way valve are conducted, the second water pump 19 is closed, and the third water pump 21 is closed. As shown in FIGS. 5 and 6, the refrigerant entering the compressor 1 is a gaseous refrigerant, the compressor 1 compresses the gaseous refrigerant so that the outlet of the compressor 1 discharges a high-temperature and high-pressure gaseous refrigerant (as shown by arrow 100 in FIG. 6), the high-temperature and high-pressure gaseous refrigerant flows into the first heat exchanger 2 and releases heat to low-temperature cooling liquid in the first heat exchanger 2 to lose its enthalpy (as shown by arrow 200 in FIG. 6), high-temperature cooling liquid flows out of the cooling liquid outlet of the first heat exchanger 2, the high-temperature cooling liquid is pumped by the first water pump 6 to flow into the outdoor radiator 7 and dissipates heat to outside air in the outdoor radiator 7, and the low-temperature cooling liquid flowing out of the outlet of the outdoor radiator 7 returns to the first heat exchanger 2 through the cooling liquid inlet of the first heat exchanger 2 and continues to absorb the heat of the high-temperature and high-pressure gaseous refrigerant. The refrigerant that has released heat to the cooling liquid and lost its enthalpy flows into the refrigerant outlet of the first heat exchanger 2, the refrigerant passes through the second gas-liquid separation device 25 for gas-liquid separation, a liquid refrigerant flows out of the outlet of the second gas-liquid separation device 25 (as shown by point 250 in FIG. 6), the liquid refrigerant releases heat to the outside air in the outdoor heat exchanger 3 and loses its enthalpy (as shown by arrow 300 in FIG. 6), the liquid refrigerant flowing out of the outlet of the outdoor heat exchanger 3 enters the third heat exchanger 23 and loses its enthalpy in the third heat exchanger 23 (as shown by arrow 230a in FIG. 6), the liquid refrigerant flowing out of the first refrigerant outlet of the third heat exchanger 23 is throttled and depressurized by the first expansion valve 4, the isenthalpic pressure of the liquid refrigerant in the first expansion valve 4 drops and crosses the saturated liquid line (as shown by arrow 400 in FIG. 6), a low-temperature and low-pressure gas-liquid two-phase refrigerant flows out of the outlet of the first expansion valve 4, the low-temperature and low-pressure gas-liquid two-phase refrigerant absorbs the heat of the passenger compartment in the indoor heat exchanger 5 and obtains an enthalpy (as shown by arrow 500 in FIG. 6) to reduce the temperature of the passenger compartment, the refrigerant flowing out of the outlet of the indoor heat exchanger 5 enters the third heat exchanger 23, obtains the enthalpy in the third heat exchanger 23 that is lost in the third heat exchanger 23 by the liquid refrigerant flowing out of the outlet of the indoor heat exchanger 3 (as shown by arrow 230b in FIG. 6) and crosses the saturated steam line, a gaseous refrigerant flows out of the second refrigerant outlet of the third heat exchanger 23, and the gaseous refrigerant returns to the compressor 1. In the aforementioned first refrigeration mode, the refrigerant first passes through the first heat exchanger 2 to lose its enthalpy by means of the outdoor radiator 7, and then passes through the outdoor heat exchanger 3 to lose its enthalpy again. The first refrigeration mode can have better refrigeration effect and refrigeration efficiency in a high-temperature environment.

Mode 2: second refrigeration mode. In this mode, as shown in FIG. 7, the first cut-off valve 26 is closed, the second cut-off valve 27 is opened, the expansion switch valve 33 is closed, the third cut-off valve 29 is opened, the fourth cut-off valve 30 is closed, the first expansion valve 4 is opened, the second expansion valve 17 is closed, the first water pump 6 is opened, the A and B ports of the second three-way valve are conducted, the second water pump 19 is closed, and the third water pump 21 is closed. As shown in FIGS. 7 and 8, the refrigerant entering the compressor 1 is a gaseous refrigerant, the compressor 1 compresses the gaseous refrigerant so that the outlet of the compressor 1 discharges a high-temperature and high-pressure gaseous refrigerant (as shown by arrow 100 in FIG. 8), the high-temperature and high-pressure gaseous refrigerant flows into the first heat exchanger 2 and releases heat to low-temperature cooling liquid in the first heat exchanger 2 to lose its enthalpy (as shown by arrow 200 in FIG. 8), high-temperature cooling liquid flows out of the cooling liquid outlet of the first heat exchanger 2, the high-temperature cooling liquid is pumped by the first water pump 6 to flow into the outdoor radiator 7 and dissipates heat to outside air in the outdoor radiator 7, and the low-temperature cooling liquid flowing out of the outlet of the outdoor radiator 7 returns to the first heat exchanger 2 through the cooling liquid inlet of the first heat exchanger 2 and continues to absorb the heat of the high-temperature and high-pressure gaseous refrigerant. The refrigerant that has released heat to the cooling liquid and lost its enthalpy flows into the refrigerant outlet of the first heat exchanger 2, the refrigerant passes through the second gas-liquid separation device 25 for gas-liquid separation, a liquid refrigerant flows out of the outlet of the second gas-liquid separation device 25 (as shown by point 250 in FIG. 8), the liquid refrigerant then flows into the third heat exchanger 23 and loses its enthalpy in the third heat exchanger 23 (as shown by arrow 230a in FIG. 8), the liquid refrigerant flowing out of the first refrigerant outlet of the third heat exchanger 23 is throttled and depressurized by the first expansion valve 4, the isenthalpic pressure of the liquid refrigerant in the first expansion valve 4 drops and crosses the saturated liquid line (as shown by arrow 400 in FIG. 8), a low-temperature and low-pressure gas-liquid two-phase refrigerant flows out of the outlet of the first expansion valve 4, the low-temperature and low-pressure gas-liquid two-phase refrigerant absorbs the heat of the passenger compartment in the indoor heat exchanger 5 and obtains an enthalpy (as shown by arrow 500 in FIG. 8) to reduce the temperature of the passenger compartment, the refrigerant flowing out of the outlet of the indoor heat exchanger 5 enters the third heat exchanger 23, obtains the enthalpy in the third heat exchanger 23 that is lost in the third heat exchanger 23 by the liquid refrigerant flowing out of the outlet of the second gas-liquid separation device (as shown by arrow 230b in FIG. 8) and crosses the saturated steam line, a gaseous refrigerant flows out of the second refrigerant outlet of the third heat exchanger 23, and the gaseous refrigerant returns to the compressor 1. In the aforementioned second refrigeration mode, the refrigerant passes through the first heat exchanger 2 and loses its enthalpy by means of the outdoor radiator 7, and the refrigerant does not flow through the outdoor heat exchanger 3. The environmental temperature when the second refrigeration mode is applied may be lower than that when the first refrigeration mode is applied.

Mode 3: first heat pump heating mode. In this mode, as shown in FIG. 9, the first cut-off valve 26 is closed, the second cut-off valve 27 is opened, the expansion switch valve 33 is in a throttling state (that is, the throttling flow channel inside the expansion switch valve 33 is conducted, and the through flow channel is cut off), the third cut-off valve 29 is closed, the fourth cut-off valve 30 is opened, the first expansion valve 4 is opened, the second expansion valve 17 is closed, the first water pump 6 is opened, the A and C ports of the second three-way valve are conducted, the second water pump 19 is closed, and the third water pump 21 is closed. As shown in FIGS. 9 and 10, the refrigerant entering the compressor 1 is a gaseous refrigerant, the compressor 1 compresses the gaseous refrigerant so that the outlet of the compressor 1 discharges a high-temperature and high-pressure gaseous refrigerant (as shown by arrow 100 in FIG. 10), the high-temperature and high-pressure gaseous refrigerant flows into the first heat exchanger 2 and releases heat to low-temperature cooling liquid in the first heat exchanger 2 to lose its enthalpy (as shown by arrow 200 in FIG. 10), high-temperature cooling liquid flows out of the cooling liquid outlet of the first heat exchanger 2, the high-temperature cooling liquid is pumped by the first water pump 6 to flow into the indoor air heater 10 and dissipates heat to the passenger compartment in the indoor air heater 10 to increase the temperature of the passenger compartment, and the low-temperature cooling liquid flowing out of the outlet of the indoor air heater 10 returns to the first heat exchanger 2 through the cooling liquid inlet of the first heat exchanger 2 and continues to absorb the heat of the high-temperature and high-pressure gaseous refrigerant. The refrigerant that has released heat to the cooling liquid and lost its enthalpy flows into the refrigerant outlet of the first heat exchanger 2, the refrigerant passes through the second gas-liquid separation device 25 for gas-liquid separation, a liquid refrigerant flows out of the outlet of the second gas-liquid separation device 25 (as shown by point 250 in FIG. 10), the liquid refrigerant then flows into the third heat exchanger 23, the liquid refrigerant does not obtain or lose enthalpy in the third heat exchanger 23, that is, the third heat exchanger 23 serves as a through flow channel at this time, the isenthalpic pressure of the liquid refrigerant flowing out of the first refrigerant outlet of the third heat exchanger 23 drops in the first expansion valve 4 (as shown by arrow 400 in FIG. 10), a gas-liquid two-phase refrigerant flows out of the outlet of the first expansion valve 4, the gas-liquid two-phase refrigerant releases heat to the passenger compartment in the indoor heat exchanger 5 and loses its enthalpy (as shown by arrow 500 in FIG. 10) to prevent the air that is about to flow through the indoor air heater 10, the isenthalpic pressure of a gaseous refrigerant flowing out of the outlet of the indoor heat exchanger 5 drops in the expansion switch valve 33 and crosses the saturated liquid line (as shown by arrow 330 in FIG. 10), a low-temperature and low-pressure gas-liquid two-phase mixed refrigerant flows out of the outlet of the expansion switch valve 33, the low-temperature and low-pressure gas-liquid two-phase mixed refrigerant absorbs heat from the outside air in the outdoor heat exchanger 3 and obtains an enthalpy (as shown by arrow 300 in FIG. 10), the gas-liquid two-phase mixed refrigerant flowing out of the outlet of the outdoor heat exchanger 3 is separated into gas and liquid in the first gas-liquid separation device 22, the gaseous refrigerant flows out of the gas outlet of the first gas-liquid separation device 22 (as shown by point 220 in FIG. 10), and the gaseous refrigerant returns to the compressor 1. In this mode, both the indoor heat exchanger 5 and the indoor air heater 10 release heat to the passenger compartment, and the indoor heat exchanger 5 can preheat the air that is about to flow through the indoor air heater 10, thereby quickly heating the passenger compartment. It should be noted that in this mode, the gaseous refrigerant entering the compressor 1 needs to be controlled for the degree of superheat, and the degree of superheat of the refrigerant at the inlet of the compressor 1 needs to be controlled to be equal to 0, that is, the pressure and enthalpy value of the refrigerant entering the compressor 1 are located on the saturated steam line.

Mode 4: second heat pump heating mode. In this mode, as shown in FIG. 11, the first cut-off valve 26 is opened, the second cut-off valve 27 is closed, the expansion switch valve 33 is in a throttling state (that is, the throttling flow channel inside the expansion switch valve 33 is conducted, and the through flow channel is cut off), the third cut-off valve 29 is closed, the fourth cut-off valve 30 is opened, the first expansion valve 4 is closed, the second expansion valve 17 is closed, the first water pump 6 is opened, the A and C ports of the second three-way valve are conducted, the second water pump 19 is closed, and the third water pump 21 is closed. As shown in FIGS. 11 and 12, the refrigerant entering the compressor 1 is a gaseous refrigerant, the compressor 1 compresses the gaseous refrigerant so that the outlet of the compressor 1 discharges a high-temperature and high-pressure gaseous refrigerant (as shown by arrow 100 in FIG. 12), the high-temperature and high-pressure gaseous refrigerant flows into the first heat exchanger 2 and releases heat to low-temperature cooling liquid in the first heat exchanger 2 to lose its enthalpy (as shown by arrow 200 in FIG. 12), high-temperature cooling liquid flows out of the cooling liquid outlet of the first heat exchanger 2, the high-temperature cooling liquid is pumped by the first water pump 6 to flow into the indoor air heater 10 and dissipates heat to the passenger compartment in the indoor air heater 10 to increase the temperature of the passenger compartment, and the low-temperature cooling liquid flowing out of the outlet of the indoor air heater 10 returns to the first heat exchanger 2 through the cooling liquid inlet of the first heat exchanger 2 and continues to absorb the heat of the high-temperature and high-pressure gaseous refrigerant. The refrigerant that has released heat to the cooling liquid and lost its enthalpy flows into the refrigerant outlet of the first heat exchanger 2, the refrigerant passes through the second gas-liquid separation device 25 for gas-liquid separation, a liquid refrigerant flows out of the outlet of the second gas-liquid separation device 25 (as shown by point 250 in FIG. 12), the isenthalpic pressure of the liquid refrigerant drops in the expansion switch valve 33 and crosses the saturated liquid line (as shown by arrow 330 in FIG. 12), a low-temperature and low-pressure gas-liquid two-phase mixed refrigerant flows out of the outlet of the expansion switch valve 33, the low-temperature and low-pressure gas-liquid two-phase mixed refrigerant absorbs heat from the outside air in the outdoor heat exchanger 3 and obtains an enthalpy (as shown by arrow 300 in FIG. 12), the gas-liquid two-phase mixed refrigerant flowing out of the outlet of the outdoor heat exchanger 3 is separated into gas and liquid in the first gas-liquid separation device 22, the gaseous refrigerant flows out of the gas outlet of the first gas-liquid separation device 22 (as shown by point 220 in FIG. 12), and the gaseous refrigerant returns to the compressor 1. In this mode, the indoor air heater 10 releases heat to the passenger compartment, and the refrigerant does not flow through the indoor heat exchanger 5. It should be noted that in this mode, the gaseous refrigerant entering the compressor 1 needs to be controlled for the degree of superheat, and the degree of superheat of the refrigerant at the inlet of the compressor 1 needs to be controlled to be equal to 0, that is, the pressure and enthalpy value of the refrigerant entering the compressor 1 are located on the saturated steam line. The environmental temperature when the second heat pump heating mode is applied may be higher than that when the first heat pump heating mode is applied.

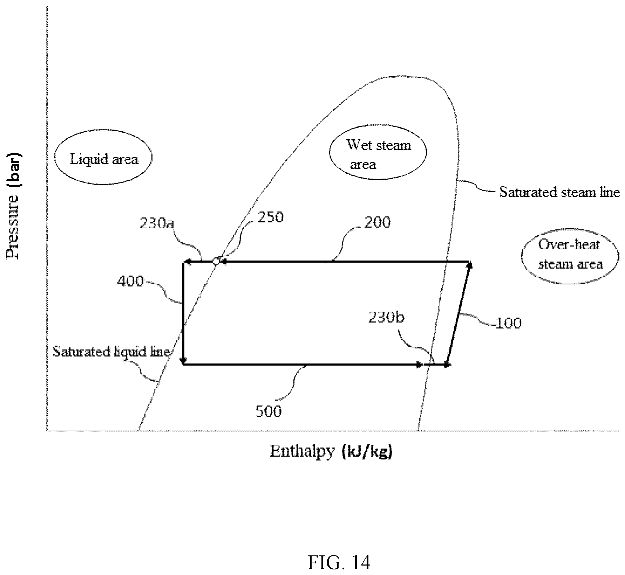

Mode 5: first dehumidification mode. In this mode, as shown in FIG. 13, the first cut-off valve 26 is closed, the second cut-off valve 27 is opened, the expansion switch valve 33 is closed, the third cut-off valve 29 is opened, the fourth cut-off valve 30 is closed, the first expansion valve 4 is opened, the second expansion valve 17 is closed, the first water pump 6 is opened, the A and C ports of the second three-way valve are conducted, the second water pump 19 is closed, and the third water pump 21 is closed. As shown in FIGS. 13 and 14, in this mode, the refrigerant entering the compressor 1 is a gaseous refrigerant, the compressor 1 compresses the gaseous refrigerant so that the outlet of the compressor 1 discharges a high-temperature and high-pressure gaseous refrigerant (as shown by arrow 100 in FIG. 14), the high-temperature and high-pressure gaseous refrigerant flows into the first heat exchanger 2 and releases heat to low-temperature cooling liquid in the first heat exchanger 2 to lose its enthalpy (as shown by arrow 200 in FIG. 14), high-temperature cooling liquid flows out of the cooling liquid outlet of the first heat exchanger 2, the high-temperature cooling liquid is pumped by the first water pump 6 to flow into the indoor air heater 10 and dissipates heat to the passenger compartment in the indoor air heater 10 to maintain the temperature of the passenger compartment, and the low-temperature cooling liquid flowing out of the outlet of the indoor air heater 10 returns to the first heat exchanger 2 through the cooling liquid inlet of the first heat exchanger 2 and continues to absorb the heat of the high-temperature and high-pressure gaseous refrigerant. The refrigerant that has released heat to the cooling liquid and lost its enthalpy flows into the refrigerant outlet of the first heat exchanger 2, the refrigerant passes through the second gas-liquid separation device 25 for gas-liquid separation, a liquid refrigerant flows out of the outlet of the second gas-liquid separation device 25 (as shown by point 250 in FIG. 14), the liquid refrigerant then flows into the third heat exchanger 23 and loses its enthalpy in the third heat exchanger 23 (as shown by arrow 230a in FIG. 14), the liquid refrigerant flowing out of the first refrigerant outlet of the third heat exchanger 23 is throttled and depressurized by the first expansion valve 4, the isenthalpic pressure of the liquid refrigerant in the first expansion valve 4 drops and crosses the saturated liquid line (as shown by arrow 400 in FIG. 14), a low-temperature and low-pressure gas-liquid two-phase refrigerant flows out of the outlet of the first expansion valve 4, the low-temperature and low-pressure gas-liquid two-phase refrigerant absorbs the heat of the passenger compartment in the indoor heat exchanger 5 and obtains an enthalpy (as shown by arrow 500 in FIG. 14) so that wet air in the passenger compartment can be condensed into water drops on the surface of the indoor heat exchanger 5 to reduce the humidity of the air in the passenger compartment, the refrigerant flowing out of the outlet of the indoor heat exchanger 5 enters the third heat exchanger 23, obtains the enthalpy in the third heat exchanger 23 that is lost in the third heat exchanger 23 by the liquid refrigerant flowing out of the outlet of the second gas-liquid separation device (as shown by arrow 230b in FIG. 14) and crosses the saturated steam line, a gaseous refrigerant flows out of the second refrigerant outlet of the third heat exchanger 23, and the gaseous refrigerant returns to the compressor 1. The aforementioned first dehumidification mode can be applied to dehumidify the passenger compartment when the environmental temperature is 10°C to 15°C.

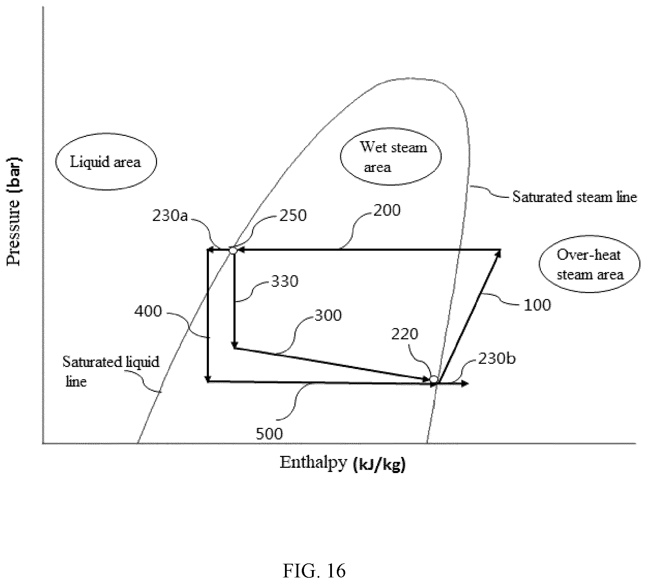

Mode 6: second dehumidification mode. In this mode, as shown in FIG. 15, the first cut-off valve 26 is opened, the second cut-off valve 27 is opened, the expansion switch valve 33 is in a throttling state (that is, the throttling flow channel inside the expansion switch valve 33 is conducted, and the through flow channel is cut off), the third cut-off valve 29 is opened, the fourth cut-off valve 30 is opened, the first expansion valve 4 is opened, the second expansion valve 17 is closed, the first water pump 6 is opened, the A and C ports of the second three-way valve are conducted, the second water pump 19 is closed, and the third water pump 21 is closed. In this mode, as shown in FIGS. 15 and 16, the refrigerant entering the compressor 1 is a gaseous refrigerant, the compressor 1 compresses the gaseous refrigerant so that the outlet of the compressor 1 discharges a high-temperature and high-pressure gaseous refrigerant (as shown by arrow 100 in FIG. 16), the high-temperature and high-pressure gaseous refrigerant flows into the first heat exchanger 2 and releases heat to low-temperature cooling liquid in the first heat exchanger 2 to lose its enthalpy (as shown by arrow 200 in FIG. 16), high-temperature cooling liquid flows out of the cooling liquid outlet of the first heat exchanger 2, the high-temperature cooling liquid is pumped by the first water pump 6 to flow into the indoor air heater 10 and dissipates heat to the passenger compartment in the indoor air heater 10 to maintain the temperature of the passenger compartment, and the low-temperature cooling liquid flowing out of the outlet of the indoor air heater 10 returns to the first heat exchanger 2 through the cooling liquid inlet of the first heat exchanger 2 and continues to absorb the heat of the high-temperature and high-pressure gaseous refrigerant. The refrigerant that has released heat to the cooling liquid and lost its enthalpy flows into the refrigerant outlet of the first heat exchanger 2, the refrigerant passes through the second gas-liquid separation device 25 for gas-liquid separation, a liquid refrigerant flows out of the outlet of the second gas-liquid separation device 25 (as shown by point 250 in FIG. 16), the liquid refrigerant is divided into two streams, one flows into the third heat exchanger 23 and loses its enthalpy in the third heat exchanger 23 (as shown by arrow 230a in FIG. 16), the liquid refrigerant flowing out of the first refrigerant outlet of the third heat exchanger 23 is throttled and depressurized by the first expansion valve 4, the isenthalpic pressure of the liquid refrigerant in the first expansion valve 4 drops and crosses the saturated liquid line (as shown by arrow 400 in FIG. 16), a low-temperature and low-pressure gas-liquid two-phase refrigerant flows out of the outlet of the first expansion valve 4, the low-temperature and low-pressure gas-liquid two-phase refrigerant absorbs the heat of the passenger compartment in the indoor heat exchanger 5 and obtains an enthalpy (as shown by arrow 500 in FIG. 16) so that wet air in the passenger compartment can be condensed into water drops on the surface of the indoor heat exchanger 5 to reduce the humidity of the air in the passenger compartment, the isenthalpic pressure of the other stream of liquid refrigerant in the expansion switch valve 33 drops and the liquid refrigerant enters the wet stream area (as shown by arrow 330 in FIG. 16), a gas-liquid two-phase mixed refrigerant flows out of the outlet of the expansion switch valve 33, and the gas-liquid two-phase mixed refrigerant absorbs heat from the outside air in the outdoor heat exchanger 3 and obtains an enthalpy (as shown by arrow 300 in FIG. 16). The refrigerant flowing out of the outlet of the indoor heat exchanger 5 enters the third heat exchanger 23, obtains the enthalpy in the third heat exchanger 23 that is lost in the third heat exchanger 23 by the liquid refrigerant flowing out of the outlet of the second gas-liquid separation device (as shown by arrow 230b in FIG. 16) and crosses the saturated steam line, the gas-liquid two-phase mixed refrigerant flowing out of the outlet of the outdoor heat exchanger 3 is separated into gas and liquid in the first gas-liquid separation device 22, the gaseous refrigerant flows out of the gas outlet of the first gas-liquid separation device 22 (as shown by point 220 in FIG. 16), and the gaseous refrigerant converges with the gaseous refrigerant flowing out of the second refrigerant outlet of the third heat exchanger 23 and then returns to the compressor 1.

The aforementioned second dehumidification mode can be applied to dehumidify the passenger compartment when the environmental temperature is 5°C to 10°C. It should be noted that in the second dehumidification mode, the gaseous refrigerant entering the compressor 1 needs to be controlled for the degree of superheat, and the degree of superheat of the refrigerant at the inlet of the compressor 1 needs to be controlled to be equal to 0, that is, the pressure and enthalpy value of the refrigerant entering the compressor 1 are located on the saturated steam line, as shown in FIG. 16, the starting end of arrow 100 is located on the saturated steam line.

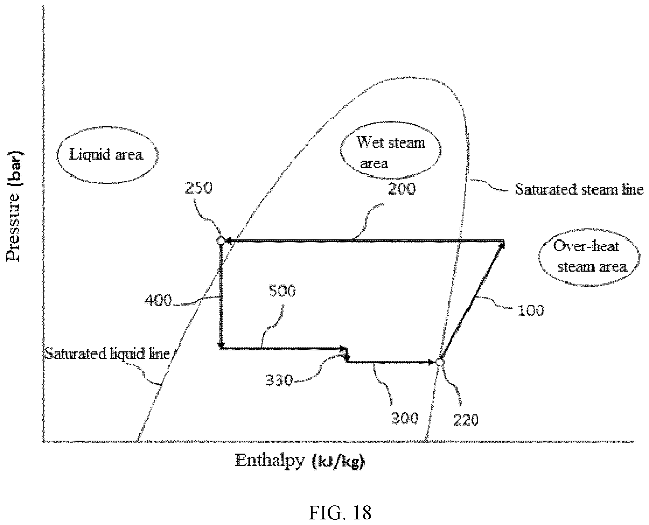

Mode 7: third dehumidification mode. In this mode, as shown in FIG. 17, the first cut-off valve 26 is closed, the second cut-off valve 27 is opened, the expansion switch valve 33 is in a throttling state (that is, the throttling flow channel inside the expansion switch valve 33 is conducted, and the through flow channel is cut off), the third cut-off valve 29 is closed, the fourth cut-off valve 30 is opened, the first expansion valve 4 is opened, the second expansion valve 17 is closed, the first water pump 6 is opened, the A and C ports of the second three-way valve are conducted, the second water pump 19 is closed, and the third water pump 21 is closed. In this mode, as shown in FIGS. 17 and 18, the refrigerant entering the compressor 1 is a gaseous refrigerant, the compressor 1 compresses the gaseous refrigerant so that the outlet of the compressor 1 discharges a high-temperature and high-pressure gaseous refrigerant (as shown by arrow 100 in FIG. 18), the high-temperature and high-pressure gaseous refrigerant flows into the first heat exchanger 2 and releases heat to low-temperature cooling liquid in the first heat exchanger 2 to lose its enthalpy (as shown by arrow 200 in FIG. 18), high-temperature cooling liquid flows out of the cooling liquid outlet of the first heat exchanger 2, the high-temperature cooling liquid is pumped by the first water pump 6 to flow into the indoor air heater 10 and dissipates heat to the passenger compartment in the indoor air heater 10 to maintain the temperature of the passenger compartment, and the low-temperature cooling liquid flowing out of the outlet of the indoor air heater 10 returns to the first heat exchanger 2 through the cooling liquid inlet of the first heat exchanger 2 and continues to absorb the heat of the high-temperature and high-pressure gaseous refrigerant. The refrigerant that has released heat to the cooling liquid and lost its enthalpy flows into the refrigerant outlet of the first heat exchanger 2, the refrigerant passes through the second gas-liquid separation device 25 for gas-liquid separation, a liquid refrigerant flows out of the outlet of the second gas-liquid separation device 25 (as shown by point 250 in FIG. 18), the liquid refrigerant then flows into the third heat exchanger 23, the liquid refrigerant does not obtain or lose enthalpy in the third heat exchanger 23, that is, the third heat exchanger 23 serves as a through flow channel at this time, the isenthalpic pressure of the liquid refrigerant flowing out of the first refrigerant outlet of the third heat exchanger 23 drops in the first expansion valve 4 (as shown by arrow 400 in FIG. 18), a gas-liquid two-phase refrigerant flows out of the outlet of the first expansion valve 4, the gas-liquid two-phase refrigerant absorbs the heat of the passenger compartment in the indoor heat exchanger 5 and obtains an enthalpy (as shown by arrow 500 in FIG. 18) so that wet air in the passenger compartment is condensed into water drops on the surface of the indoor heat exchanger 5 to reduce the humidity of air in the passenger compartment, the isenthalpic pressure of a gaseous refrigerant flowing out of the outlet of the indoor heat exchanger 5 drops in the expansion switch valve 33, a gas-liquid two-phase mixed refrigerant flows out of the outlet of the expansion switch valve 33, the gas-liquid two-phase mixed refrigerant absorbs heat from the outside air in the outdoor heat exchanger 3 and obtains an enthalpy (as shown by arrow 300 in FIG. 18), the gas-liquid two-phase mixed refrigerant flowing out of the outlet of the outdoor heat exchanger 3 is separated into gas and liquid in the first gas-liquid separation device 22, the gaseous refrigerant flows out of the gas outlet of the first gas-liquid separation device 22 (as shown by point 220 in FIG. 18), and the gaseous refrigerant returns to the compressor 1.

The aforementioned third dehumidification mode can be applied to dehumidify the passenger compartment when the environmental temperature is less than 5°C. It should be noted that in the third dehumidification mode, the gaseous refrigerant entering the compressor 1 needs to be controlled for the degree of superheat, and the degree of superheat of the refrigerant at the inlet of the compressor 1 needs to be controlled to be equal to 0, that is, the pressure and enthalpy value of the refrigerant entering the compressor 1 are located on the saturated steam line, as shown in FIG. 18, the starting end of arrow 100 is located on the saturated steam line.

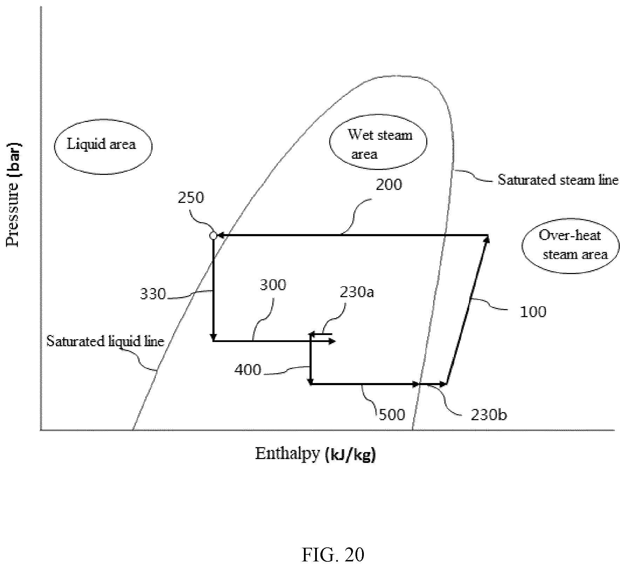

Mode 8: fourth dehumidification mode. As shown in FIG. 19, the first cut-off valve 26 is opened, the second cut-off valve 27 is closed, the expansion switch valve 33 is in a throttling state (that is, the throttling flow channel inside the expansion switch valve 33 is conducted, and the through flow channel is cut off), the third cut-off valve 29 is opened, the fourth cut-off valve 30 is closed, the first expansion valve 4 is opened, the second expansion valve 17 is closed, the first water pump 6 is opened, the A and C ports of the second three-way valve are conducted, the second water pump 19 is closed, and the third water pump 21 is closed. As shown in FIGS. 19 and 20, the refrigerant entering the compressor 1 is a gaseous refrigerant, the compressor 1 compresses the gaseous refrigerant so that the outlet of the compressor 1 discharges a high-temperature and high-pressure gaseous refrigerant (as shown by arrow 100 in FIG. 20), the high-temperature and high-pressure gaseous refrigerant flows into the first heat exchanger 2 and releases heat to low-temperature cooling liquid in the first heat exchanger 2 to lose its enthalpy (as shown by arrow 200 in FIG. 20), high-temperature cooling liquid flows out of the cooling liquid outlet of the first heat exchanger 2, the high-temperature cooling liquid is pumped by the first water pump 6 to flow into the indoor air heater 10 and dissipates heat to the passenger compartment in the indoor air heater 10 to maintain the temperature of the passenger compartment, and the low-temperature cooling liquid flowing out of the outlet of the indoor air heater 10 returns to the first heat exchanger 2 through the cooling liquid inlet of the first heat exchanger 2 and continues to absorb the heat of the high-temperature and high-pressure gaseous refrigerant. The refrigerant that has released heat to the cooling liquid and lost its enthalpy flows into the refrigerant outlet of the first heat exchanger 2, the refrigerant passes through the second gas-liquid separation device 25 for gas-liquid separation, a liquid refrigerant flows out of the outlet of the second gas-liquid separation device 25 (as shown by point 250 in FIG. 20), the isenthalpic pressure of the liquid refrigerant drops in the expansion switch valve 33 and crosses the saturated liquid line (as shown by arrow 330 in FIG. 20), a gas-liquid two-phase mixed refrigerant flows out of the outlet of the expansion switch valve 33, the gas-liquid two-phase mixed refrigerant absorbs heat from the outside air in the outdoor heat exchanger 3 and obtains an enthalpy (as shown by arrow 300 in FIG. 20), the liquid refrigerant flowing out of the outlet of the outdoor heat exchanger 3 enters the third heat exchanger 23 and loses its enthalpy in the third heat exchanger 23 (as shown by arrow 230a in FIG. 20), the liquid refrigerant flowing out of the first refrigerant outlet of the third heat exchanger 23 is throttled and depressurized by the first expansion valve 4, the isenthalpic pressure of the liquid refrigerant in the first expansion valve 4 drops (as shown by arrow 400 in FIG. 20), a gas-liquid two-phase refrigerant flowing out of the outlet of the first expansion valve 4 absorbs the heat of the passenger compartment in the indoor heat exchanger 5 and obtains an enthalpy (as shown by arrow 500 in FIG. 20) so that wet air in the passenger compartment is condensed into water drops on the surface of the indoor heat exchanger 5 to reduce the humidity of air in the passenger compartment, the refrigerant flowing out of the outlet of the indoor heat exchanger 5 enters the third heat exchanger 23, obtains the enthalpy in the third heat exchanger 23 that is lost in the third heat exchanger 23 by the liquid refrigerant flowing out of the outlet of the indoor heat exchanger 3 (as shown by arrow 230b in FIG. 20) and crosses the saturated steam line, a gaseous refrigerant flows out of the second refrigerant outlet of the third heat exchanger 23, and the gaseous refrigerant finally returns to the compressor 1.

The aforementioned fourth dehumidification mode can be applied to dehumidify the passenger compartment when the environmental temperature is less than 5°C. It should be noted that in the fourth dehumidification mode, the gaseous refrigerant entering the compressor 1 does not need to be controlled for the degree of superheat, that is, the degree of superheat of the refrigerant at the inlet of the compressor 1 may be greater than 0, as shown in FIG. 20, the starting end of arrow 100 may be located on the right of the saturated steam line.

Mode 9: first battery pack 18 cooling mode. As shown in FIG. 21, in this mode, the first cut-off valve 26 is opened, the second cut-off valve 27 is closed, the expansion switch valve 33 is in a through flow state (that is, the through flow channel inside the expansion switch valve 33 is conducted, and the throttling flow channel is cut off), the third cut-off valve 29 is closed, the fourth cut-off valve 30 is closed, the first expansion valve 4 is closed, the second expansion valve 17 is opened, the first water pump 6 is opened, the A and B ports of the second three-way valve are conducted, the second water pump 19 is opened, and the third water pump 21 is closed. As shown in FIGS. 21 and 22, the refrigerant entering the compressor 1 is a gaseous refrigerant, the compressor 1 compresses the gaseous refrigerant so that the outlet of the compressor 1 discharges a high-temperature and high-pressure gaseous refrigerant (as shown by arrow 100 in FIG. 22), the high-temperature and high-pressure gaseous refrigerant flows into the first heat exchanger 2 and releases heat to low-temperature cooling liquid in the first heat exchanger 2 to lose its enthalpy (as shown by arrow 200 in FIG. 22), high-temperature cooling liquid flows out of the cooling liquid outlet of the first heat exchanger 2, the high-temperature cooling liquid is pumped by the first water pump 6 to flow into the outdoor radiator 7 and dissipates heat to outside air in the outdoor radiator 7, and the low-temperature cooling liquid flowing out of the outlet of the outdoor radiator 7 returns to the first heat exchanger 2 through the cooling liquid inlet of the first heat exchanger 2 and continues to absorb the heat of the high-temperature and high-pressure gaseous refrigerant. The refrigerant that has released heat to the cooling liquid and lost its enthalpy flows into the refrigerant outlet of the first heat exchanger 2, the refrigerant passes through the second gas-liquid separation device 25 for gas-liquid separation, a liquid refrigerant flows out of the outlet of the second gas-liquid separation device 25 (as shown by point 250 in FIG. 22), the liquid refrigerant is directly conducted in the expansion switch valve 33 without being throttled and depressurized, the liquid refrigerant stills flows out of the outlet of the expansion switch valve 33, the liquid refrigerant releases heat to outside air in the outdoor heat exchanger 3 and loses its enthalpy (as shown by arrow 300 in FIG. 22), the enthalpy-reduced liquid refrigerant flowing out of the outlet of the outdoor heat exchanger 3 enters the third heat exchanger 23 and continues to lose its enthalpy in the third heat exchanger 23 (as shown by arrow 230a in FIG. 22), the liquid refrigerant flowing out of the first refrigerant outlet of the third heat exchanger 23 is throttled and depressurized by the second expansion valve 17, the isenthalpic pressure of the liquid refrigerant drops in the second expansion valve 17 (as shown by arrow 170 in FIG. 22), the low-temperature and low-pressure gas-liquid two-phase refrigerant flowing out of the outlet of the second expansion valve 17 absorbs heat in the second heat exchanger 16 from the high-temperature cooling liquid that has absorbed heat from the battery pack 18 and obtains an enthalpy (as shown by arrow 160 in FIG. 22), low-temperature cooling liquid flows out of the first cooling liquid outlet of the second heat exchanger 16, and this low-temperature cooling liquid can cool the battery pack 18. The refrigerant flowing out of the refrigerant outlet of the second heat exchanger 16 obtains the enthalpy in the third heat exchanger 23 that is lost in the third heat exchanger 23 by the liquid refrigerant flowing out of the outlet of the outdoor heat exchanger 3 (as shown by arrow 230b in FIG. 22), a gaseous refrigerant flows out of the second refrigerant outlet of the third heat exchanger 23, and the gaseous refrigerant finally returns to the compressor 1. In the aforementioned first battery pack 18 cooling mode, the refrigerant first passes through the first heat exchanger 2 to lose its enthalpy by means of the outdoor radiator 7, and then passes through the outdoor heat exchanger 3 to lose its enthalpy again. The first battery pack 18 cooling mode can achieve quick cooling of the battery pack 18 in a high-temperature environment.

Mode 10: second battery pack 18 cooling mode. As shown in FIG. 23, in this mode, the first cut-off valve 26 is closed, the second cut-off valve 27 is opened, the expansion switch valve 33 is closed, the third cut-off valve 29 is closed, the fourth cut-off valve 30 is closed, the first expansion valve 4 is closed, the second expansion valve 17 is opened, the first water pump 6 is opened, the A and B ports of the second three-way valve are conducted, the second water pump 19 is opened, and the third water pump 21 is closed. As shown in FIGS. 23 and 24, the refrigerant entering the compressor 1 is a gaseous refrigerant, the compressor 1 compresses the gaseous refrigerant so that the outlet of the compressor 1 discharges a high-temperature and high-pressure gaseous refrigerant (as shown by arrow 100 in FIG. 24), the high-temperature and high-pressure gaseous refrigerant flows into the first heat exchanger 2 and releases heat to low-temperature cooling liquid in the first heat exchanger 2 to lose its enthalpy (as shown by arrow 200 in FIG. 24), high-temperature cooling liquid flows out of the cooling liquid outlet of the first heat exchanger 2, the high-temperature cooling liquid is pumped by the first water pump 6 to flow into the outdoor radiator 7 and dissipates heat to outside air in the outdoor radiator 7, and the low-temperature cooling liquid flowing out of the outlet of the outdoor radiator 7 returns to the first heat exchanger 2 through the cooling liquid inlet of the first heat exchanger 2 and continues to absorb the heat of the high-temperature and high-pressure gaseous refrigerant. The refrigerant that has released heat to the cooling liquid and lost its enthalpy flows into the refrigerant outlet of the first heat exchanger 2, the refrigerant passes through the second gas-liquid separation device 25 for gas-liquid separation, a liquid refrigerant flows out of the outlet of the second gas-liquid separation device 25 (as shown by point 250 in FIG. 24), the liquid refrigerant then flows into the third heat exchanger 23 and loses its enthalpy in the third heat exchanger 23 (as shown by arrow 230a in FIG. 24), the liquid refrigerant flowing out of the first refrigerant outlet of the third heat exchanger 23 is throttled and depressurized by the second expansion valve 17, the isenthalpic pressure of the liquid refrigerant drops in the second expansion valve 17 and crosses the saturated liquid line (as shown by arrow 170 in FIG. 24), a low-temperature and low-pressure gas-liquid two-phase refrigerant flows out of the outlet of the second expansion valve 17, the low-temperature and low-pressure gas-liquid two-phase refrigerant absorbs heat in the second heat exchanger 16 from the high-temperature cooling liquid that has absorbed heat from the battery pack 18 and obtains an enthalpy (as shown by arrow 160 in FIG. 24), low-temperature cooling liquid flows out of the first cooling liquid outlet of the second heat exchanger 16, and this low-temperature cooling liquid can cool the battery pack 18. The refrigerant flowing out of the refrigerant outlet of the second heat exchanger 16 obtains the enthalpy in the third heat exchanger 23 that is lost in the third heat exchanger 23 by the liquid refrigerant flowing out of the outlet of the second gas-liquid separation device 25 (as shown by arrow 230b in FIG. 24), a gaseous refrigerant flows out of the second refrigerant outlet of the third heat exchanger 23, and the gaseous refrigerant finally returns to the compressor 1.

In the first battery pack 18 cooling mode and the second battery pack 18 cooling mode described above, the refrigerant does not flow through the first gas-liquid separation device 22 before entering the compressor 1, and the gaseous refrigerant entering the compressor 1 does not need to be controlled for the degree of preheat, that is, the degree of superheat of the refrigerant at the inlet of the compressor 1 may be greater than 0, as shown in FIGS. 22 and 24, the starting end of arrow 100 may be located on the right of the saturated steam line.

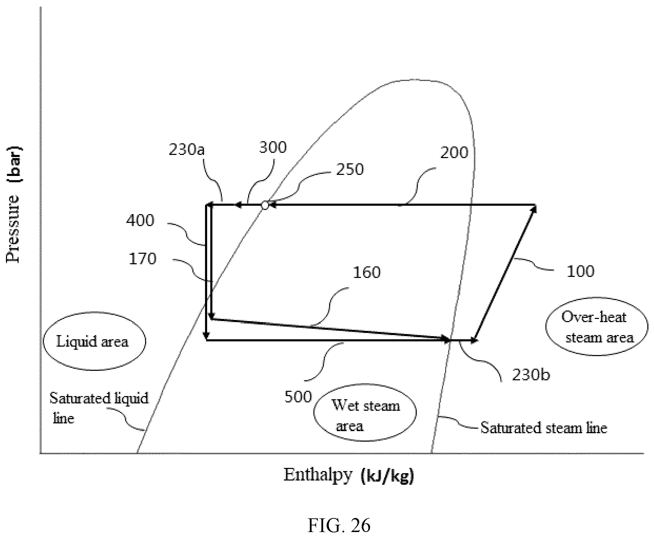

Mode 11: first passenger compartment refrigeration and battery pack 18 cooling mode. As shown in FIG. 25, in this mode, the first cut-off valve 26 is opened, the second cut-off valve 27 is closed, the expansion switch valve 33 is in a through flow state (that is, the through flow channel inside the expansion switch valve 33 is conducted, and the throttling flow channel is cut off), the third cut-off valve 29 is opened, the fourth cut-off valve 30 is closed, the first expansion valve 4 is opened, the second expansion valve 17 is opened, the first water pump 6 is opened, the A and B ports of the second three-way valve are conducted, the second water pump 19 is opened, and the third water pump 21 is closed. As shown in FIGS. 25 and 26, the refrigerant entering the compressor 1 is a gaseous refrigerant, the compressor 1 compresses the gaseous refrigerant so that the outlet of the compressor 1 discharges a high-temperature and high-pressure gaseous refrigerant (as shown by arrow 100 in FIG. 26), the high-temperature and high-pressure gaseous refrigerant flows into the first heat exchanger 2 and releases heat to low-temperature cooling liquid in the first heat exchanger 2 to lose its enthalpy (as shown by arrow 200 in FIG. 26), high-temperature cooling liquid flows out of the cooling liquid outlet of the first heat exchanger 2, the high-temperature cooling liquid is pumped by the first water pump 6 to flow into the outdoor radiator 7 and dissipates heat to outside air in the outdoor radiator 7, and the low-temperature cooling liquid flowing out of the outlet of the outdoor radiator 7 returns to the first heat exchanger 2 through the cooling liquid inlet of the first heat exchanger 2 and continues to absorb the heat of the high-temperature and high-pressure gaseous refrigerant. The refrigerant that has released heat to the cooling liquid and lost its enthalpy flows into the refrigerant outlet of the first heat exchanger 2, the refrigerant passes through the second gas-liquid separation device 25 for gas-liquid separation, a liquid refrigerant flows out of the outlet of the second gas-liquid separation device 25 (as shown by point 250 in FIG. 26), the liquid refrigerant releases heat to the outside air in the outdoor heat exchanger 3 and loses its enthalpy (as shown by arrow 300 in FIG. 26), the liquid refrigerant flowing out of the outlet of the outdoor heat exchanger 3 enters the third heat exchanger 23 and loses its enthalpy in the third heat exchanger 23 (as shown by arrow 230a in FIG. 26), the liquid refrigerant flowing out of the first refrigerant outlet of the third heat exchanger 23 is divided into two streams, one stream is throttled and depressurized in the first expansion valve 4, the isenthalpic pressure of the liquid refrigerant drops in the first expansion valve 4 and crosses the saturated liquid line (as indicated by arrow 400 in FIG. 26), a gas-liquid two-phase refrigerant flows out of the outlet of the first expansion valve 4, the gas-liquid two-phase refrigerant absorbs the heat of the passenger compartment in the indoor heat exchanger 5 and obtains an enthalpy (as shown by arrow 500 in FIG. 26) to reduce the temperature of the passenger compartment, the other stream is throttled and depressurized in the second expansion valve 17, the isenthalpic pressure of the liquid refrigerant drops in the second expansion valve 17 and crosses the saturated liquid line (as indicated by arrow 170 in FIG. 26), a low-temperature and low-pressure gas-liquid two-phase refrigerant flows out of the outlet of the second expansion valve 17, the low-temperature and low-pressure gas-liquid two-phase refrigerant absorbs heat in the second heat exchanger 16 from the high-temperature cooling liquid that has absorbed heat from the battery pack 18 and obtains an enthalpy (as shown by arrow 160 in FIG. 26), low-temperature cooling liquid flows out of the first cooling liquid outlet of the second heat exchanger 16, and this low-temperature cooling liquid can cool the battery pack 18. The refrigerant flowing out of the refrigerant outlet of the second heat exchanger 16 converges with the refrigerant flowing out of the outlet of the indoor heat exchanger 5, the converged refrigerant enters the third heat exchanger 23 and obtains the enthalpy in the third heat exchanger 23 that is lost in the third heat exchanger 23 by the liquid refrigerant flowing out of the outlet of the outdoor heat exchanger 3 (as shown by arrow 230b in FIG. 26), a gaseous refrigerant flows out of the second refrigerant outlet of the third heat exchanger 23, and the gaseous refrigerant returns to the compressor 1.

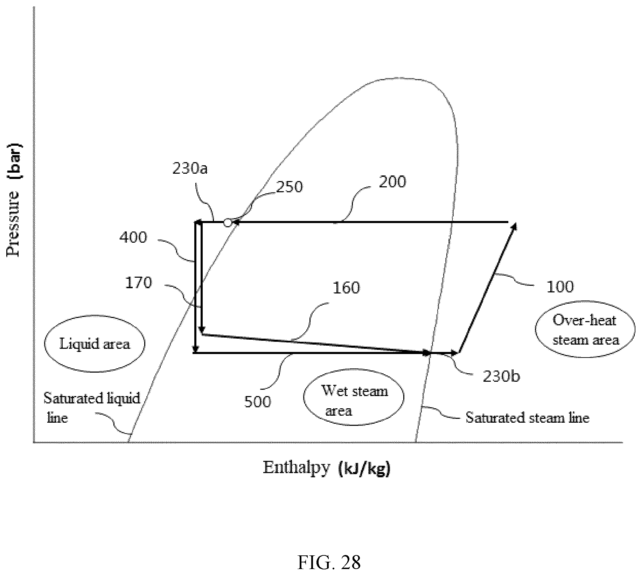

Mode 12: second passenger compartment refrigeration and battery pack 18 cooling mode. As shown in FIG. 27, in this mode, the first cut-off valve 26 is closed, the second cut-off valve 27 is opened, the expansion switch valve 33 is closed, the third cut-off valve 29 is opened, the fourth cut-off valve 30 is closed, the first expansion valve 4 is opened, the second expansion valve 17 is opened, the first water pump 6 is opened, the A and B ports of the second three-way valve are conducted, the second water pump 19 is opened, and the third water pump 21 is closed. As shown in FIGS. 27 and 28, the refrigerant entering the compressor 1 is a gaseous refrigerant, the compressor 1 compresses the gaseous refrigerant so that the outlet of the compressor 1 discharges a high-temperature and high-pressure gaseous refrigerant (as shown by arrow 100 in FIG. 28), the high-temperature and high-pressure gaseous refrigerant flows into the first heat exchanger 2 and releases heat to low-temperature cooling liquid in the first heat exchanger 2 to lose its enthalpy (as shown by arrow 200 in FIG. 28), high-temperature cooling liquid flows out of the cooling liquid outlet of the first heat exchanger 2, the high-temperature cooling liquid is pumped by the first water pump 6 to flow into the outdoor radiator 7 and dissipates heat to outside air in the outdoor radiator 7, and the low-temperature cooling liquid flowing out of the outlet of the outdoor radiator 7 returns to the first heat exchanger 2 through the cooling liquid inlet of the first heat exchanger 2 and continues to absorb the heat of the high-temperature and high-pressure gaseous refrigerant. The refrigerant that has released heat to the cooling liquid and lost its enthalpy flows into the refrigerant outlet of the first heat exchanger 2, the refrigerant passes through the second gas-liquid separation device 25 for gas-liquid separation, a liquid refrigerant flows out of the outlet of the second gas-liquid separation device 25 (as shown by point 250 in FIG. 28), the liquid refrigerant flows into the third heat exchanger 23 and loses its enthalpy in the third heat exchanger 23 (as shown by arrow 230a in FIG. 28), the liquid refrigerant flowing out of the first refrigerant outlet of the third heat exchanger 23 is divided into two streams, one stream is throttled and depressurized in the first expansion valve 4, the isenthalpic pressure of the liquid refrigerant drops in the first expansion valve 4 and crosses the saturated liquid line (as indicated by arrow 400 in FIG. 28), a gas-liquid two-phase refrigerant flows out of the outlet of the first expansion valve 4, the gas-liquid two-phase refrigerant absorbs the heat of the passenger compartment in the indoor heat exchanger 5 and obtains an enthalpy (as shown by arrow 500 in FIG. 28) to reduce the temperature of the passenger compartment, the other stream is throttled and depressurized in the second expansion valve 17, the isenthalpic pressure of the liquid refrigerant drops in the second expansion valve 17 and crosses the saturated liquid line (as indicated by arrow 170 in FIG. 28), a low-temperature and low-pressure gas-liquid two-phase refrigerant flows out of the outlet of the second expansion valve 17, the low-temperature and low-pressure gas-liquid two-phase refrigerant absorbs heat in the second heat exchanger 16 from the high-temperature cooling liquid that has absorbed heat from the battery pack 18 and obtains an enthalpy (as shown by arrow 160 in FIG. 28), low-temperature cooling liquid flows out of the first cooling liquid outlet of the second heat exchanger 16, and this low-temperature cooling liquid can cool the battery pack 18. The refrigerant flowing out of the refrigerant outlet of the second heat exchanger 16 converges with the refrigerant flowing out of the outlet of the indoor heat exchanger 5, the converged refrigerant enters the third heat exchanger 23 and obtains the enthalpy in the third heat exchanger 23 that is lost in the third heat exchanger 23 by the liquid refrigerant flowing out of the outlet of the second gas-liquid separation device 25 (as shown by arrow 230b in FIG. 28), a gaseous refrigerant flows out of the second refrigerant outlet of the third heat exchanger 23, and the gaseous refrigerant returns to the compressor 1.

In the first passenger compartment refrigeration and battery pack 18 cooling mode and the second passenger compartment refrigeration and battery pack 18 cooling mode described above, the refrigerant does not flow through the first gas-liquid separation device 22 before entering the compressor 1, and the gaseous refrigerant entering the compressor 1 does not need to be controlled for the degree of preheat, that is, the degree of superheat of the refrigerant at the inlet of the compressor 1 may be greater than 0, as shown in FIGS. 26 and 28, the starting end of arrow 100 may be located on the right of the saturated steam line.

Mode 13: heat recovery mode. In this mode, as shown in FIG. 29, the first cut-off valve 26 is closed, the second cut-off valve 27 is opened, the expansion switch valve 33 is closed, the third cut-off valve 29 is closed, the fourth cut-off valve 30 is closed, the first expansion valve 4 is closed, the second expansion valve 17 is opened, the first water pump 6 is opened, the A and C ports of the second three-way valve are conducted, the second water pump 19 is closed, and the third water pump 21 is opened. As shown in FIGS. 29 and 30, the refrigerant entering the compressor 1 is a gaseous refrigerant, the compressor 1 compresses the gaseous refrigerant so that the outlet of the compressor 1 discharges a high-temperature and high-pressure gaseous refrigerant (as shown by arrow 100 in FIG. 30), the high-temperature and high-pressure gaseous refrigerant flows into the first heat exchanger 2 and releases heat to low-temperature cooling liquid in the first heat exchanger 2 to lose its enthalpy (as shown by arrow 200 in FIG. 30), high-temperature cooling liquid flows out of the cooling liquid outlet of the first heat exchanger 2, the high-temperature cooling liquid is pumped by the first water pump 6 to flow into the indoor air heater 10 and dissipates heat to the passenger compartment in the indoor air heater 10 to increase the temperature of the passenger compartment, and the low-temperature cooling liquid flowing out of the outlet of the indoor air heater 10 returns to the first heat exchanger 2 through the cooling liquid inlet of the first heat exchanger 2 and continues to absorb the heat of the high-temperature and high-pressure gaseous refrigerant. The refrigerant that has released heat to the cooling liquid and lost its enthalpy flows into the refrigerant outlet of the first heat exchanger 2, the refrigerant passes through the second gas-liquid separation device 25 for gas-liquid separation, a liquid refrigerant flows out of the outlet of the second gas-liquid separation device 25 (as shown by point 250 in FIG. 30), the liquid refrigerant then flows into the third heat exchanger 23 and loses its enthalpy in the third heat exchanger 23 (as shown by arrow 230a in FIG. 30), the isenthalpic pressure of the liquid refrigerant flowing out of the first refrigerant outlet of the third heat exchanger 23 drops in the second expansion valve 17 and crosses the saturated liquid line (as shown by arrow 170 in FIG. 30), a low-temperature and low-pressure gas-liquid two-phase refrigerant flows out of the outlet of the second expansion valve 17, the low-temperature and low-pressure gas-liquid two-phase refrigerant absorbs heat in the second heat exchanger 16 from the high-temperature cooling liquid that has absorbed heat from the electronic device 20 and obtains an enthalpy (as shown by arrow 160 in FIG. 30) to recover the waste heat of the electronic device 20 into the refrigerant loop for supplementing gas and increasing enthalpy for the refrigerant, the refrigerant flowing out of the refrigerant outlet of the second heat exchanger 16 obtains the enthalpy in the third heat exchanger 23 that is lost in the third heat exchanger 23 by the liquid refrigerant flowing out of the outlet of the second gas-liquid separation device 25 (as shown by arrow 230b in FIG. 30), a gaseous refrigerant flows out of the second refrigerant outlet of the third heat exchanger 23, and the gaseous refrigerant returns to the compressor 1.

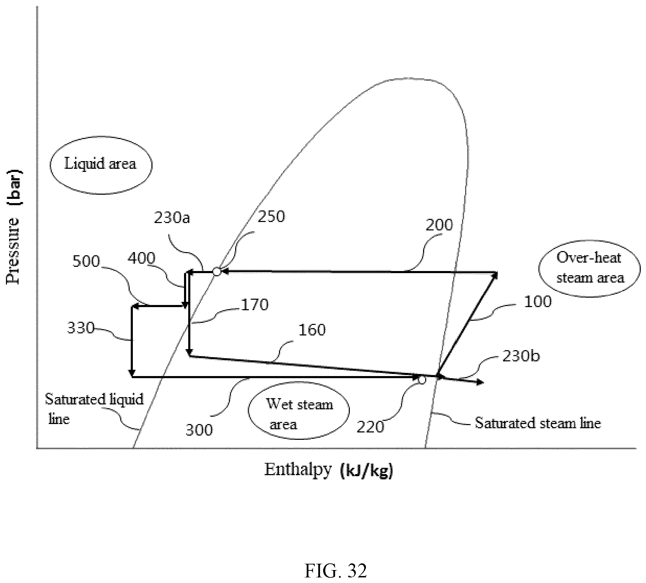

Mode 14: first heat pump and heat recovery mode. In this mode, as shown in FIG. 31, the first cut-off valve 26 is closed, the second cut-off valve 27 is opened, the expansion switch valve 33 is in a throttling state (that is, the throttling flow channel inside the expansion switch valve 33 is conducted, and the through flow channel is cut off), the third cut-off valve 29 is closed, the fourth cut-off valve 30 is opened, the first expansion valve 4 is opened, the second expansion valve 17 is opened, the first water pump 6 is opened, the A and C ports of the second three-way valve are conducted, the second water pump 19 is closed, and the third water pump 21 is opened. In this mode, as shown in FIG. 31 and FIG. 32, the refrigerant entering the compressor 1 is a gaseous refrigerant, the compressor 1 compresses the gaseous refrigerant so that the outlet of the compressor 1 discharges a high-temperature and high-pressure gaseous refrigerant (as shown by arrow 100 in FIG. 32), the high-temperature and high-pressure gaseous refrigerant flows into the first heat exchanger 2 and releases heat to low-temperature cooling liquid in the first heat exchanger 2 to lose its enthalpy (as shown by arrow 200 in FIG. 32), high-temperature cooling liquid flows out of the cooling liquid outlet of the first heat exchanger 2, the high-temperature cooling liquid is pumped by the first water pump 6 to flow into the indoor air heater 10 and dissipates heat to the passenger compartment in the indoor air heater 10 to increase the temperature of the passenger compartment, and the low-temperature cooling liquid flowing out of the outlet of the indoor air heater 10 returns to the first heat exchanger 2 through the cooling liquid inlet of the first heat exchanger 2 and continues to absorb the heat of the high-temperature and high-pressure gaseous refrigerant. The refrigerant that has released heat to the cooling liquid and lost its enthalpy flows into the refrigerant outlet of the first heat exchanger 2, the refrigerant passes through the second gas-liquid separation device 25 for gas-liquid separation, a liquid refrigerant flows out of the outlet of the second gas-liquid separation device 25 (as shown by point 250 in FIG. 32), the liquid refrigerant then flows into the third heat exchanger 23, the liquid refrigerant loses its enthalpy in the third heat exchanger 23 (as shown by arrow 230a in FIG. 32), the liquid refrigerant flowing out of the first refrigerant outlet of the third heat exchanger 23 is divided into two streams, the isenthalpic pressure of one stream drops in the first expansion valve 4 but does not cross the saturated liquid line (as shown by arrow 400 in FIG. 32), a depressurized liquid refrigerant flows out of the outlet of the first expansion valve 4, the liquid refrigerant releases heat to the passenger compartment in the indoor heat exchanger 5 and loses its enthalpy (as shown by arrow 500 in FIG. 32) to preheat the air that is about to flow through the indoor air heater 10, the liquid refrigerant flowing out of the outlet of the indoor heat exchanger 5 is throttled and depressurized by the expansion switch valve 33 (as shown by arrow 330 in FIG. 32), then flows into the outdoor heat exchanger 3 and absorbs heat from the outside air in the outdoor heat exchanger 3 to obtain an enthalpy (as shown by arrow 300 in FIG. 32), a gas-liquid two-phase mixed refrigerant flowing out of the outlet of the outdoor heat exchanger 3 is separated into gas and liquid in the first gas-liquid separation device 22, and the gaseous refrigerant flows out of the gas outlet of the first gas-liquid separation device 22 (as shown by point 220 in FIG. 32); the isenthalpic pressure of the other stream of liquid flowing out of the first refrigerant outlet of the third heat exchanger 23 drops in the second expansion valve 17 and crosses the saturated liquid line (as shown by arrow 170 in FIG. 32), a gas-liquid two-phase mixed refrigerant flows out of the outlet of the second expansion valve 17, the gas-liquid two-phase refrigerant absorbs heat in the second heat exchanger 16 from the high-temperature cooling liquid that has absorbed heat from the electronic device 20 and obtains an enthalpy (as shown by arrow 160 in FIG. 32) to recover the waste heat of the electronic device 20 into the refrigerant loop for supplementing gas and increasing enthalpy for the refrigerant, the refrigerant flowing out of the refrigerant outlet of the second heat exchanger 16 obtains the enthalpy in the third heat exchanger 23 that is lost in the third heat exchanger 23 by the liquid refrigerant flowing out of the outlet of the second gas-liquid separation device 25 (as shown by arrow 230b in FIG. 32), a gaseous refrigerant flowing out of the second refrigerant outlet of the third heat exchanger 23 is mixed with a gaseous refrigerant flowing out of the gas outlet of the first gas-liquid separation device 22, and the mixed refrigerant returns to the compressor 1.

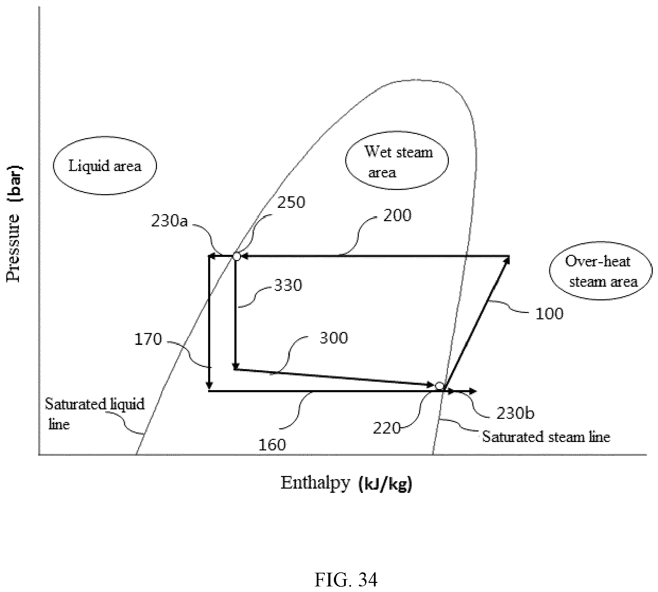

Mode 15: second heat pump and heat recovery mode. In this mode, as shown in FIG. 33, the first cut-off valve 26 is opened, the second cut-off valve 27 is opened, the expansion switch valve 33 is in a throttling state (that is, the throttling flow channel inside the expansion switch valve 33 is conducted, and the through flow channel is cut off), the third cut-off valve 29 is closed, the fourth cut-off valve 30 is opened, the first expansion valve 4 is closed, the second expansion valve 17 is closed, the first water pump 6 is opened, the A and C ports of the second three-way valve are conducted, the second water pump 19 is closed, and the third water pump 21 is opened. In this mode, as shown in FIG. 33 and FIG. 34, the refrigerant entering the compressor 1 is a gaseous refrigerant, the compressor 1 compresses the gaseous refrigerant so that the outlet of the compressor 1 discharges a high-temperature and high-pressure gaseous refrigerant (as shown by arrow 100 in FIG. 34), the high-temperature and high-pressure gaseous refrigerant flows into the first heat exchanger 2 and releases heat to low-temperature cooling liquid in the first heat exchanger 2 to lose its enthalpy (as shown by arrow 200 in FIG. 34), high-temperature cooling liquid flows out of the cooling liquid outlet of the first heat exchanger 2, the high-temperature cooling liquid is pumped by the first water pump 6 to flow into the indoor air heater 10 and dissipates heat to the passenger compartment in the indoor air heater 10 to increase the temperature of the passenger compartment, and the low-temperature cooling liquid flowing out of the outlet of the indoor air heater 10 returns to the first heat exchanger 2 through the cooling liquid inlet of the first heat exchanger 2 and continues to absorb the heat of the high-temperature and high-pressure gaseous refrigerant. The refrigerant that has released heat to the cooling liquid and lost its enthalpy flows into the refrigerant outlet of the first heat exchanger 2, the refrigerant passes through the second gas-liquid separation device 25 for gas-liquid separation, a liquid refrigerant flows out of the outlet of the second gas-liquid separation device 25 (as shown by point 250 in FIG. 34), the liquid refrigerant is divided into two streams, one stream flows into the third heat exchanger 23 and loses its enthalpy in the third heat exchanger 23 (as shown by arrow 230a in FIG. 34), the liquid refrigerant flowing out of the first refrigerant outlet of the third heat exchanger 23 is throttled and depressurized by the second expansion valve 17, the isenthalpic pressure of the liquid refrigerant drops in the second expansion valve 17 and crosses the saturated liquid line (as shown by arrow 170 in FIG. 34), a gas-liquid two-phase mixed refrigerant flows out of the outlet of the second expansion valve 17, the gas-liquid two-phase refrigerant absorbs heat in the second heat exchanger 16 from the high-temperature cooling liquid that has absorbed heat from the electronic device 20 and obtains an enthalpy (as shown by arrow 160 in FIG. 34) to recover the waste heat of the electronic device 20 into the refrigerant loop for supplementing gas and increasing enthalpy for the refrigerant, the refrigerant flowing out of the refrigerant outlet of the second heat exchanger 16 obtains the enthalpy in the third heat exchanger 23 that is lost in the third heat exchanger 23 by the liquid refrigerant flowing out of the outlet of the second gas-liquid separation device 25 (as shown by arrow 230b in FIG. 34), and a gaseous refrigerant flows out of the second refrigerant outlet of the third heat exchanger 23; the isenthalpic pressure of the other stream of liquid refrigerant drops in the expansion switch valve 33 and the liquid refrigerant enters the wet stream area (as shown by arrow 330 in FIG. 34), a gas-liquid two-phase mixed refrigerant flows out of the outlet of the expansion switch valve 33, the gas-liquid two-phase mixed refrigerant absorbs heat from the outside air in the outdoor heat exchanger 3 and obtains an enthalpy (as shown by arrow 300 in FIG. 34), the gas-liquid two-phase mixed refrigerant flowing out of the outlet of the outdoor heat exchanger 3 is separated into gas and liquid in the first gas-liquid separation device 22, the gaseous refrigerant flows out of the gas outlet of the first gas-liquid separation device 22 (as shown by point 220 in FIG. 34), and the gaseous refrigerant converges with the gaseous refrigerant flowing out of the second refrigerant outlet of the third heat exchanger 23 and then returns to the compressor 1.

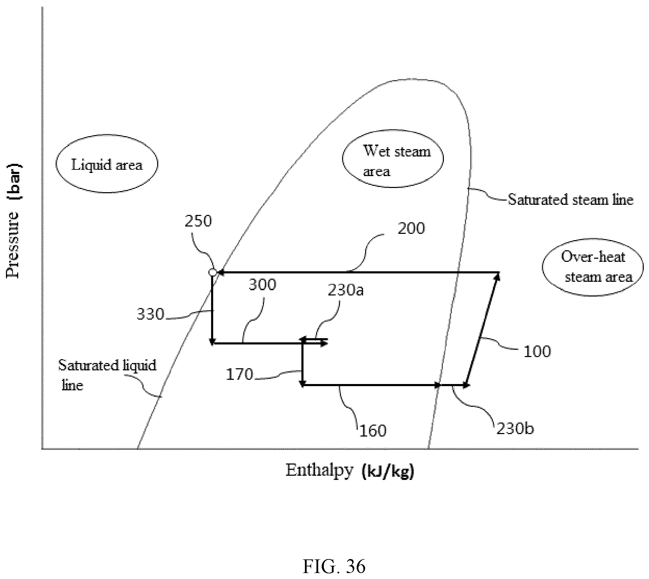

Mode 16: third heat pump and heat recovery mode. In this mode, as shown in FIG. 35, the first cut-off valve 26 is opened, the second cut-off valve 27 is closed, the expansion switch valve 33 is in a throttling state (that is, the throttling flow channel inside the expansion switch valve 33 is conducted, and the through flow channel is cut off), the third cut-off valve 29 is closed, the fourth cut-off valve 30 is closed, the first expansion valve 4 is closed, the second expansion valve 17 is opened, the first water pump 6 is opened, the A and C ports of the second three-way valve are conducted, the second water pump 19 is closed, and the third water pump 21 is opened. As shown in FIGS. 35 and 36, the refrigerant entering the compressor 1 is a gaseous refrigerant, the compressor 1 compresses the gaseous refrigerant so that the outlet of the compressor 1 discharges a high-temperature and high-pressure gaseous refrigerant (as shown by arrow 100 in FIG. 36), the high-temperature and high-pressure gaseous refrigerant flows into the first heat exchanger 2 and releases heat to low-temperature cooling liquid in the first heat exchanger 2 to lose its enthalpy (as shown by arrow 200 in FIG. 36), high-temperature cooling liquid flows out of the cooling liquid outlet of the first heat exchanger 2, the high-temperature cooling liquid is pumped by the first water pump 6 to flow into the indoor air heater 10 and dissipates heat to the passenger compartment in the indoor air heater 10 to increase the temperature of the passenger compartment, and the low-temperature cooling liquid flowing out of the outlet of the indoor air heater 10 returns to the first heat exchanger 2 through the cooling liquid inlet of the first heat exchanger 2 and continues to absorb the heat of the high-temperature and high-pressure gaseous refrigerant. The refrigerant that has released heat to the cooling liquid and lost its enthalpy flows into the refrigerant outlet of the first heat exchanger 2, the refrigerant passes through the second gas-liquid separation device 25 for gas-liquid separation, a liquid refrigerant flows out of the outlet of the second gas-liquid separation device 25 (as shown by point 250 in FIG. 36), the isenthalpic pressure of the liquid refrigerant drops in the expansion switch valve 33 and enters the wet steam area (as shown by arrow 330 in FIG. 36), a gas-liquid two-phase mixed refrigerant flows out of the outlet of the expansion switch valve 33, the gas-liquid two-phase mixed refrigerant absorbs heat from the outside air in the outdoor heat exchanger 3 and obtains an enthalpy (as shown by arrow 300 in FIG. 36), the gas-liquid two-phase mixed refrigerant flowing out of the outlet of the outdoor heat exchanger 3 flows into the third heat exchanger 23 and loses its enthalpy in the third heat exchanger 23 (as shown by arrow 230a in FIG. 36), the liquid refrigerant flowing out of the first refrigerant outlet of the third heat exchanger 23 is throttled and depressurized by the second expansion valve 17, the isenthalpic pressure of the liquid refrigerant drops in the second expansion valve 17 (as shown by arrow 170 in FIG. 36), the depressurized refrigerant flowing out of the outlet of the second expansion valve 17 absorbs heat in the second heat exchanger 16 from the high-temperature cooling liquid that has absorbed heat from the electronic device 20 and obtains an enthalpy (as shown by arrow 160 in FIG. 36) to recover the waste heat of the electronic device 20 into the refrigerant loop for supplementing gas and increasing enthalpy for the refrigerant, the refrigerant flowing out of the refrigerant outlet of the second heat exchanger 16 obtains the enthalpy in the third heat exchanger 23 that is lost in the third heat exchanger 23 by the liquid refrigerant flowing out of the outlet of the indoor heat exchanger 3 (as shown by arrow 230b in FIG. 36), a gaseous refrigerant flows out of the outlet of the third heat exchanger 23, and the gaseous refrigerant returns to the compressor 1.

It should be noted that the aforementioned modes are main operating modes of the thermal management system for a vehicle provided by the present invention.

According to another aspect of the present invention, a vehicle is further provided, including the above-mentioned thermal management system for a vehicle.

## Claims

1. A thermal management system for a vehicle, comprising a compressor (1), a first heat exchanger (2), an outdoor heat exchanger (3), a first expansion valve (4), an indoor heat exchanger (5), a first water pump (6), and an outdoor radiator (7),
an outlet of the compressor (1) is connected to a refrigerant inlet of the first heat exchanger (2), a refrigerant outlet of the first heat exchanger (2) is connected to an inlet of the outdoor heat exchanger (3), an outlet of the outdoor heat exchanger (3) is connected to an inlet of the indoor heat exchanger (5) through the first expansion valve (4), an outlet of the indoor heat exchanger (5) is connected to an inlet of the compressor (1), a cooling liquid outlet of the first heat exchanger (2) is connected to an inlet of the outdoor radiator (7), an outlet of the outdoor radiator (7) is connected to a cooling liquid inlet of the first heat exchanger (2), and the first water pump (6) is disposed on a flow path between the cooling liquid outlet of the first heat exchanger (2) and the inlet of the outdoor radiator (7), or the first water pump (6) is disposed on a flow path between the outlet of the outdoor radiator (7) and the cooling liquid inlet of the first heat exchanger (2);
wherein the thermal management system for a vehicle further comprises a first flow path (8) that is selectively conducted or cut off and a second flow path (9) that is selectively conducted or cut off, and the refrigerant outlet of the first heat exchanger (2) is connected to the inlet of the outdoor heat exchanger (3) via the first flow path (8) and connected to the inlet of the first expansion valve (4) via the second flow path (9);
wherein the thermal management system for a vehicle further comprises an indoor air heater (10), a first throttling flow path (11), a first through flow path (12), a third flow path (13) that is selectively conducted or cut off, a fourth flow path (14) that is selectively conducted or cut off, and a first one-way valve (15);
the cooling liquid outlet of the first heat exchanger (2) is connected to the inlet of the outdoor radiator (7) and an inlet of the indoor air heater (10) through the first water pump (6), the cooling liquid outlet of the first heat exchanger (2) is selectively connected to the inlet of the outdoor radiator (7) and the inlet of the indoor air heater (10), and an outlet of the indoor air heater (10) is connected to the cooling liquid inlet of the first heat exchanger (2);
the outlet of the indoor heat exchanger (5) is connected to an inlet of the first one-way valve (15) and connected to the inlet of the compressor (1) via the third flow path (13), an outlet of the first flow path (8) and an outlet of the first one-way valve (15) are both selectively connected to the inlet of the outdoor heat exchanger (3) via the first throttling flow path (11) or the first through flow path (12), and the outlet of the outdoor heat exchanger (3) is also connected to the inlet of the compressor (1) via the fourth flow path (14);
**characterized in that**,
the thermal management system for a vehicle further comprises a second heat exchanger (16), a second expansion valve (17), a battery pack (18) and a second water pump (19), the outlet of the outdoor heat exchanger (3) and an outlet of the second flow path (9) are both connected to a refrigerant inlet of the second heat exchanger (16) through the second expansion valve (17), and a refrigerant outlet of the second heat exchanger (16) is connected to the inlet of the compressor (1);
a first cooling liquid outlet of the second heat exchanger (16) is connected to an inlet of the battery pack (18), an outlet of the battery pack (18) is connected to a first cooling liquid inlet of the second heat exchanger (16), the second water pump (19) is disposed on a flow path between the first cooling liquid outlet of the second heat exchanger (16) and the inlet of the battery pack (18), or the second water pump (19) is disposed on a flow path between the outlet of the battery pack (18) and the first cooling liquid inlet of the second heat exchanger (16).

2. The thermal management system for a vehicle according to claim 1, wherein the thermal management system for a vehicle further comprises an electronic device (20) and a third water pump (21), a second cooling liquid outlet of the second heat exchanger (16) is connected to an inlet of the electronic device (20), an outlet of the electronic device (20) is connected to a second cooling liquid inlet of the second heat exchanger (16), and the third water pump (21) is disposed on a flow path between the second cooling liquid outlet of the second heat exchanger (16) and the inlet of the electronic device (20), or the third water pump (21) is disposed on a flow path between the outlet of the electronic device (20) and the second cooling liquid inlet of the second heat exchanger (16); and
wherein the electronic device (20) preferably comprises at least one of a motor, a charger, a motor controller, and a DC-DC converter.

3. The thermal management system for a vehicle according to any one of claims 1-2, wherein the thermal management system for a vehicle further comprises a first gas-liquid separation device (22), an outlet of the fourth flow path (14) is connected to an inlet of the first gas-liquid separation device (22), and the inlet of the compressor (1) is connected to a gas outlet of the first gas-liquid separation device (22), an outlet of the third flow path (13) and the refrigerant outlet of the second heat exchanger (16).

4. The thermal management system for a vehicle according to any one of claims 1-2, wherein the thermal management system for a vehicle further comprises a third heat exchanger (23),
the outlet of the second flow path (9) and the outlet of the outdoor heat exchanger (3) are both connected to the first refrigerant inlet of the third heat exchanger (23), the first refrigerant outlet of the third heat exchanger (23) is connected to the inlet of the indoor heat exchanger (5) through the first expansion valve (4) and connected to the refrigerant inlet of the second heat exchanger (16) through the second expansion valve (17), the outlet of the third flow path (13) and the refrigerant outlet of the second heat exchanger (16) are both connected to the second refrigerant inlet of the third heat exchanger (23), and the second refrigerant outlet of the third heat exchanger (23) is connected to the inlet of the compressor (1); or,
the outlet of the outdoor heat exchanger (3) is connected to the first refrigerant inlet of the third heat exchanger (23), the inlet of the first expansion valve (4) and the inlet of the second expansion valve (17) are both connected to the first refrigerant outlet of the third heat exchanger (23) and the outlet of the second flow path (9), the outlet of the third flow path (13) and the refrigerant outlet of the second heat exchanger (16) are both connected to the second refrigerant inlet of the third heat exchanger (23), and the second refrigerant outlet of the third heat exchanger (23) is connected to the inlet of the compressor (1).

5. The thermal management system for a vehicle according to claim 4, wherein the thermal management system for a vehicle further comprises a second one-way valve (24);
the outlet of the outdoor heat exchanger (3) is connected to the first refrigerant inlet of the third heat exchanger (23) through the second one-way valve (24); or,
the second one-way valve (24) is disposed at the first refrigerant outlet of the third heat exchanger (23).

6. The thermal management system for a vehicle according to any one of claims 1-3, wherein the thermal management system for a vehicle further comprises a second gas-liquid separation device (25), the refrigerant outlet of the first heat exchanger (2) is connected to an inlet of the second gas-liquid separation device (25), and a liquid outlet of the second gas-liquid separation device (25) is connected to the inlets of the first flow path (8) and the second flow path (9); or,
wherein the first flow path (8) is provided with a first cut-off valve (26), and the second flow path (9) is provided with a second cut-off valve (27); or,
the thermal management system for a vehicle further comprises a first three-way valve (28), the first three-way valve (28) is located on the first flow path (8) and the second flow path (9) at the same time, an A port of the first three-way valve (28) is connected to the refrigerant outlet of the first heat exchanger (2), a B port of the first three-way valve (28) is connected to the inlet of the outdoor heat exchanger (3), and a C port of the first three-way valve (28) is connected to the inlet of the first expansion valve (4).

7. The thermal management system for a vehicle according to any one of claims 1-3, wherein the third flow path (13) is provided with a third cut-off valve (29), and the fourth flow path (14) is provided with a fourth cut-off valve (30).

8. The thermal management system for a vehicle according to any one of claims 1-3, wherein the first throttling flow path (11) is provided with a third expansion valve (31), and the first through flow path (12) is provided with a fifth cut-off valve (32); or,
the thermal management system for a vehicle further comprises an expansion switch valve (33) as an integrated expansion valve and a switch valve, the expansion switch valve (33) has a throttling flow channel and a through flow channel inside, the outlet of the first flow path (8) and the outlet of the first one-way valve (15) are both connected to an inlet of the expansion switch valve (33), an outlet of the expansion switch valve (33) is connected to the inlet of the outdoor heat exchanger (3), the first throttling flow path (11) is the throttling flow channel of the expansion switch valve (33), and the first through flow path (12) is the through flow channel of the expansion switch valve (33).

9. The thermal management system for a vehicle according to any one of claims 1-3, wherein the thermal management system for a vehicle further comprises a second three-way valve (34), an A port of the second three-way valve (34) is connected to an outlet of the first water pump (6), a B port of the second three-way valve (34) is connected to the inlet of the outdoor radiator (7), and a C port of the second three-way valve (34) is connected to the inlet of the indoor air heater (10); or,
the thermal management system for a vehicle further comprises a sixth cut-off valve (35) and a seventh cut-off valve (36), and the outlet of the first water pump (6) is connected to the inlet of the outdoor radiator (7) via the sixth cut-off valve (35) and connected to the inlet of the indoor air heater (10) via the seventh cut-off valve (36).

10. A vehicle, comprising the thermal management system for a vehicle according to any one of claims 1-9.

## Patentansprüche

1. Wärmemanagementsystem für ein Fahrzeug, das einen Kompressor (1), einen ersten Wärmetauscher (2), einen Außenwärmetauscher (3), ein erstes Expansionsventil (4), einen Innenwärmetauscher (5), eine erste Wasserpumpe (6) und einen Außenkühler (7) umfasst,
ein Auslass des Kompressors (1) mit einem Kältemitteleinlass des ersten Wärmetauschers (2) verbunden ist, ein Kältemittelauslass des ersten Wärmetauschers (2) mit einem Einlass des Außenwärmetauschers (3) verbunden ist, ein Auslass des Außenwärmetauschers (3) über das erste Expansionsventil (4) mit einem Einlass des Innenwärmetauschers (5) verbunden ist, ein Auslass des Innenwärmetauschers (5) mit einem Einlass des Kompressors (1) verbunden ist, ein Kühlflüssigkeitsauslass des ersten Wärmetauschers (2) mit einem Einlass des Außenkühlers (7) verbunden ist, ein Auslass des Außenkühlers (7) mit einem Kühlflüssigkeitseinlass des ersten Wärmetauschers (2) verbunden ist, und die erste Wasserpumpe (6) auf einem Strömungsweg zwischen dem Kühlflüssigkeitsauslass des ersten Wärmetauschers (2) und dem Einlass des Außenkühlers (7) angeordnet ist, oder die erste Wasserpumpe (6) auf einem Strömungsweg zwischen dem Auslass des Außenkühlers (7) und dem Kühlflüssigkeitseinlass des ersten Wärmetauschers (2) angeordnet ist;
wobei das Wärmemanagementsystem für ein Fahrzeug weiter einen ersten Strömungsweg (8), der selektiv geleitet oder unterbrochen wird, und einen zweiten Strömungsweg (9) umfasst, der selektiv geleitet oder unterbrochen wird, und der Kältemittelauslass des ersten Wärmetauschers (2) über den ersten Strömungsweg (8) mit dem Einlass des Außenwärmetauschers (3) und über den zweiten Strömungsweg (9) mit dem Einlass des ersten Expansionsventils (4) verbunden ist;
wobei das Wärmemanagementsystem für ein Fahrzeug weiter einen Innenlufterhitzer (10), einen ersten Drosselströmungsweg (11), einen ersten Durchgangsströmungsweg (12), einen dritten Strömungsweg (13), der selektiv geleitet oder unterbrochen wird, einen vierten Strömungsweg (14), der selektiv geleitet oder unterbrochen wird, und ein erstes Einwegventil (15) umfasst;
der Kühlflüssigkeitsauslass des ersten Wärmetauschers (2) über die erste Wasserpumpe (6) mit dem Einlass des Außenkühlers (7) und einem Einlass des Innenlufterhitzers (10) verbunden ist, der Kühlflüssigkeitsauslass des ersten Wärmetauschers (2) selektiv mit dem Einlass des Außenkühlers (7) und dem Einlass des Innenlufterhitzers (10) verbunden ist, und ein Auslass des Innenlufterhitzers (10) mit dem Kühlflüssigkeitseinlass des ersten Wärmetauschers (2) verbunden ist;
der Auslass des Innenwärmetauschers (5) mit einem Einlass des ersten Einwegventils (15) verbunden ist, und über den dritten Strömungsweg (13) mit dem Einlass des Kompressors (1) verbunden ist, ein Auslass des ersten Strömungswegs (8) und ein Auslass des ersten Einwegventils (15) beide selektiv über den ersten Drosselströmungsweg (11) oder den ersten Durchgangsströmungsweg (12) mit dem Einlass des Außenwärmetauschers (3) verbunden sind, und der Auslass des Außenwärmetauschers (3) auch über den vierten Strömungsweg (14) mit dem Einlass des Kompressors (1) verbunden ist;
**dadurch gekennzeichnet, dass**
das Wärmemanagementsystem für ein Fahrzeug weiter einen zweiten Wärmetauscher (16), ein zweites Expansionsventil (17), ein Batteriepaket (18) und eine zweite Wasserpumpe (19) umfasst, der Auslass des Außenwärmetauschers (3) und ein Auslass des zweiten Strömungswegs (9) beide durch das zweite Expansionsventil (17) mit einem Kältemitteleinlass des zweiten Wärmetauschers (16) verbunden sind, und ein Kältemittelauslass des zweiten Wärmetauschers (16) mit dem Einlass des Kompressors (1) verbunden ist;
ein erster Kühlflüssigkeitsauslass des zweiten Wärmetauschers (16) mit einem Einlass des Batteriepakets (18) verbunden ist, ein Auslass des Batteriepakets (18) mit einem ersten Kühlflüssigkeitseinlass des zweiten Wärmetauschers (16) verbunden ist, die zweite Wasserpumpe (19) auf einem Strömungsweg zwischen dem ersten Kühlflüssigkeitsauslass des zweiten Wärmetauschers (16) und dem Einlass des Batteriepakets (18) angeordnet ist, oder die zweite Wasserpumpe (19) auf einem Strömungsweg zwischen dem Auslass des Batteriepakets (18) und dem ersten Kühlflüssigkeitseinlass des zweiten Wärmetauschers (16) angeordnet ist.

2. Wärmemanagementsystem für ein Fahrzeug nach Anspruch 1, wobei das Wärmemanagementsystem für ein Fahrzeug weiter eine elektronische Vorrichtung (20) und eine dritte Wasserpumpe (21) umfasst, ein zweiter Kühlflüssigkeitsauslass des zweiten Wärmetauschers (16) mit einem Einlass der elektronischen Vorrichtung (20) verbunden ist, ein Auslass der elektronischen Vorrichtung (20) mit einem zweiten Kühlflüssigkeitseinlass des zweiten Wärmetauschers (16) verbunden ist und die dritte Wasserpumpe (21) auf einem Strömungsweg zwischen dem zweiten Kühlflüssigkeitsauslass des zweiten Wärmetauschers (16) und dem Einlass der elektronischen Vorrichtung (20) angeordnet ist oder die dritte Wasserpumpe (21) auf einem Strömungsweg zwischen dem Auslass der elektronischen Vorrichtung (20) und dem zweiten Kühlflüssigkeitseinlass des zweiten Wärmetauschers (16) angeordnet ist; und
wobei die elektronische Vorrichtung (20) vorzugsweise mindestens eines von einem Motor, einem Ladegerät, einer Motorsteuereinheit und einem DC-DC-Wandler umfasst.

3. Wärmemanagementsystem für ein Fahrzeug nach einem der Ansprüche 1-2, wobei das Wärmemanagementsystem für ein Fahrzeug weiter eine erste Gas-Flüssigkeits-Trennvorrichtung (22) umfasst, ein Auslass des vierten Strömungswegs (14) mit einem Einlass der ersten Gas-Flüssigkeits-Trennvorrichtung (22) verbunden ist, und der Einlass des Kompressors (1) mit einem Gasauslass der ersten Gas-Flüssigkeits-Trennvorrichtung (22), einem Auslass des dritten Strömungswegs (13) und dem Kältemittelauslass des zweiten Wärmetauschers (16) verbunden ist.

4. Wärmemanagementsystem für ein Fahrzeug nach einem der Ansprüche 1-2, wobei das Wärmemanagementsystem für ein Fahrzeug weiter einen dritten Wärmetauscher (23) umfasst,
der Auslass des zweiten Strömungswegs (9) und der Auslass des Außenwärmetauschers (3) beide mit dem ersten Kältemitteleinlass des dritten Wärmetauschers (23) verbunden sind, der erste Kältemittelauslass des dritten Wärmetauschers (23) über das erste Expansionsventil (4) mit dem Einlass des Innenwärmetauschers (5) und über das zweite Expansionsventil (17) mit dem Kältemitteleinlass des zweiten Wärmetauschers (16) verbunden ist, der Auslass des dritten Strömungswegs (13) und der Kältemittelauslass des zweiten Wärmetauschers (16) beide mit dem zweiten Kältemitteleinlass des dritten Wärmetauschers (23) verbunden sind, und der zweite Kältemittelauslass des dritten Wärmetauschers (23) mit dem Einlass des Kompressors (1) verbunden ist; oder
der Auslass des Außenwärmetauschers (3) mit dem ersten Kältemitteleinlass des dritten Wärmetauschers (23) verbunden ist, der Einlass des ersten Expansionsventils (4) und der Einlass des zweiten Expansionsventils (17) beide mit dem ersten Kältemittelauslass des dritten Wärmetauschers (23) und dem Auslass des zweiten Strömungswegs (9) verbunden sind, der Auslass des dritten Strömungswegs (13) und der Kältemittelauslass des zweiten Wärmetauschers (16) beide mit dem zweiten Kältemitteleinlass des dritten Wärmetauschers (23) verbunden sind, und der zweite Kältemittelauslass des dritten Wärmetauschers (23) mit dem Einlass des Kompressors (1) verbunden ist.

5. Wärmemanagementsystem für ein Fahrzeug nach Anspruch 4, wobei das Wärmemanagementsystem für ein Fahrzeug weiter ein zweites Einwegventil (24) umfasst;
der Auslass des Außenwärmetauschers (3) über das zweite Einwegventil (24) mit dem ersten Kältemitteleinlass des dritten Wärmetauschers (23) verbunden ist; oder
das zweite Einwegventil (24) am ersten Kältemittelauslass des dritten Wärmetauschers (23) angeordnet ist.

6. Wärmemanagementsystem für ein Fahrzeug nach einem der Ansprüche 1-3, wobei das Wärmemanagementsystem für ein Fahrzeug weiter eine zweite Gas-Flüssigkeits-Trennvorrichtung (25) umfasst, der Kältemittelauslass des ersten Wärmetauschers (2) mit einem Einlass der zweiten Gas-Flüssigkeits-Trennvorrichtung (25) verbunden ist, und ein Flüssigkeitsauslass der zweiten Gas-Flüssigkeits-Trennvorrichtung (25) mit den Einlässen des ersten Strömungswegs (8) und des zweiten Strömungswegs (9) verbunden ist; oder
wobei der erste Strömungsweg (8) mit einem ersten Absperrventil (26) bereitgestellt ist, und der zweite Strömungsweg (9) mit einem zweiten Absperrventil (27) bereitgestellt ist; oder
das Wärmemanagementsystem für ein Fahrzeug weiter ein erstes Dreiwegeventil (28) umfasst, wobei sich das erste Dreiwegeventil (28) gleichzeitig am ersten Strömungsweg (8) und am zweiten Strömungsweg (9) befindet, ein Anschluss A des ersten Dreiwegeventils (28) mit dem Kältemittelauslass des ersten Wärmetauschers (2) verbunden ist, ein Anschluss B des ersten Dreiwegeventils (28) mit dem Einlass des Außenwärmetauschers (3) verbunden ist, und ein Anschluss C des ersten Dreiwegeventils (28) mit dem Einlass des ersten Expansionsventils (4) verbunden ist.

7. Wärmemanagementsystem für ein Fahrzeug nach einem der Ansprüche 1-3, wobei der dritte Strömungsweg (13) mit einem dritten Absperrventil (29) bereitgestellt ist und der vierte Strömungsweg (14) mit einem vierten Absperrventil (30) bereitgestellt ist.

8. Wärmemanagementsystem für ein Fahrzeug nach einem der Ansprüche 1-3, wobei der erste Drosselströmungsweg (11) mit einem dritten Expansionsventil (31) bereitgestellt ist und der erste Durchgangsströmungsweg (12) mit einem fünften Absperrventil (32) bereitgestellt ist; oder
das Wärmemanagementsystem für ein Fahrzeug weiter ein Expansionsschaltventil (33) als integriertes Expansionsventil und Umschaltventil umfasst, das Expansionsschaltventil (33) im Inneren einen Drosselströmungskanal und einen Durchgangsströmungskanal aufweist, der Auslass des ersten Strömungswegs (8) und der Auslass des ersten Einwegventils (15) beide mit einem Einlass des Expansionsschaltventils (33) verbunden sind, ein Auslass des Expansionsschaltventils (33) mit dem Einlass des Außenwärmetauschers (3) verbunden ist, der erste Drosselströmungsweg (11) der Drosselströmungskanal des Expansionsschaltventils (33) ist und der erste Durchgangsströmungsweg (12) der Durchgangsströmungskanal des Expansionsschaltventils (33) ist.

9. Wärmemanagementsystem für ein Fahrzeug nach einem der Ansprüche 1-3, wobei das Wärmemanagementsystem für ein Fahrzeug weiter ein zweites Dreiwegeventil (34) umfasst, wobei ein Anschluss A des zweiten Dreiwegeventils (34) mit einem Auslass der ersten Wasserpumpe (6) verbunden ist, ein Anschluss B des zweiten Dreiwegeventils (34) mit dem Einlass des Außenkühlers (7) verbunden ist und ein Anschluss C des zweiten Dreiwegeventils (34) mit dem Einlass des Innenlufterhitzers (10) verbunden ist; oder
das Wärmemanagementsystem für ein Fahrzeug weiter ein sechstes Absperrventil (35) und ein siebtes Absperrventil (36) umfasst, und der Auslass der ersten Wasserpumpe (6) über das sechste Absperrventil (35) mit dem Einlass des Außenkühlers (7) verbunden ist und über das siebte Absperrventil (36) mit dem Einlass des Innenlufterhitzers (10) verbunden ist.

10. Fahrzeug, welches das Wärmemanagementsystem für ein Fahrzeug nach einem der Ansprüche 1-9 umfasst.

## Revendications

1. Système de gestion thermique pour véhicule, comprenant un compresseur (1), un premier échangeur de chaleur (2), un échangeur de chaleur extérieur (3), un premier détendeur (4), un échangeur de chaleur intérieur (5), une première pompe à eau (6) et un radiateur extérieur (7),
une sortie du compresseur (1) est reliée à une entrée de réfrigérant du premier échangeur de chaleur (2), une sortie de réfrigérant du premier échangeur de chaleur (2) est reliée à une entrée de l'échangeur de chaleur extérieur (3), une sortie de l'échangeur de chaleur extérieur (3) est reliée à une entrée de l'échangeur de chaleur intérieur (5) par le premier détendeur (4), une sortie de l'échangeur de chaleur intérieur (5) est reliée à une entrée du compresseur (1), une sortie de liquide de refroidissement du premier échangeur de chaleur (2) est reliée à une entrée du radiateur extérieur (7), une sortie du radiateur extérieur (7) est reliée à une entrée de liquide de refroidissement du premier échangeur de chaleur (2), et la première pompe à eau (6) est disposée sur un trajet d'écoulement entre la sortie de liquide de refroidissement du premier échangeur de chaleur (2) et l'entrée du radiateur extérieur (7), ou la première pompe à eau (6) est disposée sur un trajet d'écoulement entre la sortie du radiateur extérieur (7) et l'entrée de liquide de refroidissement du premier échangeur de chaleur (2) ;
dans lequel le système de gestion thermique pour véhicule comprend en outre un premier trajet d'écoulement (8) qui est sélectivement en circuit ou coupé et un deuxième trajet d'écoulement (9) qui est sélectivement en circuit ou coupé, et la sortie de réfrigérant du premier échangeur de chaleur (2) est reliée à l'entrée de l'échangeur de chaleur extérieur (3) via le premier trajet d'écoulement (8) et reliée à l'entrée du premier détendeur (4) via le deuxième trajet d'écoulement (9) ;
dans lequel le système de gestion thermique pour véhicule comprend en outre un réchauffeur d'air intérieur (10), un premier trajet d'écoulement d'étranglement (11), un premier trajet d'écoulement traversant (12), un troisième trajet d'écoulement (13) qui est sélectivement en circuit ou coupé, un quatrième trajet d'écoulement (14) qui est sélectivement en circuit ou coupé, et une première vanne unidirectionnelle (15) ;
la sortie de liquide de refroidissement du premier échangeur de chaleur (2) est reliée à l'entrée du radiateur extérieur (7) et à une entrée du réchauffeur d'air intérieur (10) par l'intermédiaire de la première pompe à eau (6), la sortie de liquide de refroidissement du premier échangeur de chaleur (2) est reliée sélectivement à l'entrée du radiateur extérieur (7) et à l'entrée du réchauffeur d'air intérieur (10), et une sortie du réchauffeur d'air intérieur (10) est reliée à l'entrée de liquide de refroidissement du premier échangeur de chaleur (2) ;
la sortie de l'échangeur de chaleur intérieur (5) est reliée à une entrée de la première vanne unidirectionnelle (15) et reliée à l'entrée du compresseur (1) via le troisième trajet d'écoulement (13), une sortie du premier trajet d'écoulement (8) et une sortie de la première vanne unidirectionnelle (15) sont toutes deux reliées sélectivement à l'entrée de l'échangeur de chaleur extérieur (3) via le premier trajet d'écoulement d'étranglement (11) ou le premier trajet d'écoulement traversant (12), et la sortie de l'échangeur de chaleur extérieur (3) est également reliée à l'entrée du compresseur (1) via le quatrième trajet d'écoulement (14) ;
**caractérisé en ce que**,
le système de gestion thermique pour véhicule comprend en outre un deuxième échangeur de chaleur (16), un deuxième détendeur (17), un bloc-batterie (18) et une deuxième pompe à eau (19), la sortie de l'échangeur de chaleur extérieur (3) et une sortie du deuxième trajet d'écoulement (9) sont toutes deux reliées à une entrée de réfrigérant du deuxième échangeur de chaleur (16) par l'intermédiaire du deuxième détendeur (17), et une sortie de réfrigérant du deuxième échangeur de chaleur (16) est reliée à l'entrée du compresseur (1) ;
une première sortie de liquide de refroidissement du deuxième échangeur de chaleur (16) est reliée à une entrée du bloc-batterie (18), une sortie du bloc-batterie (18) est reliée à une première entrée de liquide de refroidissement du deuxième échangeur de chaleur (16), la deuxième pompe à eau (19) est disposée sur un trajet d'écoulement entre la première sortie de liquide de refroidissement du deuxième échangeur de chaleur (16) et l'entrée du bloc-batterie (18), ou la deuxième pompe à eau (19) est disposée sur un trajet d'écoulement entre la sortie du bloc-batterie (18) et la première entrée de liquide de refroidissement du deuxième échangeur de chaleur (16).

2. Système de gestion thermique pour véhicule selon la revendication 1, dans lequel le système de gestion thermique pour un véhicle comprend en outre un dispositif électronique (20) et une troisième pompe à eau (21), une seconde sortie de liquide de refroidissement du deuxième échangeur de chaleur (16) est reliée à une entrée du dispositif électronique (20), une sortie du dispositif électronique (20) est reliée à une seconde entrée de liquide de refroidissement du deuxième échangeur de chaleur (16), et la troisième pompe à eau (21) est disposée sur un trajet d'écoulement entre la seconde sortie de liquide de refroidissement du deuxième échangeur de chaleur (16) et l'entrée du dispositif électronique (20), ou la troisième pompe à eau (21) est disposée sur un trajet d'écoulement entre la sortie du dispositif électronique (20) et la seconde entrée de liquide de refroidissement du deuxième échangeur de chaleur (16) ; et
dans lequel le dispositif électronique (20) comprend de préférence au moins un élément parmi un moteur, un chargeur, un dispositif de commande de moteur et un convertisseur CC-CC.

3. Système de gestion thermique pour véhicule selon l'une quelconque des revendications 1-2, dans lequel le système de gestion thermique pour véhicule comprend en outre un premier dispositif de séparation gaz-liquide (22), une sortie du quatrième trajet d'écoulement (14) est reliée à une entrée du premier dispositif de séparation gaz-liquide (22), et l'entrée du compresseur (1) est reliée à une sortie de gaz du premier dispositif de séparation gaz-liquide (22), à une sortie du troisième trajet d'écoulement (13) et à la sortie de réfrigérant du deuxième échangeur de chaleur (16).

4. Système de gestion thermique pour véhicule selon l'une quelconque des revendications 1-2, dans lequel le système de gestion thermique pour véhicule comprend en outre un troisième échangeur de chaleur (23),
la sortie du deuxième trajet d'écoulement (9) et la sortie de l'échangeur de chaleur extérieur (3) sont toutes deux reliées à la première entrée de réfrigérant du troisième échangeur de chaleur (23), la première sortie de réfrigérant du troisième échangeur de chaleur (23) est relié à l'entrée de l'échangeur de chaleur intérieur (5) par l'intermédiaire du premier détendeur (4) et reliée à l'entrée de réfrigérant du deuxième échangeur de chaleur (16) par l'intermédiaire du deuxième détendeur (17), la sortie du troisième trajet d'écoulement (13) et la sortie de réfrigérant du deuxième échangeur de chaleur (16) sont toutes deux reliées à la seconde entrée de réfrigérant du troisième échangeur de chaleur (23), la seconde sortie de réfrigérant du troisième échangeur de chaleur (23) est reliée à l'entrée du compresseur (1) ; ou,
la sortie de l'échangeur de chaleur extérieur (3) est reliée à la première entrée de réfrigérant du troisième échangeur de chaleur (23), l'entrée du premier détendeur (4) et l'entrée du deuxième détendeur (17) sont toutes deux reliées à la première sortie de réfrigérant du troisième échangeur de chaleur (23) et à la sortie du deuxième trajet d'écoulement (9), la sortie du troisième trajet d'écoulement (13) et la sortie de réfrigérant du deuxième échangeur de chaleur (16) sont toutes deux reliées à la seconde entrée de réfrigérant du troisième échangeur de chaleur (23), et la seconde sortie de réfrigérant du troisième échangeur de chaleur (23) est reliée à l'entrée du compresseur (1).

5. Système de gestion thermique pour véhicule selon la revendication 4, dans lequel le système de gestion thermique pour véhicule comprend en outre une seconde vanne unidirectionnelle (24) ;
la sortie de l'échangeur de chaleur extérieur (3) est reliée à la première entrée de réfrigérant du troisième échangeur de chaleur (23) par l'intermédiaire de la seconde vanne unidirectionnelle (24) ; ou,
la seconde vanne unidirectionnelle (24) est disposée à la première sortie de réfrigérant du troisième échangeur de chaleur (23).

6. Système de gestion thermique pour véhicule selon l'une quelconque des revendications 1-3, dans lequel le système de gestion thermique pour véhicule comprend en outre un second dispositif de séparation gaz-liquide (25), la sortie de réfrigérant du premier échangeur de chaleur (2) est reliée à une entrée du second dispositif de séparation gaz-liquide (25), et une sortie de liquide du second dispositif de séparation gaz-liquide (25) est reliée aux entrées du premier trajet d'écoulement (8) et du deuxième trajet d'écoulement (9) ; ou,
dans lequel le premier trajet d'écoulement (8) est doté d'une première vanne d'arrêt (26), et le deuxième trajet d'écoulement (9) est doté d'une deuxième vanne d'arrêt (27) ; ou,
le système de gestion thermique pour véhicule comprend en outre une première vanne tridirectionnelle (28), la première vanne tridirectionnelle (28) est située sur le premier trajet d'écoulement (8) et le deuxième trajet d'écoulement (9) en même temps, un orifice A de la première vanne tridirectionnelle (28) est relié à la sortie de réfrigérant du premier échangeur de chaleur (2), un orifice B de la première vanne tridirectionnelle (28) est relié à l'entrée de l'échangeur de chaleur extérieur (3), et un orifice C de la première vanne tridirectionnelle (28) est relié à l'entrée du premier détendeur (4).

7. Système de gestion thermique pour véhicule selon l'une quelconque des revendications 1-3, dans lequel le troisième trajet d'écoulement (13) est doté d'une troisième vanne d'arrêt (29), et le quatrième trajet d'écoulement (14) est doté d'une quatrième vanne d'arrêt (30).

8. Système de gestion thermique pour véhicule selon l'une quelconque des revendications 1-3, dans lequel le premier trajet d'écoulement d'étranglement (11) est doté d'un troisième détendeur (31), et le premier trajet d'écoulement traversant (12) est doté d'une cinquième vanne d'arrêt (32) ; ou,
le système de gestion thermique pour véhicule comprend en outre un élément détendeur-vanne de commutation (33) en tant que détendeur intégré et vanne de commutation, l'élément détendeur-vanne de commutation (33) présente intérieurement un canal d'écoulement d'étranglement et un canal d'écoulement traversant, la sortie du premier trajet d'écoulement (8) et la sortie de la première vanne unidirectionnelle (15) sont toutes deux reliées à une entrée de l'élément détendeur-vanne de commutation (33), une sortie de l'élément détendeur-vanne de commutation (33) est reliée à l'entrée de l'échangeur de chaleur extérieur (3), le premier trajet d'écoulement d'étranglement (11) est le canal d'écoulement d'étranglement de l'élément détendeur-vanne de commutation (33), et le premier trajet d'écoulement traversant (12) est le canal d'écoulement traversant de l'élément détendeur-vanne de commutation (33).

9. Système de gestion thermique pour véhicule selon l'une quelconque des revendications 1-3, dans lequel le système de gestion thermique pour véhicule comprend en outre une seconde vanne tridirectionnelle (34), un orifice A de la seconde vanne tridirectionnelle (34) est relié à une sortie de la première pompe à eau (6), un orifice B de la seconde vanne tridirectionnelle (34) est relié à l'entrée du radiateur extérieur (7) et un orifice C de la seconde vanne tridirectionnelle (34) est relié à l'entrée du réchauffeur d'air intérieur (10) ; ou
le système de gestion thermique pour véhicule comprend en outre une sixième vanne d'arrêt (35) et une septième vanne d'arrêt (36), et la sortie de la première pompe à eau (6) est reliée à l'entrée du radiateur extérieur (7) via la sixième vanne d'arrêt (35) et reliée à l'entrée du réchauffeur d'air intérieur (10) via la septième vanne d'arrêt (36).

10. Véhicule, comprenant le système de gestion thermique pour véhicule selon l'une quelconque des revendications 1-9.
